# EUROPEAN PATENT APPLICATION

(11) **EP 4 378 639 A1**
(43) Date of publication of application: **05.06.2024**
(21) Application number: 22849254.2
(22) Date of filing: 12.07.2022
(51) Int. Cl.: B25J 13/00, A41D 13/08, A41D 19/00, B25J 19/02, G01L 1/00, G01L 5/00

(54) **ESTIMATION DEVICE, ESTIMATION METHOD, AND ESTIMATION PROGRAM**

(30) Priority: 26.07.2021 JP 2021121941; 26.07.2021 JP 2021121942; 26.07.2021 JP 2021121928; 26.07.2021 JP 2021121943; 14.12.2021 JP 2021202896
(71) Applicant: BRIDGESTONE CORPORATION, Chuo-ku Tokyo 104-8340 (JP)
(72) Inventor: KITANO, Hajime, Tokyo 104-8340 (JP); WAKAO, Yasumichi, Tokyo 104-8340 (JP); YASUI, Hitoshi, Tokyo 104-8340 (JP); YAMAGUCHI, Masahiro, Tokyo 104-8340 (JP); SUGINO, Hirohito, Tokyo 104-8340 (JP); FUJISAWA, Yusuke, Tokyo 104-8340 (JP)
(74) Representative: Marks & Clerk LLP
(86) International application number: PCT/JP2022/027486
(87) International publication number: WO 2023/008190

(57) **Abstract**

An estimating device including, a detecting section detecting electrical characteristics between a plurality of predetermined detection points of a flexible material, the electrical characteristics of the flexible material varying in accordance with changes in applied pressure, and that is disposed can cover a portion of a projecting portion, an estimating section that inputs time-series electrical characteristics to a learning model that is trained by using, as learning data, time-series electrical characteristics at times when pressure is applied to the flexible material, and applied stimulus state information expressing applied stimulus states in which pressure is applied to the flexible material, such that the time-series electrical characteristics are inputs of the learning model and the learning model outputs the applied stimulus state information, and the estimating section estimates applied stimulus state information expressing an applied stimulus state corresponding to the inputted time-series electrical characteristics.

## Description

### Technical Field

The present disclosure relates to an estimating device, an estimating method and an estimating program.

### Background Art

Conventionally, technological developments relating to robots that support the work and operations of users are actively being carried out. Robots have numerous, special touch sensors in order to take shock absorption between the robot and people or objects into consideration, and techniques of detecting contact of people and objects with robots are known (see, for example, Japanese Patent Application Laid-Open (JP-A) No. 2011-056619).

Further, in order to detect contact of a person or an object with a robot, it has been thought to detect changes in shape that arise at the contour of the robot. However, in aspects that detect changes in shape, special detecting devices are needed in order to detect deformation. For example, a technique is known in which displacement and vibrations of an object are measured by a camera, images of the deformation are acquired, and the displacement amount is extracted (see, for example, International Publication No. 2017029905). Further, there is also known a technique relating to a flexible touch sensor that estimates a deformation amount from an amount of transmitted light (see, for example, JP-A No. 2013-101096).

### SUMMARY OF INVENTION

An estimating device, incliding:
a detecting section detecting electrical characteristics between a plurality of predetermined detection points of a flexible material that is electrically conductive, the electrical characteristics of the flexible material varying in accordance with changes in applied pressure, and the flexible material being disposed at a robot or a grasping member that has the flexible material at at least a portion of a contour portion thereof, or at a projecting portion that is bendable from a base body of a movable body at which the flexible material is disposed so as to cover, or is disposed so as to be able to cover, at least a portion thereof; and
an estimating section that inputs time-series electrical characteristics detected by the detecting section to a learning model that is trained by using, as learning data, time-series electrical characteristics at times at which pressure is applied to the flexible material, and robot state information expressing robot states in which pressure is applied to the flexible material, or contacting object information expressing objects that apply pressure to the flexible material, or slippage state information expressing slippage states at times at which a grasping target was grasped by a grasping member that applies a stimulus to the flexible material, or applied stimulus state information expressing applied stimulus states in which pressure is applied to the flexible material, such that the time-series electrical characteristics are inputs of the learning model and the learning model outputs the robot state information or the contacting object information or the slippage state information or the applied stimulus state information, and the estimating section estimates robot state information expressing a robot state corresponding to input time-series electrical characteristics, or contacting object information expressing an object that has applied pressure to the flexible material, or slippage state information that expresses a slippage state at a time at which the grasping target was grasped by the grasping member and corresponding to the input time-series electrical characteristics, or applied stimulus state information expressing an applied stimulus state corresponding to the input time-series electrical characteristics.

An estimating method, according to which a computer:
acquires electrical characteristics from a detecting section that detects electrical characteristics between a plurality of predetermined detection points of a flexible material that is electrically conductive, the electrical characteristics of the flexible material varying in accordance with changes in applied pressure, and the flexible material being disposed at a robot or a grasping member that has the flexible material at at least a portion of a contour portion thereof, or is at a projecting portion that is bendable from a base body of a movable body at which the flexible material is disposed so as to cover, or is disposed so as to be able to cover, at least a portion thereof; and
inputs time-series electrical characteristics detected by the detecting section to a learning model that is trained by using, as learning data, time-series electrical characteristics at times at which pressure is applied to the flexible material, and robot state information expressing robot states in which pressure is applied to the flexible material, or contacting object information expressing objects that apply pressure to the flexible material, or slippage state information expressing slippage states at times at which a grasping target was grasped by a grasping member that applies a stimulus to the flexible material, or applied stimulus state information expressing applied stimulus states in which pressure is applied to the flexible material, such that the time-series electrical characteristics are inputs of the learning model and the learning model outputs the robot state information or the contacting object information or the slippage state information or the applied stimulus state information, and estimates robot state information expressing a robot state corresponding to input time-series electrical characteristics, or contacting object information expressing an object that has applied pressure to the flexible material, or slippage state information that expresses a slippage state at a time at which the grasping target was grasped by the grasping member and corresponding to the input time-series electrical characteristics, or applied stimulus state information expressing an applied stimulus state corresponding to the input time-series electrical characteristics.

An estimating program for causing a computer to execute processings of:
acquiring electrical characteristics from a detecting section that detects electrical characteristics between a plurality of predetermined detection points of a flexible material that is electrically conductive, the electrical characteristics of the flexible material varying in accordance with changes in applied pressure, and the flexible material being disposed at a robot or a grasping member that has the flexible material at at least a portion of a contour portion thereof, or is at a projecting portion that is bendable from a base body of a movable body at which the flexible material is disposed so as to cover, or is disposed so as to be able to cover, at least a portion thereof; and
inputting time-series electrical characteristics detected by the detecting section to a learning model that is trained by using, as learning data, time-series electrical characteristics at times at which pressure is applied to the flexible material, and robot state information expressing robot states in which pressure is applied to the flexible material, or contacting object information expressing objects that apply pressure to the flexible material, or slippage state information expressing slippage states at times at which a grasping target was grasped by a grasping member that applies a stimulus to the flexible material, or applied stimulus state information expressing applied stimulus states in which pressure is applied to the flexible material, such that the time-series electrical characteristics are inputs of the learning model and the learning model outputs the robot state information or the contacting object information or the slippage state information or the applied stimulus state information, and the computer estimates robot state information expressing a robot state corresponding to input time-series electrical characteristics, or contacting object information expressing an object that has applied pressure to the flexible material, or slippage state information that expresses a slippage state at a time at which the grasping target was grasped by the grasping member and corresponding to the input time-series electrical characteristics, or applied stimulus state information expressing an applied stimulus state corresponding to the input time-series electrical characteristics.

### BRIEF DESCRIPTION OF DRAWINGS

Fig. 1 is a drawing illustrating an example of the structure of a robot state estimating device relating to an embodiment.
Fig. 2 is a drawing that relates to a robot relating to the embodiment.
Fig. 3 is a drawing that relates to an arm of the robot relating to the embodiment.
Fig. 4 is a drawing that relates to a contour portion of the robot relating to the embodiment.
Fig. 5 is a drawing that relates to hardness of the contour portion of the robot relating to the embodiment.
Fig. 6 is a drawing that relates to the robot relating to the embodiment.
Fig. 7 is a drawing that relates to the robot relating to the embodiment.
Fig. 8 is a drawing that relates to detection points of an electrically-conductive member relating to the embodiment.
Fig. 9 is a drawing that relates to the electrically-conductive member relating to the embodiment.
Fig. 10 is a drawing that relates to the electrically-conductive member relating to the embodiment.
Fig. 11 is a drawing that relates to the electrically-conductive member relating to the embodiment.
Fig. 12 is a drawing that relates to learning processing relating to the embodiment.
Fig. 13 is a flowchart illustrating an example of learning data collecting processing relating to the embodiment.
Fig. 14 is a drawing that relates to the learning processing at a learning processing section relating to the embodiment.
Fig. 15 is a flowchart illustrating an example of the flow of the learning processing relating to the embodiment.
Fig. 16 is a drawing that relates to the learning processing at the learning processing section relating to the embodiment.
Fig. 17 is a drawing illustrating an example of the structure of the robot state estimating device relating to the embodiment.
Fig. 18 is a flowchart illustrating an example of the flow of estimating processing relating to the embodiment.
Fig. 19 is a drawing illustrating characteristics that relate to the robot relating to the embodiment.
Fig. 20 is a drawing illustrating an example of the structure of a robot state estimating device relating to a second embodiment.
Fig. 21 is a drawing that relates to a robot relating to the second embodiment.
Fig. 22 is a drawing that relates to the robot relating to the second embodiment.
Fig. 23 is a drawing that relates to learning processing at a learning processing section relating to the second embodiment.
Fig. 24 is a drawing illustrating an example of a glove relating to the second embodiment.
Fig. 25 is a drawing that relates to a torso portion of a robot relating to a third embodiment.
Fig. 26 is a drawing that relates to learning processing at a learning processing section relating to the third embodiment.
Fig. 27 is a drawing illustrating the structure of a robot control device relating to a fourth embodiment.
Fig. 28 is a drawing that relates to a robot relating to the fourth embodiment.
Fig. 29A is a drawing that relates to learning processing relating to the fourth embodiment.
Fig. 29B is a drawing that relates to the learning processing relating to the fourth embodiment.
Fig. 30 is a flowchart illustrating the flow of learning data collecting processing relating to the fourth embodiment.
Fig. 31 is a schematic drawing illustrating characteristics relating to the robot of the fourth embodiment.
Fig. 32 is a flowchart illustrating the flow of the learning processing relating to the fourth embodiment.
Fig. 33 is a flowchart illustrating the flow of robot control processing relating to the fourth embodiment.
Fig. 34 is a drawing illustrating a hand that is wearing a glove.
Fig. 35 is a drawing illustrating a state in which an object of grasping is grasped by the hand that is wearing the glove.
Fig. 36 is a drawing illustrating the detailed structure of an estimating device.
Fig. 37 is a drawing illustrating the hand that is wearing the glove.
Fig. 38 is a drawing illustrating the detailed structure of the estimating device.
Fig. 39 is a flowchart illustrating the flow of estimating processing relating to the embodiment.
Fig. 40 is a flowchart illustrating the flow of estimating processing relating to the embodiment.

### DESCRIPTION OF EMBODIMENTS

Embodiments that realize the technique of the present disclosure are described in detail hereinafter with reference to the drawings.

Note that structural elements and processings whose operations and functions have the same workings are denoted by the same reference numerals throughout all of the drawings, and repeat description may be omitted as appropriate. Further, the present disclosure is not limited in any way to the following embodiments, and can be implemented by appropriate changes being made thereto within the scope of the object of the present disclosure. Moreover, the present disclosure mainly describes the estimating of a physical amount with respect to a member that deforms nonlinearly, but it goes without saying that the present disclosure can be applied to the estimating of a physical amount with respect to a member that deforms linearly.

### [First Embodiment]

By the way, in an aspect in which numerous, special touch sensors are provided and contact is detected, the touch sensors must be provided at respective regions for detecting contact, and the number of sensors becomes very large which leads to an increase in the size of the robot, and is therefore not preferable. Further, there is also the concern that the numerous, special touch sensors themselves will obstruct the contact state of the robot.

Further, in an aspect in which changes in shape are detected, a system that includes a camera or sensors that detect the light transmission amount in order to detect the deformation amount, and an analyzing device that analyzes the sensor outputs, and the like, becomes a large-scale system which leads to an increase in the size of the robot and is therefore not preferable. Further, sensors that detect deformation amounts mut be placed at all regions of the robot in order to detect the deformation amounts, which is not preferable.

The present disclosure provides an estimating device, an estimating method, an estimating program and a learning model generating device that can estimate robot state information that expresses a robot state, by using electrical characteristics of a flexible material that is electrically conductive, and without using a special detecting device.

The "robot" in the present embodiment is structured by plural regions (hereinafter called parts) cooperating with one another, and is a concept that includes structural bodies at which at least some of the parts are movable. A "robot state" is a concept that includes states expressing active forms (hereinafter called active form states) and states expressing passive forms (hereinafter called passive form states). The active form state is a concept that includes states expressing active forms such as the posture, the deportment, the movement or the like of the robot that is exhibited by at least some of the parts that structure the structural body. The passive form state is a concept including states expressing passive forms that are expressed by energy such as pressure or the like being applied to at least some of the parts. Examples of states expressing active forms are posture states which show static postures exhibited by one part or a combination of plural parts, and behavior states showing dynamic movements. Examples of states expressing passive forms are urged states in which energy such as pressure or the like is applied to the robot by a figure such as a human body or an object or the like, and which include contact states in which a figure such as a human body or an object or the like is contacted by the robot.

A figure in the present disclosure is a concept including at least one of an external human body and object that applies pressure to the robot from the exterior. For example, the contact state includes a state in which a human body at the exterior of the robot is contacted by the robot, a state in which an object at the exterior is contacted by the robot, and a state in which a human body and an object at the exterior are contacted by the robot. Note that, in the following explanation, description will be given by collectively calling the concept, which includes humans and things, a figure without differentiating between at least one of a human body and an object. Specifically, respective human bodies and objects themselves, and combinations of human bodies and objects, are called figures.

The "flexible material" in the present disclosure is a concept that includes deformable materials that are such that at least a portion thereof flexes or the like due to the application of an external force thereto. Flexible materials include flexible elastic bodies such as rubber materials or the like, structural bodies that are at least one of fiber-like and mesh-like, and structural bodies in whose interior plural, minute air bubbles are scattered. The structural bodies that are at least one of fiber-like and mesh-like may be structural bodies having at least one of a fiber shape and a mesh shape as the skeleton thereof. Pressure is an example of the external force. Polymer materials such as urethane materials and rubber (foamed bodies) and the like are examples of structural bodies that are at least one of fiber-like and mesh-like and structural bodies in whose interior plural, minute air bubbles are scattered. A "flexible material to which electrical conductivity is imparted" is a concept including materials that are electrically conductive, and includes materials in which an electrically conductive material has been applied to a flexible material in order to impart electrical conductivity thereto, and materials in which a flexible material is electrically conductive. Polymer materials such as urethane materials and rubber and the like are suitable as flexible materials to which electrical conductivity is imparted. Further, flexible materials to which electrical conductivity is imparted have the feature that the electrical characteristics thereof vary in accordance with deformation. Note that a pressure value, which expresses the stimulus (hereinafter called pressure stimulus) that is due to pressure that is applied to the flexible material, is an example of the physical amount that gives rise to the feature of the electrical characteristics varying in accordance with deformation. Electrical resistance value is an example of a physical amount that expresses an electrical characteristic that varies in accordance with the deformation of the flexible material. Further, a voltage value and a current value are other examples. The electrical resistance value can be understood as being the volume resistance value of the flexible material.

Due to electrical conductivity being imparted to the flexible material, electrical characteristics corresponding to deformation due to pressure are exhibited. Namely, at a flexible material to which electrical resistance has been imparted, the electrical paths cooperate in a complex manner, and extend/contract and expand/contract in accordance with deformation. Further, there are also cases in which the behavior of the electrical paths being temporarily cut-off, and the behavior of connection that is different than that previously arising, are exhibited. Accordingly, the flexible material exhibits the behavior of having electrical characteristics that differ in accordance with the magnitude or the distribution of an applied force (e.g., pressure stimulus) at positions that are a predetermined distance apart from one another (e.g., positions of detection points where electrodes are disposed). Therefore, the electrical characteristics vary in accordance with the magnitude or the distribution of the force (e.g., the pressure stimulus) that is applied to the flexible material.

Note that, because a flexible material to which electrical conductivity has been imparted is used, there is no need to provide detection points such as electrodes or the like at all of the places where pressure is applied to the flexible material by a figure such as a human body or an object or the like. It suffices to provide detection points such as electrodes or the like at at least two arbitrary points that sandwich therebetween a place of the flexible material where pressure is applied.

The estimating device of the present disclosure estimates the robot state from the electrical characteristics at the flexible material that is electrically conductive and is provided at a robot, by using a learning model that has been trained. The learning model uses, as the learning data, time-series electrical characteristics of times when pressure is applied to the electrically-conductive flexible material, and robot state information that express robot states in which pressure is applied to the flexible material. The learning model is trained with time-series electrical characteristics being the inputs thereof, and so as to output robot state information expressing the robot state that corresponds to those time-series electrical characteristics.

In the following explanation, description is given by calling a member, which is formed by compounding or infiltrating (also called impregnating) or the like an electrically-conductive material into all of or some of a urethane material, an "electrically-conductive urethane" as an example of the flexible material to which electrical conductivity has been imparted. The electrically-conductive urethane can be formed by any method among compounding and infiltrating (impregnating) an electrically-conductive material, and can be formed by compounding or infiltrating (impregnating) an electrically-conductive material, or can be formed by combining the compounding and the infiltrating (impregnating) of an electrically-conductive material. For example, in a case in which the electrical conductivity of an electrically-conductive urethane formed by infiltration (impregnation) is higher than that of an electrically-conductive urethane formed by compounding, it is preferable to form the electrically-conductive urethane by infiltration (impregnation).

Further, in the present embodiment, description is given of a case in which the electrically-conductive urethane is placed at the contour portion of at least a portion of the robot. Further, a value (pressure value) expressing the pressure stimulus that is applied to the robot, i.e., the flexible material, is used as the physical amount that deforms the electrically-conductive urethane. Note that a case is described in which the electrical resistance value of the electrically-conductive urethane is used as the physical amount that varies in accordance with the pressure stimulus.

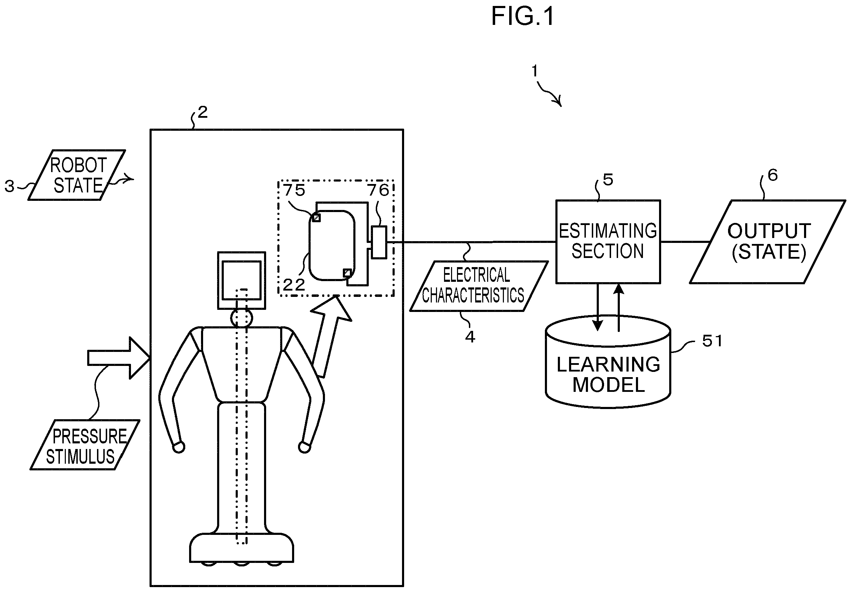

An example of the structure of a robot state estimating device 1, which serves as the estimating device of the present disclosure, is illustrated in Fig. 1.

In the estimating processing at the robot state estimating device 1, by using a learning model 51 that has been trained, an active form state or a passive form state at a robot 2 is estimated and outputted as an unknown robot state, from the electrical characteristics at an electrically-conductive urethane 22 that is disposed at the robot 2. Due thereto, robot state information that expresses the robot state can be estimated without using a special device or a large device and without directly measuring the deformation of the contour of the robot 2. The learning model 51 is trained by using robot states (e.g., state values expressing active form states or passive form states) as labels, and electrical characteristics of the electrically-conductive urethane in those robot states (e.g., electrical resistance values of the electrically-conductive urethane disposed at the robot 2) as the inputs. The training of the learning model 51 is described later.

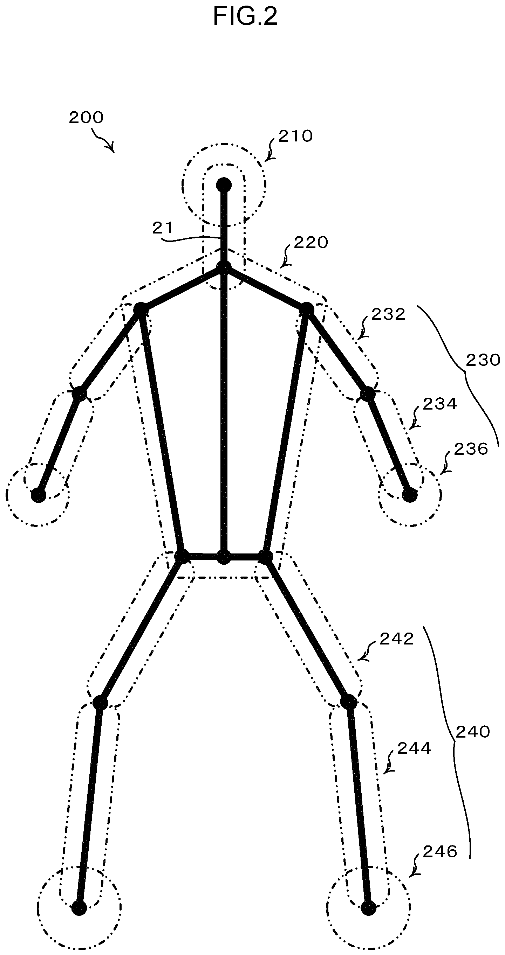

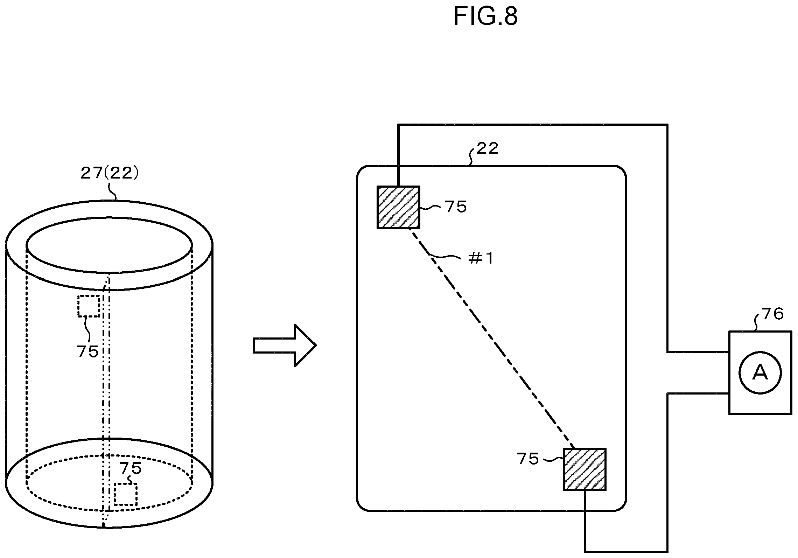

The structure of the robot 2 is described here. An example of the robot structure of a human-form robot 200, which models the form of a human, is illustrated in Fig. 2. At the human-form robot 200 illustrated in Fig. 2, respective parts that are a head portion 210, a torso portion 220, arm portions 230 (upper arms 232, forearms 234, hands 236), leg portions 240 (thighs 242, lower legs 244, feet 246) are connected by a skeleton 21. At the human-form robot 200, due to the electrically-conductive urethane 22 being placed on the periphery of the skeleton 21, the electrically-conductive urethane 22 is disposed at the contour that is the outer side of the human-form robot 200. The electrically-conductive urethane 22 that is disposed at the human-form robot 200 is connected to an electrical characteristic detecting section 76 (Fig. 8) via detection points 75 that are electrodes or the like.

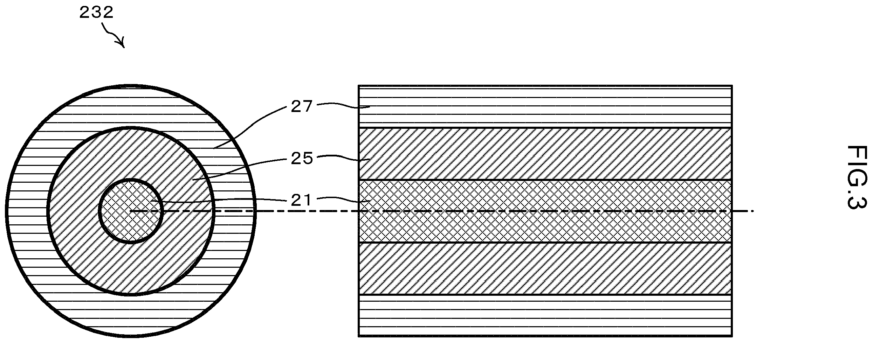

For example, as per the example of the schematic structure of the upper arm 232 that is illustrated in Fig. 3 in a cross-sectional view, an inner layer 25, which includes structures such as artificial muscles and the like, is disposed at the periphery of the skeleton 21 of the upper arm 232, and a contour portion 27 that functions as the skin as well is disposed at the periphery of the inner layer 25. Note that the contour portion 27 that functions as the skin may be disposed at the periphery of the skeleton 21.

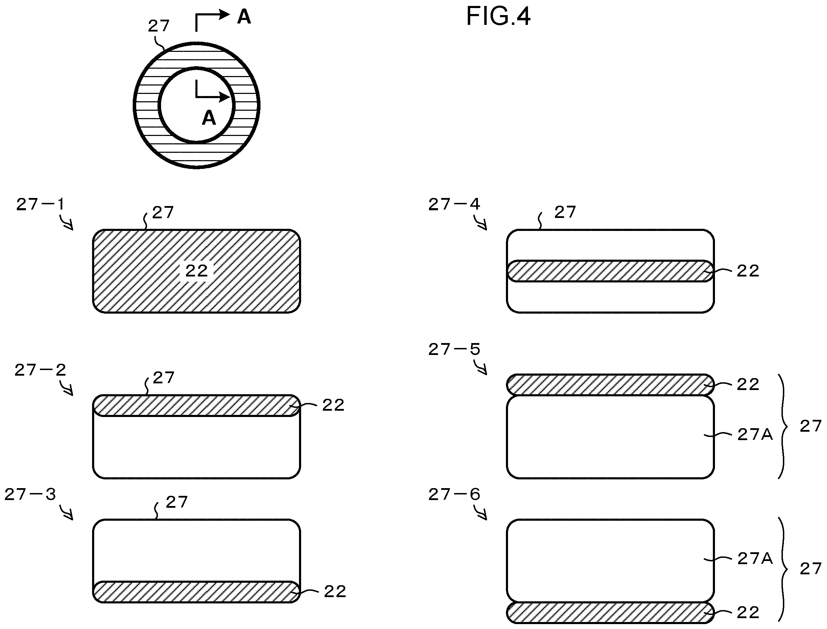

It suffices to dispose the electrically-conductive urethane 22 at at least a portion of the material that is disposed at the periphery of the skeleton 21, i.e., the contour portion 27, and the electrically-conductive urethane 22 may be disposed at the interior or may be disposed at the exterior (Fig. 4). As a concrete example, as illustrated by contour cross-section 27-1 as the A-A cross-section of the contour portion 27, the interior of the contour portion 27 may entirely be structured by the electrically-conductive urethane 22. Further, as illustrated by contour cross-section 27-2, the electrically-conductive urethane 22 may be formed on a portion of the outer side (the surface side) of the contour portion 27. As illustrated by contour cross-section 27-3, the electrically-conductive urethane 22 may be formed at the inner side (the skeleton side) of the contour portion 27. Moreover, as illustrated by contour cross-section 27-4, the electrically-conductive urethane 22 may be formed at a portion of the interior of the contour portion 27. Further, as illustrated by contour cross-section 27-5, the electrically-conductive urethane 22 may be disposed at the outer side of a material 27A that is flexible and structures the contour portion 27. As illustrated by contour cross-section 27-6, the electrically-conductive urethane 22 may be disposed at the exterior of the inner side (the skeleton side) of the contour portion 27. In a case in which the electrically-conductive urethane 22 is disposed at the exterior of the material 27A that structures the contour portion 27, the electrically-conductive urethane 22 and the material that structures the contour portion 27 may be merely layered, or the electrically-conductive urethane 22 and the material that structures the contour portion 27 may be made integral by adhesion or the like. Note that, even in a case in which the electrically-conductive urethane 22 is disposed at the exterior of a material that structures the contour portion 27, the flexibility of the material that structures the contour portion 27 is not impeded because the electrically-conductive urethane 22 is a urethane member that is electrically conductive.

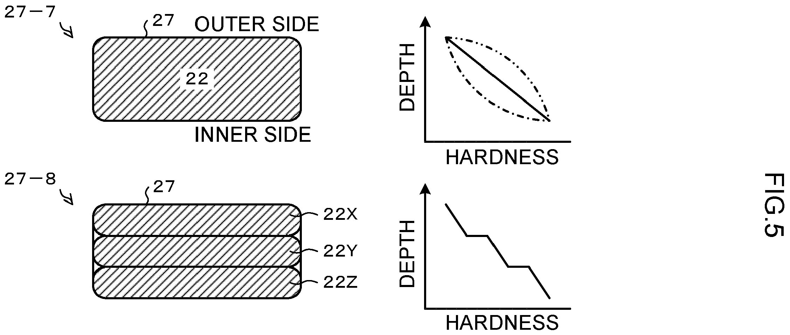

Further, the electrically-conductive urethane 22 may be formed so as to have flexibility of a predetermined hardness. For example, as illustrated in Fig. 5, the electrically-conductive urethane 22 may be formed so as to have a flexibility in which the hardness varies in accordance with the depth. Fig. 5 is schematic drawings relating to the hardness of the contour portion of the robot. Schematic drawings relating to the structure of the electrically-conductive urethane 22 are illustrated at the left side of the figure, and schematic drawings of the relationship between the depth and the hardness of the electrically-conductive urethane 22 are illustrated at the right side of the figure. In the example illustrated in Fig. 5, in a case in which the contour portion 27 is structured by the electrically-conductive urethane 22 as contour cross-section 27-7, the electrically-conductive urethane 22 can be formed such that the hardness gradually becomes harder from the outer side (the surface side) toward the inner side (the skeleton side) of the contour portion 27, i.e., as the depth becomes deeper. Further as shown by contour cross-section 27-8, plural electrically-conductive urethanes 22 of differing hardnesses (hardnesses: 22X < 22Y < 22Z) may be disposed. By forming a structure that is such that the hardness (flexibility) of the contour portion 27 including the electrically-conductive urethane 22 varies in accordance with the depth, a tactile sensation that is close to that of the skin of a human body can be provided.

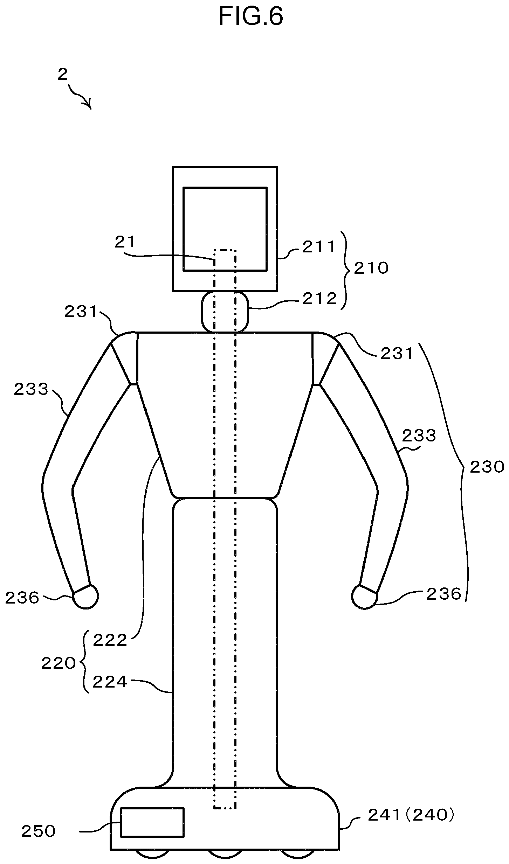

Hereinafter, in order to simplify explanation, description is given of a case in which, as an example of the robot of the present disclosure, a stand-alone robot system that includes the simple robot illustrated in Fig. 6 is used as the robot 2. At the robot 2, the contour portion is formed by placing the electrically-conductive urethane 22 on the periphery of the skeleton 21 as the contour that is the outer side of the robot 2.

As illustrated in Fig. 6, the robot 2 structures the head portion 210 that includes a display portion 211 and a neck portion 212, and the torso portion 220 that includes an upper torso 222 and a lower torso 224. Further, the robot 2 structures the arm portions 230 that include shoulder portions 231, arms 233 and the hands 236, and structures the leg portion 240 including a base portion 241 having an unillustrated moving mechanism. The head portion 210, the torso portion 220, the arm portions 230 and the leg portions 240 are connected by the skeleton 21.

At the robot 2 illustrated in Fig. 6, the contour portion 27 that includes the electrically-conductive urethane 22 is disposed at the outer sides of the torso portion 220 (the upper torso 222 and the lower torso 224), the arm portions 230 (the shoulder portions 231, the arms 233 and the hands 236), and the leg portion 240 (the base portion 241), respectively. Note that the contour portion 27 may be structured by a single sheet and placed, or the contour portions 27 may be placed part-by-part. In a case in which the contour portions 27 including the electrically-conductive urethane 22 are placed part-by-part, portions of the contour portions 27 may be placed so as to overlap one another. The electrically-conductive urethane 22 that is disposed on the robot 2 is connected to the electrical characteristic detecting section 76 (Fig. 8) via the detection points 75 such as electrodes or the like.

At the arm portions 230, the arms 233 are formed so as to be able to bend with the shoulder portions 231 being the fulcra. At the arm portions 230, members, which include elastic bodies that deform linearly or nonlinearly, can be used as structures at which the arms 233 are formed so as to be able to bend. Elastic contracting bodies, at which contraction force in a predetermined direction arises due to an applied physical amount (e.g., the supply of pressure or a fluid), are examples thereof. Airbag-type members that are known techniques can be used as examples of the elastic contracting bodies (see, for example, Japanese Patent Application Publication (JP-B) No. S52-40378). An airbag-type elastic contracting body (e.g., a rubber actuator) has a main body at which the outer periphery of a tubular body, which is structured by a flexible elastic body that is a rubber member or the like, is covered by organic or inorganic high-tensile fibers, e.g., a braided reinforcing structure of aromatic polyamide fibers, and the openings at the both ends are sealed by sealing members. The rubber actuator deforms such that the diameter thereof increases due to a pressurized fluid being supplied into the internal cavity via connection ports provided at the sealing members, and contraction force is generated along the axial direction. At this rubber actuator, the length thereof varies in accordance with the diameter-increasing deformation. However, use of the rubber actuator as an object of application is merely an example, and the estimating device of the present disclosure can be applied to members other than a rubber actuator.

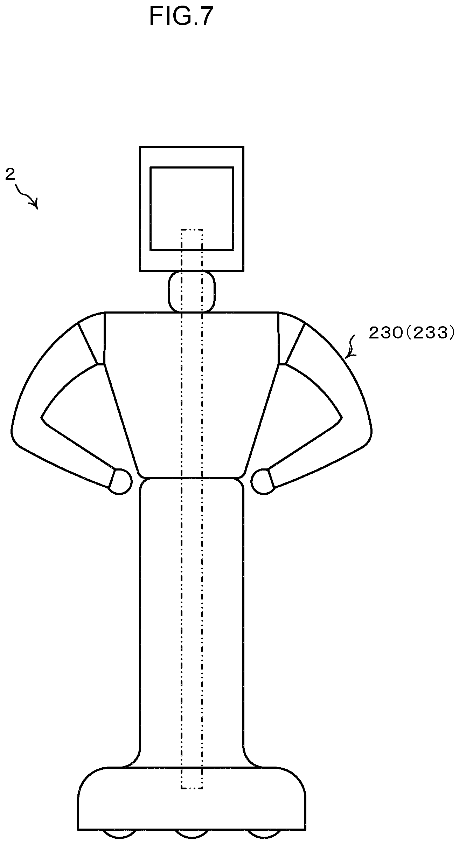

As illustrated in Fig. 7, at the robot 2, the arm 233 bends due to the driving of the unillustrated elastic contracting body. An arm of a human body can be modeled by the operation of the arm 233.

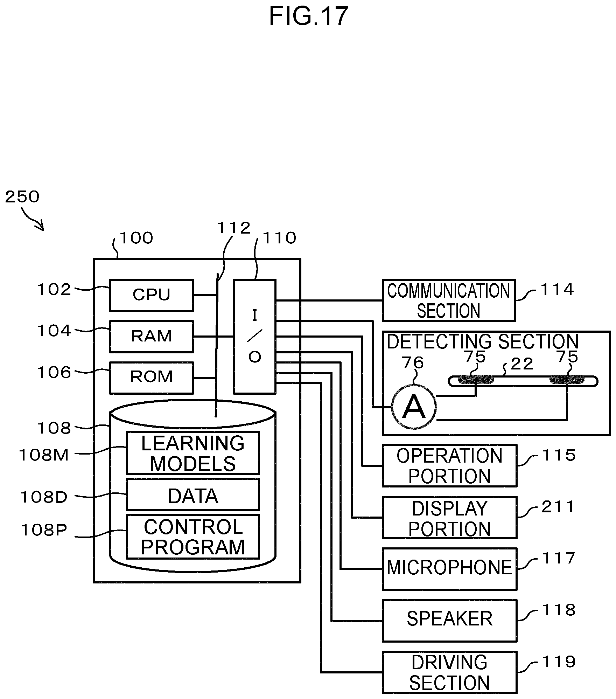

Further, the robot 2 is made movable by having an unillustrated moving mechanism at the base portion 241. A control device 250 that carries out control of the robot 2 is provided at the base portion 241 (Fig. 17). The control device 250 has a functional section that operates as the robot state estimating device 1.

Further, due to the robot 2 being provided with an operation portion 115, the display portion 211, a microphone 117 and a speaker 118 (Fig. 17), information such as instructions from a user, the state of the user, responses to the user, and the like can be acquired and presented.

Note that the robot 2 has a driving section 119 (Fig. 17), which is for moving the respective parts in cooperation with the skeleton 21, at a region that is other than the leg portion 240 that includes the base portion 241. Due to the driving of the driving section 119 (Fig. 17), the robot 2 can maintain various types of postures and execute various behaviors, by movements per part or movements in which plural parts cooperate with one another. Accordingly, the robot 2 operates as a stand-alone robot system.

By the way, in order to estimate the robot state, the robot state estimating device 1 detects electrical characteristics at the electrically-conductive urethane 22 that is disposed at the robot 2.

As illustrated in Fig. 8, electrical characteristics of the electrically-conductive urethane 22 (i.e., volume resistance values that are electrical resistance values) can be detected by signals from the plural (two in Fig. 8) detection points 75 that are disposed so as to be separated by a distance. Fig. 8 exemplifies a case in which the electrically-conductive urethane 22, which is disposed as a portion of the contour portion 27, is unfolded planarly. Further, Fig. 8 illustrates detection set #1 in which the detection points 75 are offset toward side portions on the electrically-conductive urethane 22, and that detects electrical resistance values by signals from the plural detection points 75 that are disposed at diagonal positions separated by a distance on the electrically-conductive urethane 22. Note that the arrangement of the plural detection points 75 is not limited to the positions illustrated in Fig. 8, and may be any positions provided that they are positions at which electrical characteristics of the electrically-conductive urethane 22 can be detected. For example, it suffices for the plural detection points 75 to be disposed so as to be apart from one another, and the positions are not limited to placement toward the side portions, and may be at the central portion, or may be a combination of side portions and the central portion. Further, with regard to the electrical characteristics of the electrically-conductive urethane 22, it suffices to connect the electrical characteristic detecting section 76, which detects electrical characteristics (i.e., volume resistance values that are electrical resistance values), to the detection points 75, and to use the output thereof.

The electrical resistance value, which is detected at the robot 2 that is structured to have the electrically-conductive urethane 22 at the contour portion 27, varies in accordance with deformation of the electrically-conductive urethane 22, such as pressure stimulus being applied to the contour portion 27 of the robot 2 or the like, and varies before and after this deformation. Accordingly, by detecting time-series electrical resistance values, i.e., detecting changes in the electrical resistance values from a state in which pressure stimulus is not applied to the robot 2 (e.g., detecting an electrical resistance value that exceeds a predetermined threshold value), urging of the robot 2 by a figure can be detected. Specifically, the urged state, which expresses the urging of the robot 2 by a figure, includes a contact state because a pressure stimulus accompanies the contacting of the robot 2 by a figure. Accordingly, by placing the electrically-conductive urethane 22 at the robot 2, urging, which includes contact of the robot 2 by a figure, can be detected. Further, even if any one of the position, the distribution, and the magnitude of the pressure stimulus that is applied to the robot 2 varies, the electrical resistance values vary. Accordingly, it is possible to detect an urged state, which includes a contact position of a figure with respect to the robot 2, from the electrical resistance values that vary in time series.

As the contour portion 27 that includes the electrically-conductive urethane 22 formed at the robot 2, the contour portion 27 that includes the electrically-conductive urethane 22 may be formed as an integral structure at the outer side of the robot, or the contour portions 27 that include independent electrically-conductive urethanes 22 may be formed part-by-part.

Note that a number of detection points that is larger than the number (two) of detection points illustrated in Fig. 8 may be used in order to improve the accuracy of detecting the electrical characteristics of the one electrically-conductive urethane 22.

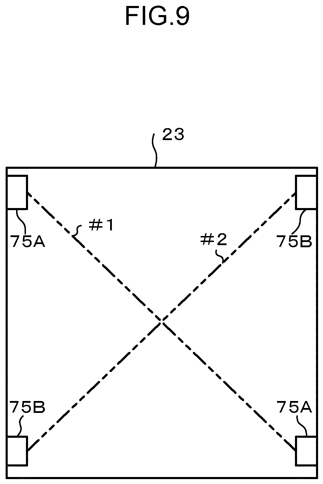

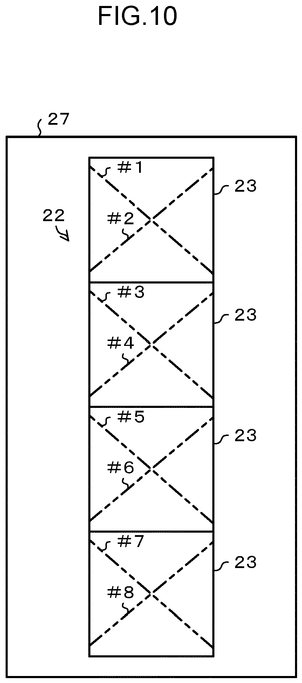

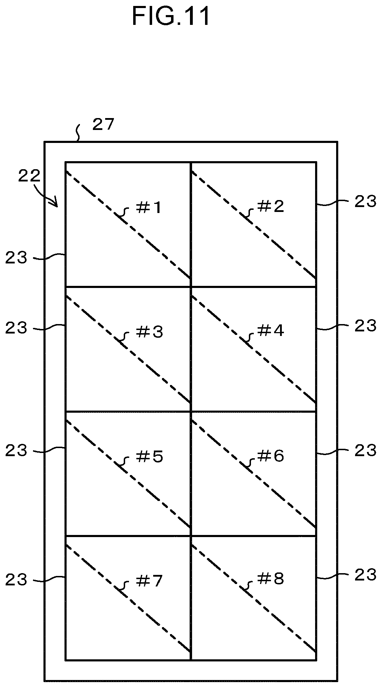

As an example, the electrically-conductive urethane 22 may be formed by one row of, or by lining-up plural rows of, a row that is formed from plural electrically-conductive urethane pieces at each of which a detection point is disposed, and the electrical characteristics may be detected per each of the plural electrically-conductive urethane pieces. For example, the electrically-conductive urethane 22 may be structured (Fig. 10, Fig. 11) by arraying electrically-conductive urethane pieces 23 (Fig. 9). The example illustrated in Fig. 9 shows the first detection set #1 that detects the electrical resistance values from signals from detection points 75A that are disposed at diagonal positions so as to be separated by a distance, and a second detection set #2 that detects the electrical resistance values from signals from detection points 75B that are arrayed at the other diagonal positions. Further, in the example illustrated in Fig. 10, the electrically-conductive urethane 22 is structured by the electrically-conductive urethane pieces 23 (Fig. 9) being arrayed (4x1) in the length direction of the contour portion 27, and the first detection set #1 through eighth detection set #8 are structured in that order. Moreover, in the example illustrated in Fig. 11, the electrically-conductive urethane 22 is structured by employing the first detection set #1 at each of the electrically-conductive urethane pieces 23 (Fig. 9) and arraying (4x2) the electrically-conductive urethane pieces 23 in the length direction and the width direction of the contour portion 27, and the first detection set #1 through the eighth detection set #8 are structured.

Further, as another example, the detection range on the electrically-conductive urethane 22 may be divided, and a detection point may be provided in each of the divisional detection ranges, and the electrical characteristics may be detected per detection range. For example, regions, which correspond to the size of the electrically-conductive urethane piece 23 illustrated in Fig. 10 and Fig. 11, may be set at the electrically-conductive urethane 22 as the detection ranges, and a detection point may be placed in each of the set detection ranges, and the electrical characteristics may be detected per detection range.

As illustrated in Fig. 1, the robot state estimating device 1 has an estimating section 5. Input data 4, which is the time-series electrical characteristics expressing the magnitudes of the electrical resistances (the electrical resistance values) at the electrically-conductive urethane 22, is inputted to the estimating section 5. Specifically, the electrical characteristics, which are outputted from the electrical characteristic detecting section 76 that is connected to the detection points 75 of the electrically-conductive urethane 22 (i.e., the volume resistance values that are electrical resistance values), are inputted. The input data 4 corresponds to a robot state 3 of the robot 2. Further, the estimating section 5 outputs, as the results of estimation, output data 6 that expresses the output that is a physical amount (a robot state value) expressing the robot state 3. Note that the estimating section 5 includes the learning model 51 that has been trained.

The learning model 51 is a model that has been trained and that derives the robot state, i.e., an active form state or a passive form state (the output data 6) at the robot 2, from the electrical resistances (the input data 4) of the electrically-conductive urethane 22 that vary due to the pressure stimulus that corresponds to the robot state 3. The learning model 51 is, for example, a model that prescribes a trained neural network, and is expressed as a collection of information of the weights (strengths) of the connections between the nodes (neurons) that structure the neural network.

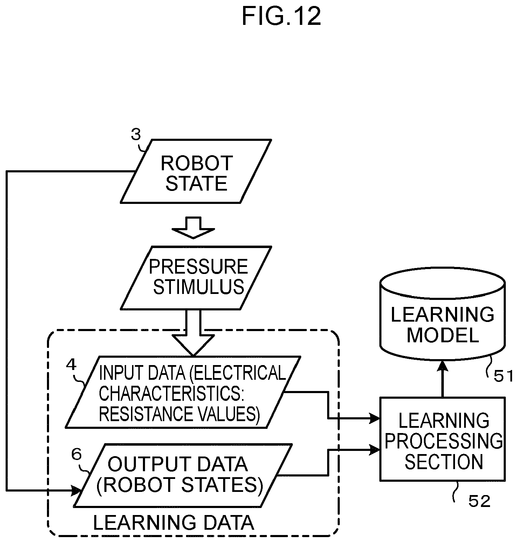

The learning model 51 is generated by learning processing of a learning processing section 52 (Fig. 12). The learning processing section 52 carries out learning processing by using electrical characteristics (the input data 4) at the electrically-conductive urethane 22 that vary due to the pressure stimuli generated by the robot states 3. Namely, a large amount of data, which is obtained by measuring in time series the electrical resistances at the electrically-conductive urethane 22 and whose labels are the robot states 3, is used as the learning data. Specifically, the learning data includes a large amount of sets of input data, which include electrical resistance values (the input data 4), and information (the output data 6) expressing the robot states 3 that correspond to these input data. Here, the time-series information are set in correspondence by applying information that expresses the time of measurement to each of the electrical resistance values (the input data 4) of the electrically-conductive urethane 22. In this case, the time-series information may be set in correspondence by applying information expressing the times of measurement to the sets of time-series electrical resistance values at the electrically-conductive urethane 22, in a time period that is set as the robot state 3.

The learning processing section 52 is described next.
In the learning processing that is carried out at the learning processing section 52, the contour portion 27 of the robot 2, at which the above-described electrically-conductive urethane 22 is disposed, is used as the detecting section, and the robot states 3 and the electrical resistance values from the electrically-conductive urethane 22 (the input data 4) are used as the learning data.

For example, data with respect to robot states expressing active form states are used as the learning data. Specifically, driving control of the driving section 119 is carried out such that there are behaviors such as predetermined postures or movements or the like by at least some of the parts of the robot 2, and the electrical resistance values at this time are detected, and are set in correspondence with the robot states (robot state values), and this data is used as the learning data. At the robot 2, the contour portion 27 deforms due the posture, deportment, movement or the like or the robot 2 itself, and the electrical resistance values of the electrically-conductive urethane 22 change. Therefore, the time-series electrical resistance values are detected and are set in correspondence with the robot states (robot state values), and this data can be used as the learning data. A posture state which shows the static posture exhibited by one part or a combination of plural parts, and a behavior state showing a dynamic movement, are used as active form states.

Further, data with respect to robot states that express passive form states are used as the learning data. Specifically, the user OP is instructed to contact the robot 2 in a predetermined posture, or to contact the robot together with a motion, or the like, such that there becomes a predetermined robot state in which energy such as pressure or the like is applied to at least some of the parts, and the electrical resistance values at this time are detected, and are set in correspondence with the robot state, and this data is used as the learning data. At the robot 2, the contour portion 27 deforms due to the application of energy such as pressure or the like from a figure to at least some of the parts, and the electrical resistance values of the electrically-conductive urethane 22 change. Therefore, the time-series electrical resistance values are detected and are set in correspondence with the robot states (robot state values), and this data can be used as the learning data. Urged states, in which energy such as pressure or the like is applied to the robot by a figure and which include contact states in which a figure is contacted by the robot, are used as passive form states.

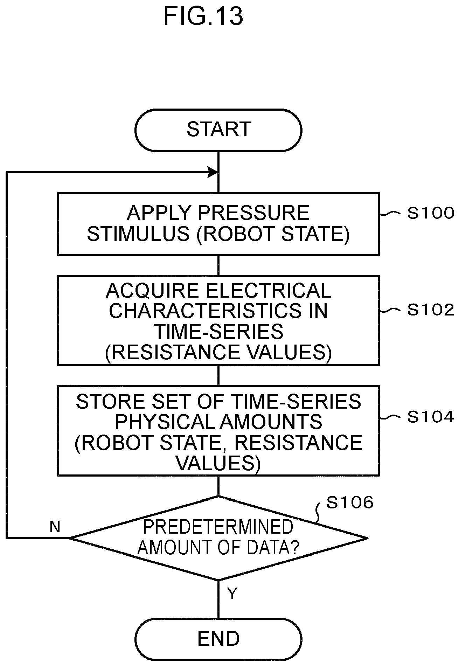

The learning processing section 52 can be structured to include a computer that includes an unillustrated CPU, and executes learning data collecting processing and learning processing. Fig. 13 illustrates an example of the learning data collecting processing executed by the unillustrated CPU. In step S 100, the learning processing section 52 carries out a processing relating to the application of a pressure stimulus in order to obtain the above-described robot state. In step S102, the learning processing section 52 acquires, in time-series, the electrical resistance values of the electrically-conductive urethane 22 that vary due to the pressure stimulus that corresponds to the robot state. In next step S104, the learning processing section 52 applies a robot state value, which expresses the robot state 3, as a label to the time-series electrical resistance values that have been acquired, and stores these data. The learning processing section 52 repeats the above-described processings until these sets of robot state values and electrical resistance values of the electrically-conductive urethane 22 reach a predetermined number that has been set in advance or a predetermined time that has been set in advance (in step S 106, the judgment is negative until the judgment becomes affirmative). Due thereto, the learning processing section 52 can acquire, in time series, and can store the electrical resistance values at the electrically-conductive urethane 22 for each of the robot states 3, and these stored sets of time-series electrical resistance values of the electrically-conductive urethane 22 per robot state become the learning data.

By the way, in a case in which, among the robot states, a figure urges the robot 2 together with a pressure stimulus such as contact or the like, as the urging force (pressing force) becomes larger from the urged state in which the figure contacts the contour portion 27, the electrical characteristics (electrical resistance values) change so as to become larger. Accordingly, by detecting that a time-series electrical characteristic has exceeded a threshold value that is set in advance for contact detection, at least an urged state in which a figure contacts the contour portion 27 can be detected. Accordingly, provided that at least an urged state in which a figure contacts the contour portion 27 is detected, it suffices to use, as the learning data, time-series electrical characteristics that correspond to urging forces (pressing forces) that specify the urged states of contact.

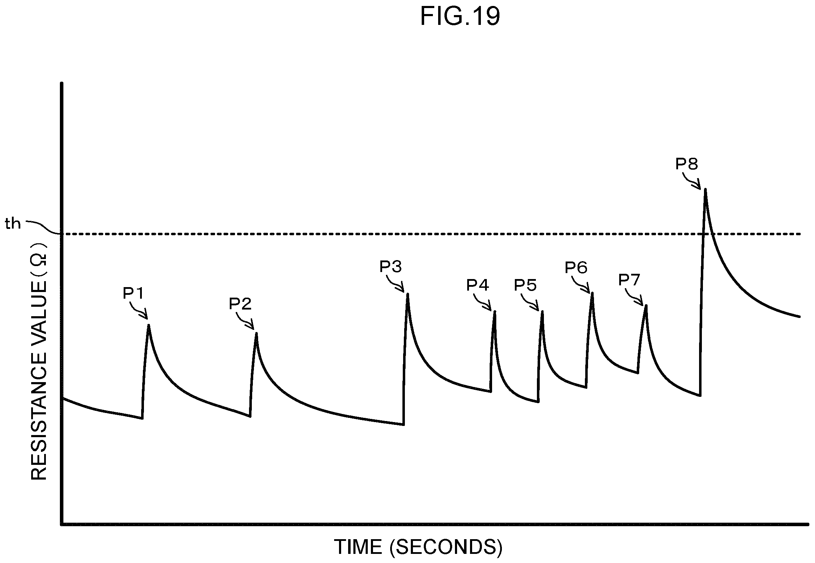

Fig. 19 illustrates an example of the electrical characteristics at the arm 233 of the robot 2. Fig. 19 shows the electrical characteristics of the electrically-conductive urethane 22 at the time when the arm 233 of the robot 2 is pressed by the hand of the user at different urging forces (pressing forces of peak values P1 ~ P8). Further, the peak values P1 ~ P7 are robot states that do not constitute contact by a figure, and the peak value P8 is a robot state at the time of contact by a figure.

As illustrated in Fig. 19, each of the time-series electrical characteristics of the electrically-conductive urethane 22 (the before and after electrical characteristics including the respective peak values P1 ~ P8) is a distinctive pattern in a robot state at the time when the arm 233 is contacted and urged in accordance with the urging force (pressing force) of the user. Namely, a pattern in which, when the arm 233 is pressed by the hand of the user, the electrical resistance value rises suddenly, and when the pressing is released (the hand of the user moves apart), the electrical resistance value gradually decreases, appears as a distinctive pattern. In the example illustrated in Fig. 19, the peak value P8 is a large electrical resistance value, as compared with the peak values P1 ~ P7. Therefore, by setting an electrical resistance value that exceeds the peak values P1 ~ P7 to be threshold value th, it is possible to detect an urged state in which a figure contacts the contour portion 27. Accordingly, the learning processing section 52 learns, as learning data, time-series electrical characteristics that correspond to urging forces (pressing forces) that specify urged states of contact.

On the other hand, a robot state that is not limited to contact detection can be identified from the positions of the respective parts at the robot 2 or the relative positional relationships between plural parts, and respective physical amounts such as the distributions, magnitudes, frequencies and the like of the pressure stimuli at the respective parts. Accordingly, features of time-series physical amounts that express the robot states are included in the time-series electrical characteristics of the electrically-conductive urethane 22. In the present embodiment, electrical characteristics (volume resistances) in which these physical amounts are reflected can be detected in time series by using the electrically-conductive urethane 22.

Accordingly, the pressure stimulus at the robot 2 varies in accordance with the robot state, and, by acquiring in time series the electrical characteristics corresponding to these changes in the pressure stimulus, the time-series electrical characteristics can be set in correspondence with the robot states and stored. Sets of these time-series electrical characteristics and robot state values that express the robot states can be used as the learning data.

Next, examples of the above-described learning data are shown in tables. Table 1 is an example of data in which time-series electrical resistance value data (r) and active form state values are set in correspondence with one another as learning data relating to active form states that include posture states and behavior states. Table 2 is an example of data in which time-series electrical resistance value data (R) and passive form state values are set in correspondence with one another as learning data relating to passive form states that include contact states and urged states. Table 3 is an example of data in which sets of characteristic data (J), which show time-series electrical resistance values detected at the respective parts, and robot state values are set in correspondence with one another, in consideration of the fact that the respective parts at the robot 2 cooperate with one another. A feature of the robot state, i.e., a distinctive pattern, is included in each of the characteristic data (J) included among these sets. The respective characteristic data (J) can all be used as learning data. For example, plural characteristic data (J) detected at the robot 2 and a robot state value (in Table 3, the value expressing the operation of the robot "hugging (or holding) with both arms") are used as learning data.

**[Table 1]**

| time-series electrical resistance value data | active form state |
|---|---|
| r11, r12, r13, ..., r1n | leaning forward (posture) |
| r21, r22, r23, ..., r2n | leaning backward (posture) |
| r31, r32, r33, ..., r3n | raise right arm (behavior) |
| r41, r42, r43, ..., r4n | raise left arm (behavior) |
| ... | ... |

**[Table 2]**

| time-series electrical resistance value data | passive form state |
|---|---|
| R11, R12, R13, ..., R1m | contact (contact) |
| R21, R22, R23, ..., R2m | hugging (urging) |
| R31, R32, R33, ..., R3m | rubbing (urging) |
| R41, R42, R43, ..., R4m | tapping (urging) |
| ... | ... |

**[Table 3]**

| No. | time-series electrical resistance value data | state |
|---|---|---|
| 1 | head portion characteristic data (J1) | hugging with both arms |
| | right arm characteristic data (J2) | |
| | left arm characteristic data (J3) | |
| | torso portion characteristic data (J4) | |
| | leg portion characteristic data (J5) | |
| ... | ... | ... |

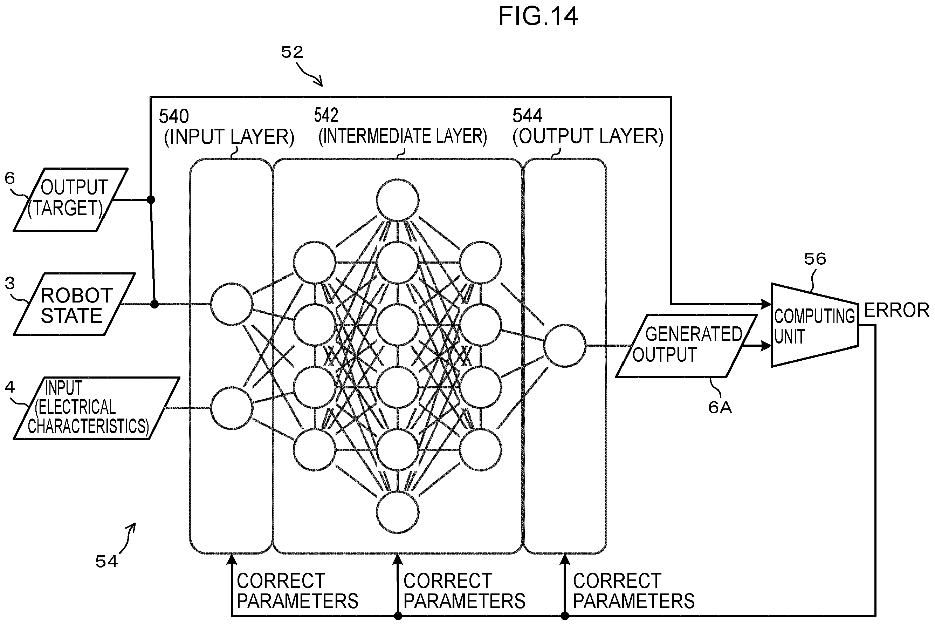

The learning processing at the learning processing section 52 is described next. Fig. 14 is a drawing illustrating the functions at an unillustrated CPU of the learning processing section 52 in the learning processing.
The unillustrated CPU of the learning processing section 52 includes functional sections that are a generating unit 54 and a computing unit 56. The generating unit 54 has the function of generating output while taking into consideration the before-after relationships of the electrical resistance values acquired in time series that are the inputs.

Further, the learning processing section 52 holds, as the learning data, a large number of sets of the input data 4 (electrical resistance values) that are the above-described inputs, and the output data 6 that are outputs expressing the robot states 3 corresponding to the input data 4 (electrical resistance values).

The generating unit 54 includes an input layer 540, an intermediate layer 542 and an output layer 544, and structures a known neural network (NN). Because neural networks themselves are known technology, detailed description thereof is omitted. However, the intermediate layer 542 includes a large number of node groups (neuron groups) having inter-node connections and feedback connections. Data from the input layer 540 is inputted to the intermediate layer 542, and the data that is the results of calculation of the intermediate layer 542 is outputted to the output layer 544.

The generating unit 54 is a neural network that generates generated output data 6A expressing the robot state, from the inputted input data 4 (electrical resistances). The generated output data 6A is data in which the robot state is estimated from the input data 4 (electrical resistances). The generating unit 54 generates the generated output data that expresses a state close to the robot state, from the input data 4 (electrical resistances) that were inputted in time-series. By learning by using a large number of the input data 4 (electrical resistances), the generating unit 54 can generate the generated output data 6A that is close to the robot state in which a pressure stimulus is applied to the robot 2, i.e., the electrically-conductive urethane 22. In another aspect, the electrical characteristics that are the input data 4 inputted in time series can be considered as patterns, and, by learning these patterns, the generating unit 54 can generate the generated output data 6A that is close to the robot state in which a pressure stimulus is applied to the robot 2, i.e., the electrically-conductive urethane 22.

The computing unit 56 is a computing unit that compares the generated output data 6A and the output data 6 of the learning data, and computes the error of these results of comparison. The learning processing section 52 inputs the generated output data 6A and the output data 6 that is the learning data to the computing unit 56. In accordance therewith, the computing unit 56 computes the error between the generated output data 6A and the output data 6 that is the learning data, and outputs a signal expressing these computational results.

On the basis of the error computed at the computing unit 56, the learning processing section 52 carries out training of the generating unit 54, which is the tuning of the weighting parameters of the connections between the nodes. Specifically, the learning processing section 52 feeds-back, to the generating unit 54, the weighting parameters of the connections between the nodes of the input layer 540 and the intermediate layer 542, the weighting parameters of the connections between the nodes within the intermediate layer 542, and the weighting parameters of the connections between the nodes of the intermediate layer 542 and the output layer 544, respectively at the generating unit 54 by using, for example, a method such as the gradient descent method or backpropagation or the like. Namely, the learning processing section 52 optimizes all of the connections between the nodes such that the errors between the generated output data 6A and the output data 6 that is the learning data are minimized, with the target thereof being the output data 6 that is the learning data.

The learning model 51 is generated by learning processing of the learning processing section 52. The learning model 51 is expressed as a collection of information of weighting parameters (weights or strengths) of the connections between the nodes, which are the results of learning by the learning processing section 52.

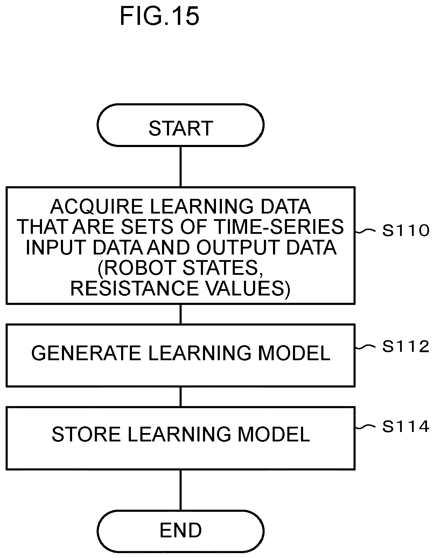

Fig. 15 illustrates an example of the flow of the learning processing. In step S110, the learning processing section 52 acquires the input data 4 (electrical resistances) whose labels are information expressing robot states and that are learning data that are the results of time-series measurement. In step S112, the learning processing section 52 generates the learning model 51 by using the learning data that is the results of time-series measurement. Namely, the learning processing section 52 obtains a collection of information of the weighting parameters (weights or strengths) of the connections between the nodes that are the results of learning that have been learned by using a large number of learning data as described above. Then, in step S114, the learning processing section 52 stores, as the learning model 51, data that is expressed as a collection of information of the weighting parameters (weights or strengths) of the connections between the nodes that are the results of learning.

Note that the generating unit 54 may use a regression neural network having the function of generating the outputs while taking the before-after relationships of the time-series inputs into consideration, or may use another method.

Further, the above-described robot state estimating device 1 uses, as the learning model 51, the trained generating unit 54 that has been generated by the method exemplified above (i.e., data that is expressed as a collection of information of the weighting parameters of the connections between the nodes that are the results of learning). If the learning model 51 that has been sufficiently trained is used, it is possible to identify the robot state from time-series electrical resistance values at the robot 2, i.e., the electrically-conductive urethane 22 disposed at the contour portion 27.

Note that the processing by the learning processing section 52 is an example of the processing of the learning model generating device of the present disclosure. Further, the robot state estimating device 1 is an example of the estimating section and the estimating device of the present disclosure. The output data 6 that is the information expressing the robot state 3 is an example of the robot state information of the present disclosure.

By the way, as described above, at the electrically-conductive urethane 22, the electrical paths are cooperate in a complex manner, and behavior is exhibited such as extension/contraction, expansion/contraction, temporary cutting-off, the generation of new connections and the like of the electrical paths in accordance with the deformation, and, as a result, the behavior of having electrical characteristics that differ in accordance with the applied force (e.g., the pressure stimulus) is exhibited. With regard to this point, the electrically-conductive urethane 22 can be treated as a reservoir that accumulates data relating to deformation of the electrically-conductive urethane 22. Namely, the robot state estimating device 1 can apply the electrically-conductive urethane 22 to a network model (hereinafter called a PRCN) that is called physical reservoir computing (PRC). Because PRCs and PRCNs themselves are known techniques, detailed description thereof is omitted. However, namely, PRCs and PRCNs can suitably be applied to the estimation of information relating to the deformation of the electrically-conductive urethane 22. Note that there are cases in which the reservoir is called a reservoir or a reservoir.

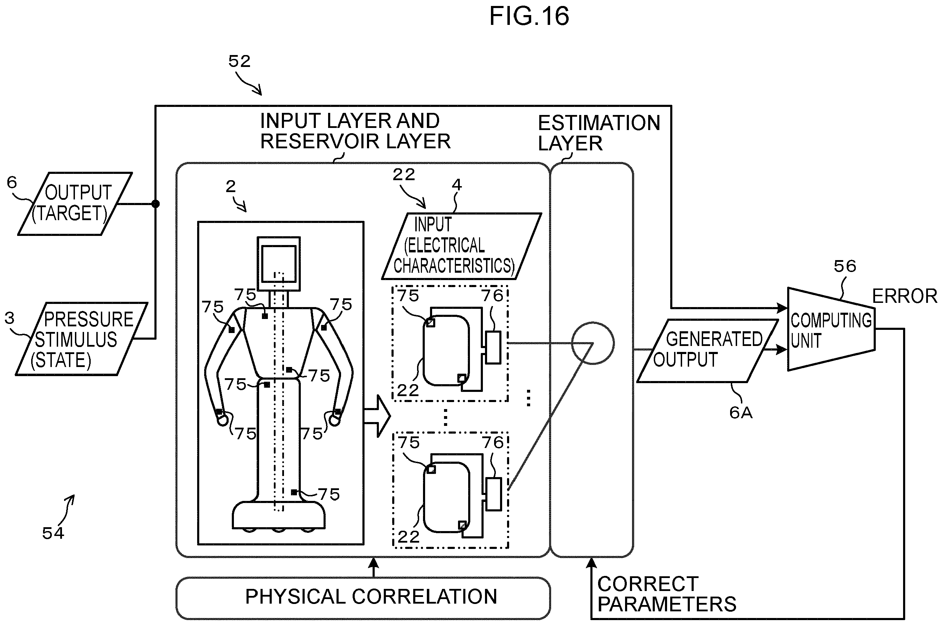

Fig. 16 illustrates an example of the learning processing section 52 that carries out learning by treating the robot 2, which includes the electrically-conductive urethane 22, as a reservoir that accumulates data relating to deformation of the robot 2 that includes the electrically-conductive urethane 22. The electrically-conductive urethane 22 has electrical characteristics (electrical resistance values) that correspond respectively to diverse pressure stimuli, and functions as an input layer that inputs electrical resistance values, and further, functions as a reservoir layer that accumulates data relating to deformation of the electrically-conductive urethane 22. Because the electrically-conductive urethane 22 outputs electrical characteristics (the input data 4) that differ in accordance with the pressure stimulus applied due to the robot state 3, at the estimation layer, it is possible to estimate the applied pressure stimulus 3 from the electrical resistance values of the electrically-conductive urethane 22. Accordingly, in the learning processing, it suffices to learn the estimation layer.

The above-described robot state estimating device 1 can be realized by, for example, causing a computer to execute a program that expresses the above-described respective functions.

Fig. 17 illustrates an example of the control device 250 that is structured to include a computer and serves as an executing device that executes processings that realize the various functions of the robot state estimating device 1.

The control device 250 that functions as the robot state estimating device 1 has a computer main body 100 illustrated in Fig. 17. The computer main body 100 has a CPU 102, a RAM 104 such as a volatile memory or the like, a ROM 106, an auxiliary storage device 108 such as a hard disk device (HDD) or the like, and an input/output interface (I/O) 110. These CPU 102, RAM 104, ROM 106, auxiliary storage device 108 and input/output I/O 110 are structures that are connected via bus 112 so as to be able to transfer data and commands to and from one another. Further, a communication section 114 for communicating with external devices is connected to the input/output I/O 110. The communication section 114 functions to acquire input data 4 (electrical resistances) from the robot 2 that includes the electrically-conductive urethane 22. Namely, the communication section 114 can acquire the input data 4 (electrical resistances) from the electrical characteristic detecting section 76 that is the detecting section and is connected to the detection points 75 at the electrically-conductive urethane 22 disposed at the robot 2.

Further, the operation portion 115 such as a keyboard or the like, the display portion 211 such as a display or the like, the microphone 117 for voice input, the speaker 118 for voice output, and the driving section 119 are connected to the input/output I/O 110. The display portion 211 is disposed at the head portion 210 of the robot 2. Further, the operation portion 115, the microphone 117 and the speaker 118 are disposed, for example, at the interior of the torso portion 220 of the robot 2 (not illustrated). The driving section 119 is disposed so as to movably drive the respective parts in cooperation with the skeleton 21 of the robot 2 (not illustrated).

A control program 108P, which is for causing the computer main body 100 to function as the robot state estimating device 1 that serves as an example of the estimating device of the present disclosure, is stored in the auxiliary storage device 108. The CPU 102 reads-out the control program 108P from the auxiliary storage device 108, and expands the control program 108P in the RAM 104, and executes processings. Due thereto, the computer main body 100 that executes the control program 108P operates as the robot state estimating device 1 that serves as an example of the estimating device of the present disclosure.

Note that learning models 108M that include the learning model 51, and data 108D that includes various data, are stored in the auxiliary storage device 108. The control program 108P may be provided by a recording medium such as a CD-ROM or the like.

The estimating processing at the robot state estimating device 1 that is realized by a computer is described next.

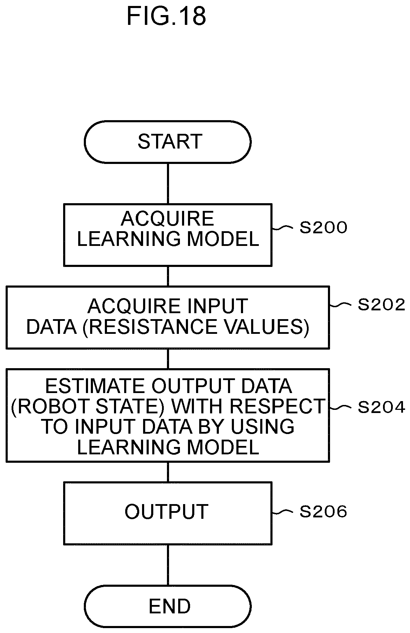

Fig. 18 illustrates an example of the flow of the estimating processing in accordance with the control program 108P executed at the computer main body 100.
The estimating processing illustrated in Fig. 18 is executed by the CPU 102 when the power of the computer main body 100 is turned on. Namely, the CPU 102 reads-out the control program 108P from the auxiliary storage device 108, and expands the control program 108P in the RAM 104, and executes processings.

First, in step S200, the CPU 102 acquires the learning model 51 by reading-out the learning model 51 from the learning models 108M of the auxiliary storage device 108 and expanding the learning model 51 in the RAM 104. Specifically, the CPU 102 expands, in the RAM 104, the network model (refer to Fig. 14 and Fig. 16) that is formed from the connections between the nodes in accordance with the weighting parameters, which are expressed as the learning model 51. Accordingly, the learning model 51, in which the connections between the nodes in accordance with weighting parameters are realized, is constructed.

Next, in step S202, the CPU 102 acquires, in time series and via the communication section 114, the unknown input data 4 (electrical resistances) that are subjects in estimating the robot state that is due to the pressure stimulus applied to the electrically-conductive urethane 22.

Next, in step S204, by using the learning model 51 acquired in step S200, the CPU 102 estimates the output data 6 (the unknown robot state) that corresponds to the input data 4 (the electrical resistances) acquired in step S202.

In next step S206, the CPU 102 outputs the output data 6 (the robot state) that is the results of estimation via the communication section 114, or outputs the data such that sound is emitted from the speaker 118, or outputs the data so as to be displayed on the display portion 211, and ends the present processing routine.

Note that the estimating processing illustrated in Fig. 18 is an example of the processing executed by the estimating method of the present disclosure.

As described above, in accordance with the present disclosure, a robot state can be estimated from input data 4 (electrical resistances) that vary in accordance with pressure stimuli in the robot states 3 with respect to the electrically-conductive urethane 22. Namely, an unknown robot state can be estimated without using a special device or a large device and without directly measuring deformation of a flexible member.

Further, the electrical characteristics vary in accordance with the robot states, and features of the robot states are reflected in these electrical characteristics (time-series electrical resistances). Therefore, robot states can be estimated from electrical resistance values that vary in time series at the electrically-conductive urethane 22. Namely, even if the robot 2 has various robot states, the appropriate robot state can be estimated by using the above-described learning model.

It was confirmed that, at the robot state estimating device 1 relating to the present embodiment, various robot states corresponding to electrical characteristics can be estimated by inputting electrical characteristics of the electrically-conductive urethane 22, by using the learning model 51 that is trained by the above-described learning processing.

Note that, as described above, the present embodiment describes a case in which the electrically-conductive urethane is used as an example of the flexible member. However, it suffices for the flexible member to be a material that is electrically conductive, and the flexible member is, of course, not limited to electrically-conductive urethane.

Further, the present embodiment describes a case of estimating various robot states, which correspond to electrical characteristics of the electrically-conductive urethane 22, by using the learning model 51 that is trained by the above-described learning processing. In this case, when focusing on detecting an urged state in which a figure contacts the contour portion 27, e.g., a contact state, as the robot state, the robot state estimating device 1 can be used as a contact detecting device in which the functional portion, which detects that a time-series electrical characteristic has exceeded a threshold value determined in advance for detecting contact, detects contact of the robot 2 by a figure.

### [Second Embodiment]

A second embodiment of the present disclosure is described next. Because the second embodiment is structured similarly to the first embodiment, the same portions are denoted by the same reference numerals, and there are cases in which detailed description is omitted.

The present disclosure provides an estimating device, an estimating method, an estimating program and a learning model generating device that can estimate an applied stimulus state in which pressure is applied to a flexible material, by using electrical characteristics of the flexible material that is electrically conductive and without using a special detecting device.

The movable body in the present disclosure is a concept that includes a movable body structured by a single part, or a robot structured by plural parts, some of which are movable, cooperating with one another. Further, the movable body can be applied to a region that is a portion of a human body. The projecting portion is a concept that includes parts or regions that project-out from a base body (e.g., a body or a torso) that structures the robot or the like and that can move relative to the base body, such as a head portion, arm portions, leg portions or the like. Note that the projecting portion can have a partial body, such as a finger at an arm portion, or a hand portion having a finger, or the like. The flexible material is disposed at the projecting portion.

Further, the applied stimulus state in the present disclosure is a concept that includes states of at least one of an external human body or object that applies pressure to the flexible material from the exterior which is other than the movable body. Namely, applied stimulus states include a state of an external human body, a state of an external object, and a state of an external human body and object. Note that, in the following explanation, description will be given by collectively calling the concept, which includes humans and things, a figure without differentiating between at least one of an external human body and object that applies pressure to the flexible material from the exterior that is other than the movable body. Specifically, respective, individual human bodies and objects themselves, and combinations of human bodies and objects, are called figures. For example, the applied stimulus state includes at least one state among a contact state, a shape state, and a physical state. Contact states include states in which the flexible material and an external figure are contacted. Note that contact states include cases in which a predetermined member is interposed between the flexible material and the external figure. For example, it suffices for the contact state to be a state in which a transfer of energy arises relatively between the flexible material and an external figure via a predetermined member, and the flexible member deforms. The shape state includes states expressing any of the surface shape of a figure, the texture of the surface, and the tactile sensation of the surface. The physical state is a physical state relating to the figure, and includes states expressing the pressure from the figure, the weight of the figure, and the hardness of the figure.

Note that an applied stimulus state materializes in either of a state expressing an active form at the movable object (hereinafter called active form state) and a state expressing a passive form (hereinafter called passive form state). The active form state is a concept that includes states expressing dynamic forms such as the deportment or the movement or the like of the movable body that is exhibited by the movable body at which the flexible material is disposed. The passive form state is a concept including states expressing static forms at the time when energy such as pressure or the like is applied from the exterior of the flexible material, such as the posture of the movable body or the like. A behavior state showing movement of the movable body is an example of a state of exhibiting an active form. A posture state showing the posture of the movable body is an example of a state of exhibiting a passive form.

The estimating device of the present embodiment estimates an applied stimulus state from electrical characteristics at the flexible material that is disposed at the movable body and is electrically conductive, by using a learning model that has been trained. The flexible material is disposed so as to cover at least a portion of the projecting portion (e.g., any of the head portion, a hand portion, a leg portion, or the like) that projects out from the base body so as to be movable relative to the base body (e.g., the torso) of the movable body (e.g., a robot or the like). The learning model uses, as the learning data, time-series electrical characteristics at times when pressure is applied to the flexible material that is electrically conductive, and applied stimulus state information that expresses applied stimulus states of a figure who applies pressure to that flexible material. The learning model is trained with time-series electrical characteristics being the inputs thereto, and so as to output applied stimulus state information that expresses the applied stimulus state corresponding to these time-series electrical characteristics.

In the present embodiment, description is given of a case in which a robot is used as the movable body. Further, description is given of a case in which an electrically-conductive urethane, which serves as a flexible material that is electrically conductive and in which an electrically conductive material is impregnated into all of or at least a portion of a urethane member, is disposed at at least a portion of the contour portion of the robot. Further, a value (pressure value) that expresses the pressure stimulus applied to the robot, i.e., the flexible material, is used as the physical amount that deforms the electrically-conductive urethane. Note that a case is described in which the electrical resistance value of the electrically-conductive urethane is used as the physical amount that varies in accordance with the pressure stimulus.

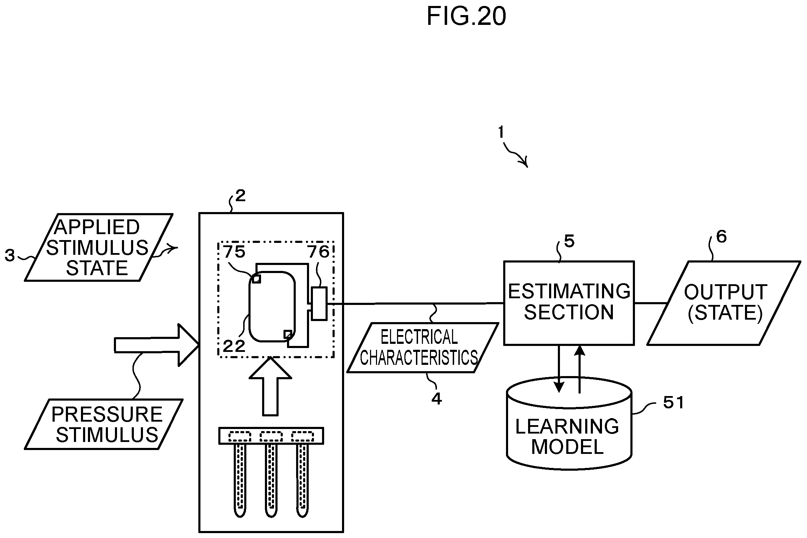

Fig. 20 illustrates an example of the structure of a state estimating device that serves as the estimating device of the present disclosure. The state estimating device relating to the present embodiment is structured similarly to the above-described robot state estimating device 1. Therefore, in the present embodiment, the above-described robot state estimating device 1 is called the state estimating device 1. Fig. 20 differs from Fig. 1 with regard to the point that the electrically-conductive urethane 22 is disposed at a robot hand. The robot hand is described later.

By using the learning model 51 that has been trained, the estimating processing at the state estimating device 1 estimates, from the electrical characteristics at the electrically-conductive urethane 22 disposed at the robot, and outputs, as the applied stimulus state of an unknown figure, either of the contact state of a figure at the exterior, or a state that is the surface shape, the texture of the surface, the tactile sensation of the surface, or the like of a figure at the exterior of the robot. Due thereto, the applied stimulus state of a figure, which is the contact state of a figure at the exterior, or a state such as the surface shape, the texture of the surface, the tactile sensation of the surface or the like of the figure who applies pressure to the robot, or the like, can be estimated without measuring by using a special device or a large device. The learning model 51 is trained by using applied stimulus states (e.g., state values expressing applied stimulus states) as the labels, and electrical characteristics (e.g., electrical resistance values) of the electrically-conductive urethane in those applied stimulus state as the inputs. The training of the learning model 51 is described later.

As described above, at the human-form robot 200, the respective parts that are the head portion 210, the torso portion 220, the arm portions 230 (the upper arms 232, the forearms 234, the hands 236), the leg portions 240 (the thighs 242, the lower legs 244, the feet 246) are connected by the skeleton 21 (Fig. 2). At the human-form robot 200, due to the electrically-conductive urethane 22 being placed on the periphery of the skeleton 21, the electrically-conductive urethane 22 is disposed at the contour that is the outer side of the human-form robot 200. The electrically-conductive urethane 22 that is disposed at the human-form robot 200 is connected to the electrical characteristic detecting section 76 (Fig. 8) via the detection points 75 that are electrodes or the like.

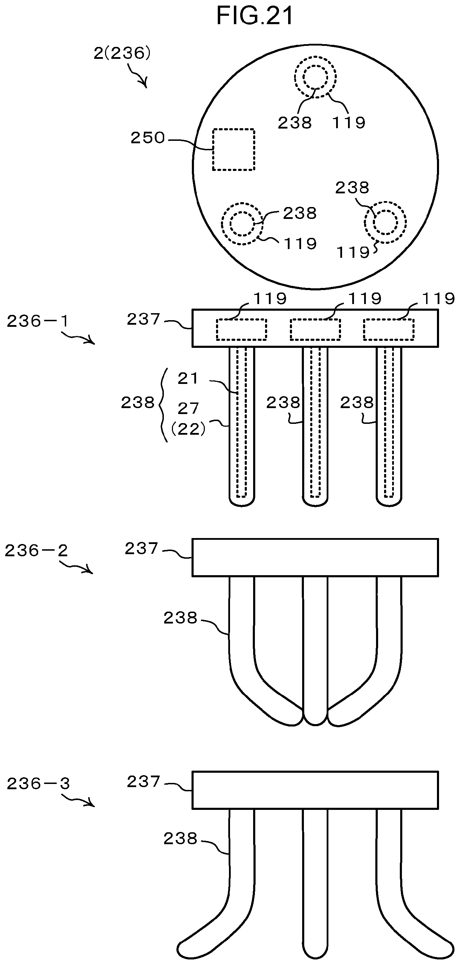

In the present embodiment, in order to simplify explanation, description is given of a case in which the simple robot hand illustrated in Fig. 21 is used as the robot hand 2 as an example of the robot of the present disclosure. The robot hand 2 illustrated in Fig. 21 corresponds to the part that is the hand 236 included at the arm portion 230 of the robot illustrated in Fig. 2.

As illustrated in Fig. 21, the robot hand 2 includes a base portion 237 and plural (three in the example illustrated in Fig. 3) finger portions 238 that are connected to the base portion 237, and structures a robot hand. The respective finger portions 238 are structures that is bendable due to the supply of fluid or the like (details described later), and form finger states that correspond to the degrees of bending. In Fig. 21, a finger state 236-1 in which the tips of the respective finger portions 238 are positioned at a predetermined initial interval, a finger state 236-2 in which the tips of the respective finger portions 238 have approached one another, and a finger state 236-3 in which the tips of the respective finger portions 238 are apart from one another, are illustrated as examples.

At the robot hand 2 illustrated in Fig. 21, the contour portions 27 that include the electrically-conductive urethanes 22 are disposed on the outer sides of the respective finger portions 238. Namely, each of the finger portions 238 of the robot hand 2 includes the skeleton 21, and the electrically-conductive urethane 22 is disposed on the periphery of the skeleton 21 as the contour and forms the contour portion 27. Note that the base portion 237 functions as a skeleton as well. The contour portions 27 of the respective finger portions 238 may be structured and disposed as a single sheet that includes the electrically-conductive urethane 22, or plural sheets including the electrically-conductive urethane 22 may be disposed at at least one. In a case in which the contour portion 27 is formed by plural sheets, the sheets may be disposed such that portions thereof overlap. The electrically-conductive urethane 22 is connected to the electrical characteristic detecting section 76 (Fig. 8) via the detection points 75 such as electrodes or the like.

The finger portion 238 is formed so as to be able to bend with the base portion 237 being the fulcrum. In a structure in which the finger portions 238 are formed so as to be bendable, members that include elastic bodies that deform linearly or nonlinearly can be used. Elastic contracting bodies (e.g., the above-described rubber actuator), which generate contraction force in a predetermined direction due to an applied physical amount (e.g., the supply of pressure or a fluid), are an example.

At the robot hand 2, the finger portions 238 bend as illustrated as the finger states 236-1 ~ 236-3 in Fig. 21, due to the driving of the unillustrated elastic contracting bodies. Due to the operation (bending) of the finger portions 238, the hand of a human body that grasps a figure and releases grasping can be modeled. In the examples illustrated in Fig. 21, the finger state 236-1 is an example of an initial state, the finger state 236-2 is an example of a grasping state, and the finger state 236-3 is an example of an open state in which grasping is released.

Further, the robot hand 2 has, at the base portion 237, the control device 250 that carries out control of the robot hand 2 (Fig. 17). The control device 250 includes a functional section that operates as the state estimating device 1.

Note that the robot hand 2 has the driving section 119 (Fig. 17) for bending the respective finger portions 238 that are the parts, by supplying fluid or the like. Due to the driving of the driving section 119 (Fig. 17), the respective finger portions 238 bend, and the various finger states can be formed. Accordingly, the robot that has the robot hand 2 operates as a stand-alone robot system.

The present embodiment describes an example in which the robot hand is structured by the three finger portions 238, which are connected to the base portion 237, as the robot hand 2. However, the number of the finger portions 238 is not limited to three, and may be two, or may be four or more. Further, the respective finger portions 238 are not limited to being the same shape. For example, the finger portions may, of course, be formed in different shapes so as to model the fingers of a human body.

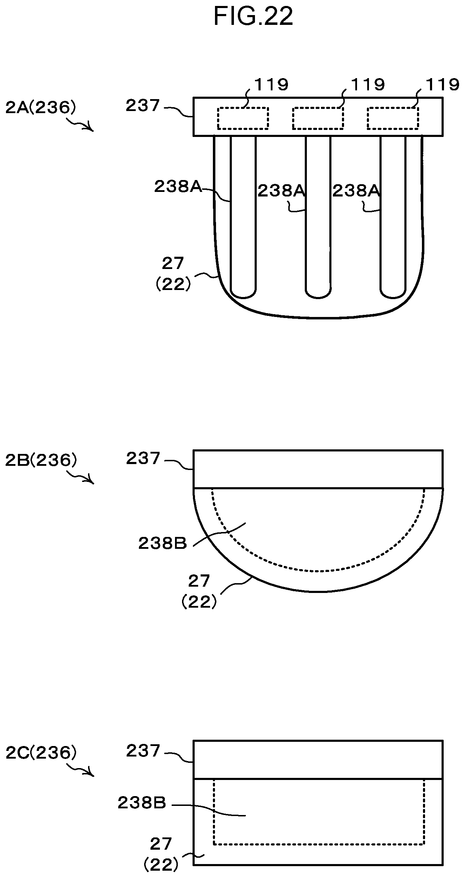

Further, the present embodiment describes the robot hand 2 at which, at the respective finger portions 238, the electrically-conductive urethanes 22 are disposed at the peripheries of the skeletons 21 so as to form the contour portions 27 (Fig. 21). However, the structure of the robot hand 2 is not limited to the electrically-conductive urethanes 22 being placed on the peripheries of the respective finger portions 238. For example, as illustrated as robot hand 2A in Fig. 22, the contour portion 27 of the hand 236 may be formed by being connected to the base portion 237 and by placing the electrically-conductive urethane 22 at the periphery of plural finger portions 238A that have the skeletons 21. Further, the robot hand 2 is not limited to having the plural finger portions 238. For example, as illustrated as robot hand 2B in Fig. 22, the contour portion 27 of the hand 236 may be formed by placing the electrically-conductive urethane 22 on the periphery of a hand that is formed from a finger portion 238B that has the skeleton 21. The robot hand 2B can model a hand that is in a clutched state. On the other hand, the robot hand 2 is not limited to having a curved surface. For example, as illustrated as robot hand 2C in Fig. 22, the contour portion 27 of the hand 236 may be formed by disposing the electrically-conductive urethane 22 on the periphery of a hand that is flat and formed from the finger portion 238B having the skeleton 21. The robot hand 2C can model the palm of a hand or the back of a hand.

In order to estimate the applied stimulus state, the state estimating device 1 detects electrical characteristics at the electrically-conductive urethane 22 that is disposed at the robot hand 2 (see Fig. 8).

The electrical resistance values, which are detected at the robot hand 2 that is structured to have the electrically-conductive urethane 22 at the contour portion 27, vary in accordance with the deformation of the electrically-conductive urethane 22 such as a pressure stimulus being applied to the contour portion 27 of the robot hand 2 or the like, and vary before and after deformation. Accordingly, by detecting time-series electrical resistance values, i.e., detecting changes in electrical resistance values from a state in which a pressure stimulus is not applied to the robot hand 2 (e.g., detecting an electrical resistance value that exceeds a predetermined threshold value), an applied stimulus state of a figure who applies pressure to the robot hand 2 can be detected. Specifically, applied stimulus states of a figure with respect to the robot hand 2 include contact states, because even contact of the robot hand 2 by a figure involves a pressure stimulus. Accordingly, by placing the electrically-conductive urethane 22 at the robot hand 2, an applied stimulus state, which includes contact of the robot hand 2 by a figure, can be detected. Further, even if any one of the position, the distribution, and the magnitude of the pressure stimulus that is applied to the robot hand 2 varies, the electrical resistance values vary. Accordingly, it is possible to detect an applied stimulus state, which includes the contacting position of a figure with respect to the robot hand 2, from the electrical resistance values that vary in time series.

As the contour portion 27 that includes the electrically-conductive urethane 22 formed at the robot hand 2, the contour portion 27 that includes the electrically-conductive urethane 22 may be formed as an integral structure at the outer side of the robot hand 2, or the contour portion 27 that includes independent electrically-conductive urethanes 22 per part, such as the finger portion or the like, may be formed.

Note that a number of detection points that is larger than that described above may be used as the detection points as described above in order to improve the accuracy of detecting the electrical characteristics of the one electrically-conductive urethane 22 (refer to Fig. 9 through Fig. 11).

The state estimating device 1 has the estimating section 5. The input data 4, which are the time-series electrical characteristics expressing the magnitudes of the electrical resistances (the electrical resistance values) at the electrically-conductive urethane 22, is inputted to the estimating section 5. Specifically, the electrical characteristics, which are outputted from the electrical characteristic detecting section 76 that is connected to the detection points 75 of the electrically-conductive urethane 22 (i.e., the volume resistance values that are electrical resistance values), are inputted. The input data 4 corresponds to the applied stimulus state 3 of the robot hand 2. Further, the estimating section 5 outputs the output data 6, which is output expressing a physical amount (an applied stimulus state value) that expresses the applied stimulus state 3, as the results of estimation. Note that the estimating section 5 includes the learning model 51 that has been trained.

The learning model 51 is a model that has been trained and that derives the applied stimulus state, i.e., an active form state or a passive form state (the output data 6) at the robot hand 2, from the electrical resistances (input data 4) of the electrically-conductive urethane 22 that vary due to the pressure stimulus that corresponds to the applied stimulus state 3. The learning model 51 is, for example, a model that prescribes a trained neural network, and is expressed as a collection of information of the weights (strengths) of the connections between the nodes (neurons) that structure the neural network.

The learning model 51 is generated by learning processing of the learning processing section 52 (Fig. 12). In the present embodiment, the learning processing section 52 carries out learning processing by using the electrical characteristics (the input data 4) at the electrically-conductive urethane 22 that vary due to the pressure stimulus generated by the applied stimulus state 3, instead of the above-described robot states. Namely, a large amount of data, which is obtained by measuring in time series the electrical resistances at the electrically-conductive urethane 22 and whose labels are the applied stimulus states 3, is used as the learning data. Specifically, the learning data includes a large amount of sets of input data, which include electrical resistance values (the input data 4), and information (the output data 6) expressing the applied stimulus states 3 that correspond to these input data. Here, the time-series information are set in correspondence by applying information that expresses the time of measurement to each of the electrical resistance values (the input data 4) of the electrically-conductive urethane 22. In this case, the time-series information may be set in correspondence by applying information, which expresses the time of measurement, to the sets of time-series electrical resistance values at the electrically-conductive urethane 22, in a time period that is set as the applied stimulus state 3.

The learning processing section 52 is described next.
In the learning processing that is carried out at the learning processing section 52, the contour portion 27 of the robot hand 2, at which the above-described electrically-conductive urethane 22 is disposed, is used as the detecting section, and the applied stimulus states 3 and the electrical resistance values (the input data 4) from the electrically-conductive urethane 22 are used as the learning data.

For example, data expressing applied stimulus states in active form states and passive form states are used as the learning data. Specifically, driving control of the driving section 119 is carried out such that there become behaviors, such as predetermined postures or movements or the like, by at least some of the parts of the robot hand 2, and the electrical resistance values at this time are detected, and are set in correspondence with the applied stimulus states (applied stimulus state values), and this data is used as the learning data.

In an active form state, at the robot hand 2, the contour portion 27 deforms due to movement or the like, and the electrical resistance values of the electrically-conductive urethane 22 vary. Accordingly, data, which expresses features of the applied stimulus state, is included in the time-series electrical resistance values in an active form state. Accordingly, it suffices to detect the time-series electrical resistance values, and set these values in correspondence with the applied stimulus state (applied stimulus state value), and use this data as learning data. Note that, in a case of separating the components of the time-series electrical resistance values in an active form state, the difference component (e.g., the difference) between the time-series electrical resistance values in a state in which an applied stimulus state does not exist, e.g., an active form state due to a no-load state, and the time-series electrical resistance values in an applied stimulus state in that active form state, may be set in correspondence with applied stimulus states, and this data may be used as the learning data.

On the other hand, in a passive form state, it suffices to carry out driving control of the driving section 119 such that there becomes a predetermined posture by at least some of the parts of the robot hand 2, and to detect the electrical resistance values at this time and set them in correspondence with the applied stimulus states (applied stimulus state values), and use this data as the learning data. Specifically, an applied stimulus state, in which the robot hand 2 that is in a predetermined posture is made to contact a figure or made to press a figure, is brought about, and the electrical resistance values at this time are detected and are set in correspondence with the applied stimulus state, and this data is made to be the learning data.

The learning processing section 52 can be structured to include a computer that includes an unillustrated CPU, and executes learning data collecting processing and learning processing (Fig. 13). In the present embodiment, the unillustrated CPU executes learning data collecting processing by replacing the above-described robot states with applied stimulus states. Namely, in step S100, the learning processing section 52 applies pressure to the robot hand 2 in a state (an active form state or a passive form state) of the robot hand 2. In step S102, the learning processing section 52 acquires, in time-series, the electrical resistance values of the electrically-conductive urethane 22 that vary in accordance with the applied stimulus state. In next step S104, the learning processing section 52 applies an applied stimulus state value, which expresses the applied stimulus state 3, as a label to the time-series electrical resistance values that have been acquired, and stores this data. The learning processing section 52 repeats the above-described processings until these sets of the applied stimulus state values and electrical resistance values of the electrically-conductive urethane 22 reach a predetermined number that has been set in advance or a predetermined time that has been set in advance (in step S106, the judgment is negative until the judgment becomes affirmative). Due thereto, the learning processing section 52 can acquire, in time series, and can store the electrical resistance values at the electrically-conductive urethane 22 for each of the applied stimulus states 3, and these stored sets of time-series electrical resistance values of the electrically-conductive urethane 22 per applied stimulus state become the learning data.

By the way, in the contacting of the robot hand 2 by a figure or the like, as the urging force (pressing force) by which the figure contacts the contour portion 27 becomes larger, the electrical characteristics (electrical resistance values) vary greatly. Accordingly, by detecting that a time-series electrical characteristic has exceeded a threshold value that is set in advance for contact detection, at least an applied stimulus state expressing that a figure has contacted the contour portion 27 can be detected. Accordingly, provided that learning processing is executed so as to be able to estimate at least an applied stimulus state in which a figure contacts the contour portion 27, it suffices to use time-series electrical characteristics, which correspond to urging forces (pressing forces) that specify the contact, as the learning data (refer to Fig. 19 as well).

The respective time-series electrical characteristics of the electrically-conductive urethane 22 (the before and after electrical characteristics including the respective peak values P1 ~ P8) appear as distinctive patterns in an applied stimulus state in which there is contact in accordance with urging force (pressing force). Namely, a pattern in which, when the robot hand 2 is pressed by a figure, the electrical resistance value rises suddenly, and when the pressing is released (the hand of the user moves away), the electrical resistance value gradually decreases, appears as a distinctive pattern. Therefore, as described above, by setting an electrical resistance value that exceeds the peak values P1 ~ P7 to be the threshold value th, it is possible to detect an applied stimulus state in which a figure contacts the contour portion 27. Accordingly, the learning processing section 52 learns, as learning data, time-series electrical characteristics that correspond to urging forces (pressing forces) that specify applied stimulus states of contact.

On the other hand, an applied stimulus state that is not limited to contact detection can be identified by the positions of the respective parts at the robot hand 2 or the relative positional relationships between plural parts, and respective physical amounts such as the distributions, magnitudes, frequencies and the like of pressure stimuli at the respective parts. Accordingly, features of time-series physical amounts that express applied stimulus states are included in the time-series electrical characteristics of the electrically-conductive urethane 22. In the present embodiment, electrical characteristics (volume resistance values) in which these physical amounts are reflected can be detected in time series by using the electrically-conductive urethane 22.

Accordingly, the pressure stimulus at the robot hand 2 varies in accordance with the applied stimulus state, and, by acquiring in time series the electrical characteristics corresponding to these changes in the pressure stimulus, the time-series electrical characteristics can be set in correspondence with applied stimulus states and stored. Sets of these time-series electrical characteristics and applied stimulus state values that express the applied stimulus states can be made to be the learning data.

Next, examples of the above-described learning data are shown in tables. Table 4 is an example of data in which time-series electrical resistance value data (r) and applied stimulus state active form state values are set in correspondence with one another as learning data relating to applied stimulus states. Table 5 is an example of data expressing time-series electrical resistance value data (R) per region at the robot hand 2. Table 3 is an example of data in which sets of characteristic data (J), which show time-series electrical resistance values detected at the respective finger portions of the robot hand 2, and applied stimulus state values are set in correspondence with one another.

The example illustrated in Table 4 is learning data in which regions and properties of the figure who is the subject are the applications of the respective states that are the contact states, the shape states and the physical amount states that are included in the applied stimulus states, and values, which express the tactile sensations, the textures and the physical amounts corresponding to these states, are set in correspondence therewith.

**[Table 4]**

| time-series electrical resistance value data | applied stimulus state | | |
|---|---|---|---|
| | state | application | value (tactile sensation / texture) |
| r11, r12, r13, ..., r1n | shape | entirety | round shape / polygonal shape |
| r21, r22, r23, ..., r2n | shape | surface | convex-concave shape / jagged feel |
| r31, r32, r33, ..., r3n | shape | surface | flat shape / smooth feel |
| ... | contact | contact | contacted |
| | physical | pressure | large / small (P) |
| | physical | weight | heavy / light (g) |
| | physical | hardness | hard / soft (index) |
| | ... | | ... |

The example illustrated in Table 5 includes the fingertips, the intermediate regions of the fingers and the bases of the fingers, and the palm of the hand, the back of the hand, and the side surfaces of the hand, as regions that detect pressure applied to the robot hand 2. The data illustrated in Table 5 may include the respective data shown in Table 1. For example, it is possible to make it such that r11 = (R111, R112, R113, ..., R11m: n = m).

**[Table 5]**

| time-series electrical resistance value data | detection region |
|---|---|
| R111, R112, R113, ..., R11m | fingertip |
| R121, R122, R123, ..., R12m | finger intermediate region |
| R131, R132, R133, ..., R13m | base of finger |
| R141, R142, R143, ..., R14m | palm / back of hand / side surfaces |
| ... | ... |

The example illustrated in Table 6 is learning data in which sets of the characteristic data (J), which show time-series electrical resistance values detected at the respective parts, and applied stimulus state values are set in correspondence with one another, in consideration of the fact that the respective parts at the robot hand 2 cooperate with one another. At the robot hand 2, a feature of the applied stimulus state, i.e., a distinctive pattern, is included in each of the characteristic data (J) that are included in the respective sets. Accordingly, the respective characteristic data (J) can all be used as learning data. For example, the applied stimulus state can be identified from combinations of the characteristic data (J) that include fluctuations in the electrical resistance values detected at the respective three finger portions 236 that structure the robot hand 2. For example, due to the electrical resistance values fluctuating in the pressing direction at two or more regions at the three finger portions 236, the state can be identified as "grasping an object". In a case in which there is a sudden change from the fluctuations in the electrical resistance values that are less than the threshold value at two or more regions, the state can be identified as "failed grasping" or "releasing of grasping". Further, "slippage", in which the position of the figure in the grasping by the figure shifts, can be identified from the magnitude of the fluctuation width from fluctuations in the electrical resistance values that are less than the threshold value.

**[Table 6]**

| No. | time-series electrical resistance value data | state (coordinated operations) |
|---|---|---|
| 1 | characteristic data (J1) of first finger portion | grasping an object |
| | characteristic data (J2) of second finger portion | |
| | characteristic data (J3) of third finger portion | |
| ... | ... | failed grasping |
| | | releasing of grasping (placement) |
| | | slippage |
| | | ... |

The learning processing at the learning processing section 52 is described next. The above-described learning processing is carried out at the learning processing section 52 (Fig. 14). In the present embodiment, the learning processing is executed by replacing the above-described robot states with applied stimulus states. Because the learning processing is similar to that described above, description thereof is omitted.

The learning model 51 is generated by the above-described learning processing of the learning processing section 52 (Fig. 15). The learning model 51 is expressed as a collection of information of the weighting parameters (weights or strengths) of the connections between the nodes that are the results of learning by the learning processing section 52.

Further, at the above-described state estimating device 1, the trained generating unit 54 that has been generated by the method exemplified above (i.e., the data expressed as a collection of information of the weighting parameters of the connections between the nodes that are the results of learning) is used as the learning model 51. If the learning model 51 that has been sufficiently trained is used, it is possible to identify the applied stimulus state from time-series electrical resistance values at the robot hand 2, i.e., the electrically-conductive urethane 22 disposed at the contour portion 27.

Note that the processing by the learning processing section 52 is an example of the processing of the learning model generating device of the present disclosure. Further, the state estimating device 1 is an example of the estimating section and the estimating device of the present disclosure. The output data 6 that is the information expressing the applied stimulus state 3 is an example of the applied stimulus state information of the present disclosure.

Further, as described above, the electrically-conductive urethane 22 can be treated as a reservoir that accumulates data relating to deformation of the electrically-conductive urethane 22. Namely, the state estimating device 1 can use the electrically-conductive urethane 22 as a PRCN that is called physical reservoir computing (PRC).

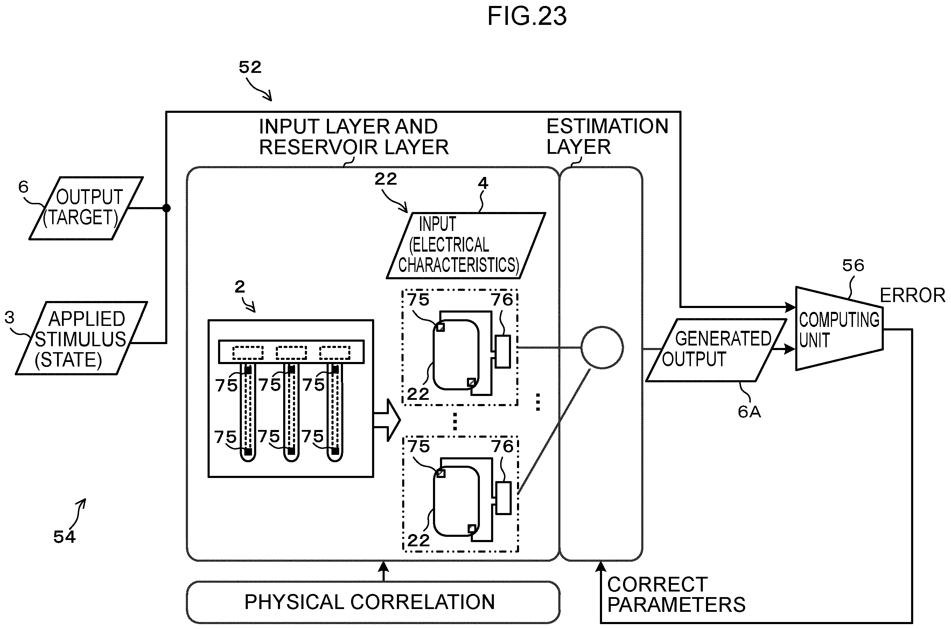

In the same way as the example illustrated in above-described Fig. 16, Fig. 23 illustrates an example of the learning processing section 52 that carries out learning by treating the robot hand 2, which includes the electrically-conductive urethane 22 relating to the present embodiment, as a reservoir that accumulates data relating to deformation of the robot hand 2 that includes the electrically-conductive urethane 22. Accordingly, as described above, in the learning processing, it suffices to learn the estimation layer.

The state estimating device 1 can be realized by, for example, causing a computer to execute a program that expresses the above-described respective functions. For example, it suffices to structure the control device 250 (Fig. 17) to include a computer as an executing device that executes processings that realize the various functions of the state estimating device 1.

The estimating processing at the state estimating device 1 that is realized by a computer is described next.

The estimating processing relating to the present embodiment is executed by the CPU 102 when the power of the computer main body 100 is turned on (Fig. 18). Namely, the CPU 102 reads-out the control program 108P from the auxiliary storage device 108, and expands the control program 108P in the RAM 104, and executes processings. In the present embodiment, as described above, the estimating processing is executed by replacing the robot states with applied stimulus states.

First, in step S200, the CPU 102 acquires the learning model 51 by reading-out the learning model 51 from the learning models 108M of the auxiliary storage device 108 and expanding the learning model 51 in the RAM 104. Specifically, the CPU 102 expands, in the RAM 104, the network model (refer to Fig. 14 and Fig. 16) that is formed from the connections between the nodes in accordance with the weighting parameters, which are expressed as the learning model 51. Accordingly, the learning model 51, in which connections between nodes in accordance with weighting parameters are realized, is constructed.

Next, in step S202, the CPU 102 acquires, in time series and via the communication section 114, the unknown input data 4 (electrical resistances) that are subjects in estimating the applied stimulus state that is due to the pressure stimulus applied to the electrically-conductive urethane 22.

Next, in step S204, by using the learning model 51 acquired in step S200, the CPU 102 estimates the output data 6 (the unknown applied stimulus state) that corresponds to the input data 4 (the electrical resistances) acquired in step S202.

In next step S206, the CPU 102 outputs the output data 6 (the applied stimulus state) that is the results of estimation via the communication section 114, or outputs data such that sound is emitted from the speaker 118, or outputs data so as to be displayed on the display portion 211, and ends the present processing routine.

Note that the estimating processing relating to the present embodiment is an example of the processing executed by the estimating method of the present disclosure.

As described above, in accordance with the present disclosure, an applied stimulus state can be estimated from the input data 4 (electrical resistances) that vary in accordance with the pressure stimulus in the applied stimulus state 3 with respect to the electrically-conductive urethane 22. Namely, an unknown applied stimulus state can be estimated without using a special device or a large device and without directly measuring deformation of the flexible member.

Further, the electrical characteristics vary in accordance with the applied stimulus state, and the features of the applied stimulus state are reflected in these electrical characteristics (the time-series electrical resistances). Therefore, an applied stimulus state can be estimated from electrical resistance values that vary in time series at the electrically-conductive urethane 22. Namely, even if there are various applied stimulus states in which pressure is applied to the robot hand 2 by a figure, the appropriate applied stimulus state can be estimated by using the above-described learning model.

It was confirmed that, at the state estimating device 1 relating to the present embodiment, various applied stimulus states corresponding to electrical characteristics can be estimated by inputting electrical characteristics of the electrically-conductive urethane 22, by using the learning model 51 that is trained by the above-described learning processing.

### <Application Examples>

Application of the above-described state estimating device 1 to various types of devices is possible.

The above-described state estimating device 1 functions effectively in cases of sharing the applied stimulus state at plural places. For example, by making the robot hand 2 function as a portion of a remote device that is disposed at a remote location, the state estimating device 1 can learn of an unknown applied stimulus state of a figure that is detected by the robot hand 2 at a place that is apart from the location of placement of the robot hand 2. In order to learn an unknown applied stimulus state of a figure at a remote location, it suffices to add a processing that transmits the applied stimulus state value, which expresses the applied stimulus state and is the above-described results of estimation, as data via the communication section 114 to a destination of transmission that is at a predetermined remote location.

Further, the above embodiment describes a case which various applied stimulus states corresponding to the electrical characteristics of the electrically-conductive urethane 22 are estimated by using the learning model 51 that is trained by the above-described learning processing. In this case, when focusing on detecting a contact state in which a figure contacts the contour portion 27 as the applied stimulus state, the state estimating device 1 can be used as a contact detecting device in which the functional portion, which detects that a time-series electrical characteristic has exceeded a threshold value set in advance for contact detection, detects the contact of a figure.

Although the above embodiment describes a case in which the technique of the present disclosure is applied to a robot in which the electrically-conductive urethane 22 is disposed at the outer shell portion, the technique of the present disclosure is not limited to application to a robot. For example, a member including the electrically-conductive urethane 22 may be disposed at a cover portion disposed at the periphery of a robot, or may be disposed at a bag body (e.g., a hat, glove, sock or the like) that is worn on a portion of a human body. Namely, it suffices for the movable body at which the electrically-conductive urethane is disposed to be a figure having a projecting portion and a base body for applying pressure in accordance with an applied stimulus state to the electrically-conductive urethane 22 of a robot or a human body or the like.

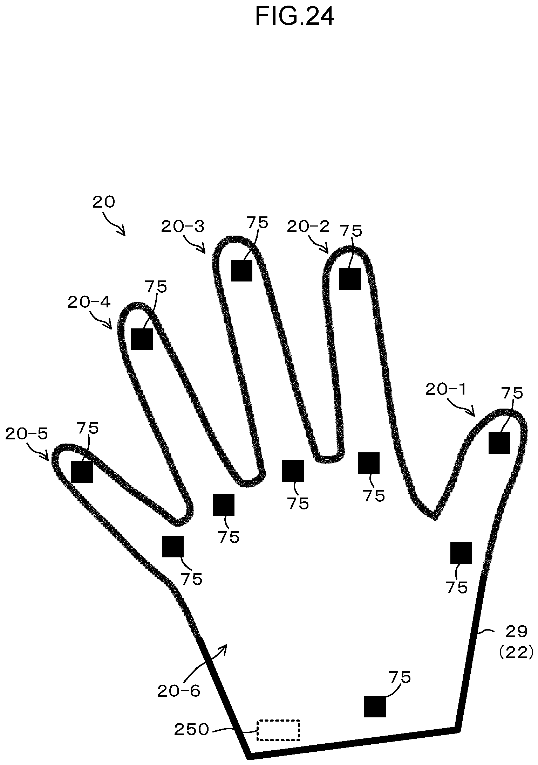

Fig. 24 illustrates glove 29 at which is disposed the electrically-conductive urethane 22 that applies the technique of the present disclosure. The glove 29 is a member that is worn on the exterior of a hand of a human body, and the electrically-conductive urethane 22 is disposed at at least a portion of the interior or the exterior of the glove 29.

Here, in order to simplify explanation, a glove 20 formed by the electrically-conductive urethane 22 is described as a member that is worn on the exterior of a hand of a human body. As illustrated in Fig. 24, the glove 20 has a first finger portion 20-1 covering the thumb, a second finger portion 20-2 covering the index finger, a third finger portion 20-3 covering the middle finger, a fourth finger portion 20-4 covering the ring finger, and a fifth finger portion 20-5 covering the little finger, and these are respectively connected to a palm portion 20-6 that covers the palm (the back of the hand). Note that the glove 20 may cover the hand 236 of the robot illustrated in Fig. 2.

Further, at the glove 20, the detection points 75 such as electrodes or the like are disposed at respective regions of the electrically-conductive urethane 22, in order to detect the electrical characteristics per region, i.e., at each of the first finger portion 20-1 through the fifth finger portion 20-5 and the palm portion 20-6. At the glove 20, the electrically-conductive urethane 22 is connected to a control device 250A that is provided with the electrical characteristic detecting section 76 (Fig. 8). Because the control device 250A is structured similarly to the control device 250 illustrated in Fig. 21, description thereof is omitted.

Note that the arrangement of the detection points 75 such as electrodes or the like at the glove 20 illustrated in Fig. 24 is an example, and the arrangement is not limited to that illustrated in Fig. 24. For example, it suffices to dispose at least a pair of the detection points 75 such as electrodes or the like at the glove 20, and plural detection points may be disposed in order to improve the accuracy of detection.

The glove 20 at which the electrically-conductive urethane 22 is disposed can estimate applied stimulus states of a figure that correspond to active form states and passive form states of a robot or a hand of a person. Accordingly, by disposing a member that includes the electrically-conductive urethane 22 at a cover portion disposed at the periphery of a robot, or by disposing a member that includes the electrically-conductive urethane 22 at a bag body (e.g., a hat, a glove, a sock or the like) that is worn on a portion of a human body, an applied stimulus state of a figure can be estimated easily without providing a large-scale sensor system.

### [Third Embodiment]

A third embodiment of the present disclosure is described next. Because the third embodiment is structured similarly to the first embodiment and the second embodiment, the same portions are denoted by the same reference numerals, and there are cases in which detailed description is omitted.

The present disclosure provides an estimating device, an estimating method, an estimating program, a robot system and a learning model generating device that can estimate contacting object information that expresses a contacting object, by using electrical characteristics of a flexible material that is electrically conductive and without using a special detecting device.

The "contacting object" in the present disclosure is a concept including types of contacting objects and states of contacting objects.

The estimating device of the present disclosure estimates information relating to a contacting object from electrical characteristics at a flexible material that is provided at a robot and is electrically conductive, by using a learning model that has been trained. The learning model uses, as the learning data, time-series electrical characteristics at times when pressure is applied to the flexible material that is electrically conductive, and contacting object information expressing contacting objects that apply pressure to that flexible material. The learning model is trained with time-series electrical characteristics being the input thereto, and so as to output contacting object information that expresses the contacting object corresponding to those time-series electrical characteristics.

In the following explanation, description is given of a case in which an electrically-conductive urethane, which serves as a flexible material that is electrically-conductive and in which an electrically conductive material is compounded into all of or at least a portion of a urethane member, is disposed at the contour portion of at least a portion of the torso portion of a robot. Further, a value (pressure value) that expresses the pressure stimulus applied to the robot, i.e., the flexible material, is used as the physical amount that deforms the electrically-conductive urethane. Note that a case is described in which the electrical resistance value of the electrically-conductive urethane is used as a physical amount that varies in accordance with the pressure stimulus.

Because the contacting object estimating device that serves as the estimating device of the present disclosure is structured similarly to the above-described robot state estimating device 1, in the present embodiment, the above-described robot state estimating device 1 is called the contacting object estimating device 1, and detailed description of the structures of the contacting object estimating device 1 is omitted.

By using the learning model 51 that has been trained, the estimating processing at the contacting object estimating device 1 estimates and outputs the type and the state of an unknown contacting object, from the electrical characteristics at the electrically-conductive urethane 22 disposed at the robot 2. Due thereto, contacting object information that expresses the contacting object can be estimated without using a special device or a large device and without directly measuring deformation of the contour of the robot 2. The learning model 51 is trained by using contacting objects (e.g., a value expressing the type of the contacting object or a state value expressing the state of the contacting object) as labels, and electrical characteristics of the electrically-conductive urethane in states in which a pressure stimulus is applied thereto by those contacting objects (i.e., the electrical resistance values of the electrically-conductive urethane disposed at the robot 2) as the inputs.

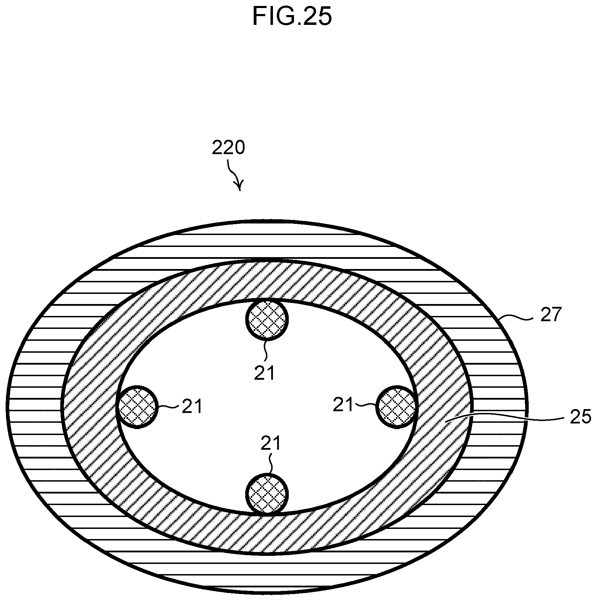

In the present embodiment, for example, as per the example of the schematic structure of the torso portion 220 that is illustrated in Fig. 25 in a cross-sectional view, the inner layer 25, which includes structures such as artificial muscles and the like, is disposed so as to cover the plural skeletons 21 of the torso portion 220, and the contour portion 27 that functions as the skin is disposed at the periphery of the inner layer 25. Note that the contour portion 27, which functions as the skin that covers the plural skeletons 21 of the torso portion 220, may be provided.

In the same way as described above (e.g., as illustrated in Fig. 4), it suffices to dispose the electrically-conductive urethane 22 at the material that is disposed so as to cover the plural skeletons 21 of the torso portion 220, i.e., at at least portions of the contour portion 27, and the electrically-conductive urethane 22 may be disposed at the interior or may be disposed at the exterior.

In the present embodiment, as an example of the robot of the present disclosure, a case is described in which a stand-alone robot system, which includes the above-described simple robot, is used as the robot 2 (Fig. 6). At the robot 2, the contour portion is formed by placing the electrically-conductive urethane 22 as the contour that is the outer side of the robot 2, so as to cover the plural skeletons 21 of the torso portion 220.

By the way, in order to estimate the contacting object, the contacting object estimating device 1 detects the electrical characteristics at the electrically-conductive urethane 22 that is disposed at the robot 2 (see Fig. 8).

The electrical resistance values, which are detected at the robot 2 that is structured to have the electrically-conductive urethane 22 at the contour portion 27, vary in accordance with deformation of the electrically-conductive urethane 22, such as a pressure stimulus being applied to the contour portion 27 of the torso portion 220 of the robot 2 or the like, and vary before and after this deformation. Accordingly, by detecting the time-series electrical resistance values, i.e., detecting changes in the electrical resistance values from a state in which a pressure stimulus is not applied to the torso portion 220 of the robot 2 (e.g., detecting an electrical resistance value that exceeds a predetermined threshold value), a contacting object that contacts the torso portion 220 of the robot 2 can be detected. Specifically, the contacting objects that contact the torso portion 220 of the robot 2 include types of contacting objects and states of contacting objects that contact the torso portion 220 of the robot 2. Accordingly, by placing the electrically-conductive urethane 22 at the torso portion 220 of the robot 2, the type of the contacting object and the state of the contacting object that contacts the torso portion 220 of the robot 2 can be detected. Further, even if any one of the position, the distribution, and the magnitude of the pressure stimulus that is applied to the robot 2 varies, the electrical resistance values vary. Accordingly, it is possible to detect the type of the contacting object and the state of the contacting object that contacts the torso portion 220 of the robot 2, from the electrical resistance values that vary in time series.

With respect to the contour portion 27 that includes the electrically-conductive urethane 22 formed at the torso portion 220 of the robot 2, the contour portion 27 that includes the electrically-conductive urethane 22 may be formed as an integral structure at the outer side of the torso portion 220 of the robot 2, or the contour portion 27 that includes an independent electrically-conductive urethane 22 at each of the upper torso 222 and the lower torso 224 may be formed.

Note that, as described above, a number of detection points that is larger than that described above may be used in order to improve the accuracy of detecting the electrical characteristics of the one electrically-conductive urethane 22 (refer to Fig. 9 through Fig. 11).

The contacting object estimating device 1 has the estimating section 5. The time-series input data 4, which express the magnitudes of the electrical resistances (the electrical resistance values) at the electrically-conductive urethane 22, are inputted to the estimating section 5. The input data 4 corresponds to the contacting object 3 of the robot 2. Further, the estimating section 5 outputs the output data 6, which shows the contacting object information expressing the contacting object 3, as the results of estimation. Note that the estimating section 5 includes the learning model 51 that has been trained.

The learning model 51 is a model that has been trained and that derives the type of the contacting object and the state of the contacting object that contacts the torso portion 220 of the robot 2 (the output data 6), from the electrical resistances (the input data 4) of the electrically-conductive urethane 22 that vary due to the pressure stimulus that corresponds to the contacting object 3. The learning model 51 is, for example, a model that prescribes a trained neural network, and is expressed as a collection of information of the weights (strengths) of the connections between the nodes (neurons) that structure the neural network.

The learning model 51 is generated by learning processing of the learning processing section 52 (Fig. 12). In the present embodiment, the learning processing section 52 carries out learning processing by using the electrical characteristics (the input data 4) at the electrically-conductive urethane 22 that vary due to the pressure stimulus generated by the contacting object 3, instead of the above-described robot states. Namely, a large amount of data, which is obtained by measuring in time series the electrical resistances at the electrically-conductive urethane 22 and whose labels are the contacting objects 3, is used as the learning data. Specifically, the learning data includes a large amount of sets of input data, which includes electrical resistance values (the input data 4), and contacting object information (the output data 6) expressing the contacting objects 3 that correspond to those input data. Here, the time-series information are set in correspondence by applying information that expresses the time of measurement to each of the electrical resistance values (the input data 4) of the electrically-conductive urethane 22. In this case, the time-series information may be set in correspondence by applying information, which expresses the time of measurement, to the sets of time-series electrical resistance values at the electrically-conductive urethane 22, in a time period that is set as the contacting object 3.

The learning processing section 52 is described next.
In the learning processing that is carried out at the learning processing section 52, the contour portion 27 of the torso portion 220 of the robot 2, at which the above-described electrically-conductive urethane 22 is disposed, is used as the detecting section, and the type and state of the contacting object 3, and the electrical resistance values (the input data 4) from the electrically-conductive urethane 22, are used as the learning data.

For example, data with respect to the various types of contacting objects are used as the learning data. Specifically, the user OP is instructed such that a pressure stimulus is applied by a contacting object of a predetermined type that applies energy such as pressure or the like to the torso portion 220 of the robot, and the electrical resistance values at this time are detected, and are set in correspondence with the type of the contacting object, and this data is used as the learning data. At the torso portion 220 of the robot 2, the contour portion 27 deforms due to the application of energy such as pressure or the like from the contacting object, and the electrical resistance values of the electrically-conductive urethane 22 vary. Therefore, time-series electrical resistance values are detected and are set in correspondence with types of contacting objects, and this data can be used as the learning data.

Further, data with respect to respective states of contacting objects are used as the learning data. Specifically, the user OP is instructed such that a pressure stimulus is applied by a contacting object in a predetermined state in which energy such as pressure or the like is applied to the torso portion 220 of the robot 2, and the electrical resistance values at this time are detected, and are set in correspondence with the state of the contacting object, and this data is used as the learning data. At the torso portion 220 of the robot 2, the contour portion 27 deforms due to the application of energy such as pressure or the like from the contacting object, and the electrical resistance values of the electrically-conductive urethane 22 vary. Therefore, time-series electrical resistance values are detected and are set in correspondence with states of contacting objects, and this data can be used as the learning data. The states of a contacting object include contact states in which a figure contacts the robot.

The learning processing section 52 can be structured to include a computer that includes an unillustrated CPU, and executes learning data collecting processing and learning processing (Fig. 13). In the present embodiment, in step S 100, the learning processing section 52 gives an instruction for a pressure stimulus to be applied to the torso portion 220 of the robot 2 by an object. In step S102, the learning processing section 52 acquires, in time-series, the electrical resistance values of the electrically-conductive urethane 22 that vary due to the pressure stimulus that corresponds to the contacting object. In next step S104, the learning processing section 52 applies contacting object information, which expresses the type and the state of the contacting object 3, as a label to the time-series electrical resistance values that have been acquired, and stores these data. The learning processing section 52 repeats the above-described processings until these sets of the contacting object information and the electrical resistance values of the electrically-conductive urethane 22 reach a predetermined number that has been set in advance or a predetermined time that has been set in advance (in step S106, the judgment is negative until the judgment becomes affirmative). Due thereto, the learning processing section 52 can acquire, in time series, and can store the electrical resistance values at the electrically-conductive urethane 22 for each type of the contacting object 3 and each state of the contacting object 3, and these stored sets of time-series electrical resistance values of the electrically-conductive urethane 22 per type and per state of contacting object become the learning data.

By the way, in a case in which a pressure stimulus due to contact of an object is applied to the contour portion 27 of the torso portion 220 of the robot 2, the electrical characteristics (electrical resistance values) vary greatly in accordance with the type of and the state of the contacting object. Accordingly, the type and the state of the contacting object can be detected by detecting the time-series electrical characteristics. Accordingly, it suffices to use time-series electrical characteristics, which correspond to types and states of contacting objects, as the learning data.

Next, examples of the above-described learning data are shown in tables. Table 7 is an example of data in which time-series electrical resistance value data (r) and types of contacting objects are set in correspondence with one another as learning data relating to types of contacting objects. Table 8 is an example of data in which time-series electrical resistance value data (R) and states of contacting objects are set in correspondence with one another as learning data relating to states of contacting objects.

**[Table 7]**

| time-series electrical resistance value data | type |
|---|---|
| r11, r12, r13, ..., r1n | human |
| r21, r22, r23, ..., r2n | wall |
| r31, r32, r33, ..., r3n | ball |
| ... | ... |

**[Table 8]**

| time-series electrical resistance value data | state |
|---|---|
| R11, R12, R13, ..., R1n | hugging |
| R21, R22, R23, ..., R2n | rubbing |
| R31, R32, R33, ..., R3n | tapping |
| ... | ... |

The learning processing at the learning processing section 52 is described next. The above-described learning processing is carried out at the learning processing section 52 (Fig. 14). In the present embodiment, the learning processing is executed by replacing the above-described robot states with types and states of contacting objects. Because the learning processing is similar to that described above, description thereof is omitted.

The learning model 51 is generated by the above-described learning processing of the learning processing section 52 (Fig. 15). The learning model 51 is expressed as a collection of information of the weighting parameters (weights or strengths) of the connections between the nodes that are the results of learning by the learning processing section 52.

Further, at the above-described contacting object estimating device 1, the trained generating unit 54 that has been generated by the method exemplified above (i.e., the data expressed as a collection of information of the weighting parameters of the connections between the nodes that are the results of learning) is used as the learning model 51. If the learning model 51 that has been sufficiently trained is used, it is possible to identify the type and the state of the contacting object from the time-series electrical resistance values at the robot 2, i.e., the electrically-conductive urethane 22 disposed at the contour portion 27.

Note that the processing by the learning processing section 52 is an example of the processing of the learning model generating device of the present disclosure. Further, the contacting object estimating device 1 is an example of the estimating section and the estimating device of the present disclosure. The output data 6 that is information expressing the type and the state of the contacting object 3 is an example of the contacting object information of the present disclosure.

Further, as described above, the electrically-conductive urethane 22 can be treated as a reservoir that accumulates data relating to deformation of the electrically-conductive urethane 22. Namely, the contacting object estimating device 1 can use the electrically-conductive urethane 22 as a PRCN that is called PRC.

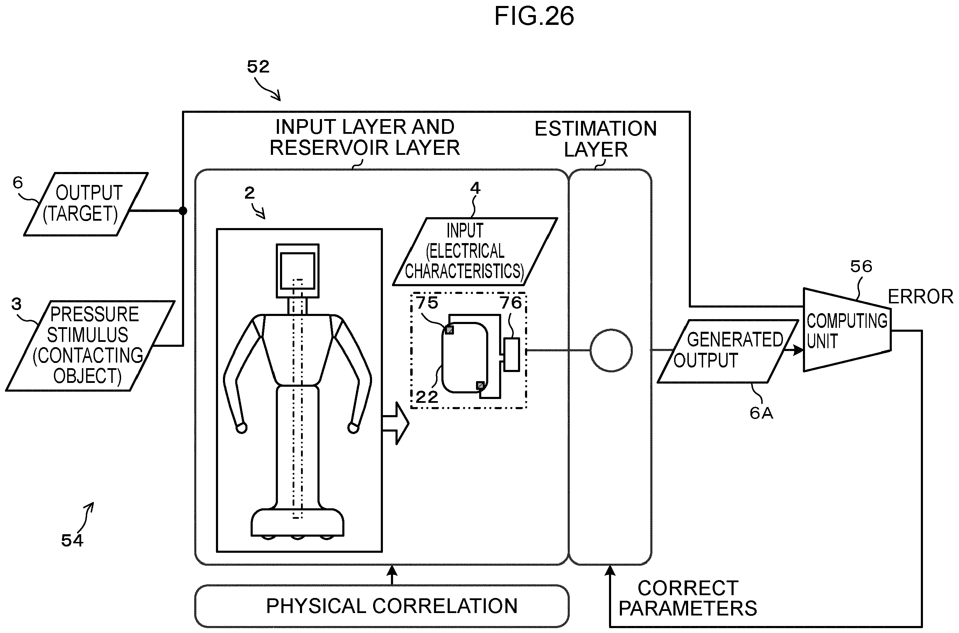

In the same way as in above-described Fig. 16, Fig. 26 illustrates an example of the learning processing section 52 that carries out learning by treating the robot 2, which includes the electrically-conductive urethane 22, as a reservoir that accumulates data relating to deformation of the robot 2 that includes the electrically-conductive urethane 22. The electrically-conductive urethane 22 has electrical characteristics (electrical resistance values) that correspond respectively to diverse pressure stimuli, and functions as an input layer that inputs electrical resistance values, and further, functions as a reservoir layer that accumulates data relating to deformation of the electrically-conductive urethane 22. Because the electrically-conductive urethane 22 outputs electrical characteristics (the input data 4) that differ in accordance with the pressure stimulus applied by the contacting object 3, at the estimation layer, it is possible to estimate the applied type and state of the contacting object 3 from the electrical resistance values of the electrically-conductive urethane 22. Accordingly, in the learning processing, it suffices to learn the estimation layer.

The above-described contacting object estimating device 1 can be realized by, for example, causing a computer to execute a program that expresses the above-described respective functions. For example, it suffices to structure the control device 250 (Fig. 17) to include a computer as an executing device that executes processings that realize the various functions of the contacting object estimating device 1.

The estimating processing at the contacting object estimating device 1 that is realized by a computer is described next.

As described above, the estimating processing relating to the present embodiment is executed by the CPU 102 (Fig. 18) when the power of the computer main body 100 is turned on. Namely, the CPU 102 reads-out the control program 108P from the auxiliary storage device 108, and expands the control program 108P in the RAM 104, and executes processings.

Namely, in step S200, the CPU 102 acquires the learning model 51 by reading-out the learning model 51 from the learning models 108M of the auxiliary storage device 108 and expanding the learning model 51 in the RAM 104. Specifically, the CPU 102 expands, in the RAM 104, the network model (refer to Fig. 14 and Fig. 16) that is formed from the connections between the nodes in accordance with the weighting parameters, which are expressed as the learning model 51. Accordingly, the learning model 51, in which the connections between the nodes in accordance with weighting parameters are realized, is constructed.

Next, in step S202, the CPU 102 acquires, in time series and via the communication section I/F 114, the unknown input data 4 (electrical resistances) that are subjects in estimating the contacting object that applied a pressure stimulus to the electrically-conductive urethane 22.

Next, in step S204, by using the learning model 51 acquired in step S200, the CPU 102 estimates the output data 6 (the type and state of the unknown contacting object) that correspond to the input data 4 (the electrical resistances) acquired in step S202.

In next step S206, the CPU 102 outputs the output data 6 (the type and state of the contacting object) that are the results of estimation via the communication section I/F 114, or outputs the data such that sound is emitted from the speaker 118, or outputs the data so as to be displayed on the display portion 211, and ends the present processing routine. Further, on the basis of the output data 6 (the type and state of the contacting object) that are the results of estimation, the control device 250 maintains various postures of the robot 2 or executes various behaviors. For example, in a case in which the estimated state of the contacting object is "tapping", the control device 250 switches the on/off state of the power source of the robot 2. Due thereto, the torso portion 220 of the robot 2 functions as a large switch. Further, in a case in which the estimated state of the contacting object is "rubbing", the control device 250 slows the speed of the behavior of the robot 2.

Note that the estimating processing relating to the present embodiment is an example of the processing executed by the estimating method of the present disclosure.

As described above, in accordance with the present disclosure, the type and the state of a contacting object can be estimated from the input data 4 (electrical resistances) that vary in accordance with a pressure stimulus at the contacting object 3, with respect to the electrically-conductive urethane 22. Namely, types and states of unknown contacting objects can be estimated without using a special device or a large device and without directly measuring deformation of a flexible member.

Further, the electrical characteristics vary in accordance with the contacting object, and the features of the contacting object are reflected in these electrical characteristics (time-series electrical resistances). Therefore, the type and state of a contacting object can be estimated from electrical resistance values that vary in time series at the electrically-conductive urethane 22. Namely, even if there are various contacting objects, the type and the state of the appropriate contacting object can be estimated by using the above-described learning model. For example, it can be discerned what has hit the torso portion 220, and it can be discerned who has, and to what extent they have, hugged the torso portion.

At the contacting object estimating device 1 relating to the present embodiment, the types and states of various contacting objects corresponding to electrical characteristics can be estimated by inputting electrical characteristics of the electrically-conductive urethane 22, by using the learning model 51 that is trained by the above-described learning processing.

Note that, as described above, the present embodiment describes a case in which an electrically-conductive urethane is used as an example of the flexible member, but the flexible member is, of course, not limited to electrically-conductive urethane provided that it is a material that is electrically conductive.

Further, the above embodiment describes a case which types and states of various contacting objects corresponding to the electrical characteristics of the electrically-conductive urethane 22 are estimated by using the learning model 51 that is trained by the above-described learning processing. In this case, when focusing on detecting a contact state in which a figure that serves as the contacting object contacts the contour portion 27, the contacting object estimating device 1 can be used as a contact detecting device that detects the contact of the robot 2 by a figure from time-series electrical characteristics.

Further, the electrical characteristics of the electrically-conductive urethane 22 may be detected independently at the front portion (the abdomen) and the rear portion (the back) of the torso portion 220. In this case, an action such as hugging from the front, or tackling from the rear, or the like can be estimated.

### [Fourth Embodiment]

A fourth embodiment of the present disclosure is described next. Because the fourth embodiment is structured similarly to the first embodiment through the third embodiment, the same portions are denoted by the same reference numerals, and there are cases in which detailed description is omitted.

By the way, in a case in which, for example, an operation for changing the posture of a robot is controlled at a robot at which posture changes are possible, it is thought to detect contact of at least one of a human body and an object with respect to the robot, or to detect a change in the shape of the robot, and to carry out control such that the robot becomes a predetermined posture.

However, in an aspect in which numerous, special touch sensors are provided and contact is detected, the touch sensors must be provided at respective regions for detecting contact, and the number of sensors becomes very large which leads to an increase in the size of the robot, and is therefore not preferable. Further, there is also the concern that the numerous, special touch sensors themselves will obstruct the contact state of the robot.

Further, in an aspect in which changes in shape are detected, a system that includes a camera or sensors that detect the light transmission amount in order to detect the deformation amount, and an analyzing device that analyzes the sensor outputs, and the like, becomes a large-scale system, which leads to an increase in the size of the robot, and therefore is not preferable. Further, sensors that detect deformation amounts must be placed at all regions of the robot in order to detect the deformation amounts, which is not preferable.

Accordingly, there is room for improvement in order to, by a simple structure, control operations of a robot in accordance with the contact or the like of at least one of a human body and an object with respect to the robot.

The present disclosure provides a robot control device, a robot control method, a robot control program and a robot system that can control the operation state of a robot by utilizing a robot state that has been estimated from electrical characteristics of a flexible material that is electrically conductive, by a simple structure and without using a special device.

The "operation state of the robot" in the present disclosure is a concept that includes robot states that are formed in a case in which at least some of the parts that structure a robot can be moved by operation, from the above-described robot states. For example, the operation states of the robot include predetermined (or predicted) robot states that are formed due to the operation of at least some parts, with respect to a robot state in which it is possible for energy such as pressure or the like to be applied to at least some of the parts of the robot.

The robot control device of the present disclosure detects, at a detecting section, electrical characteristics between plural detection points at a robot whose operation state can be controlled and that is provided with a flexible material that is electrically conductive and whose electrical characteristics vary in accordance with changes in applied pressure. A deriving section derives operation data expressing an operation state that the robot is to be changed into in accordance with a robot state estimated by a first learning model from electrical characteristics of the robot, and outputs the operation data to a driving section that drives the parts of the robot. The robot control device controls the operation state of the robot by driving at least some of the parts of the robot by the driving section on the basis of the operation data.

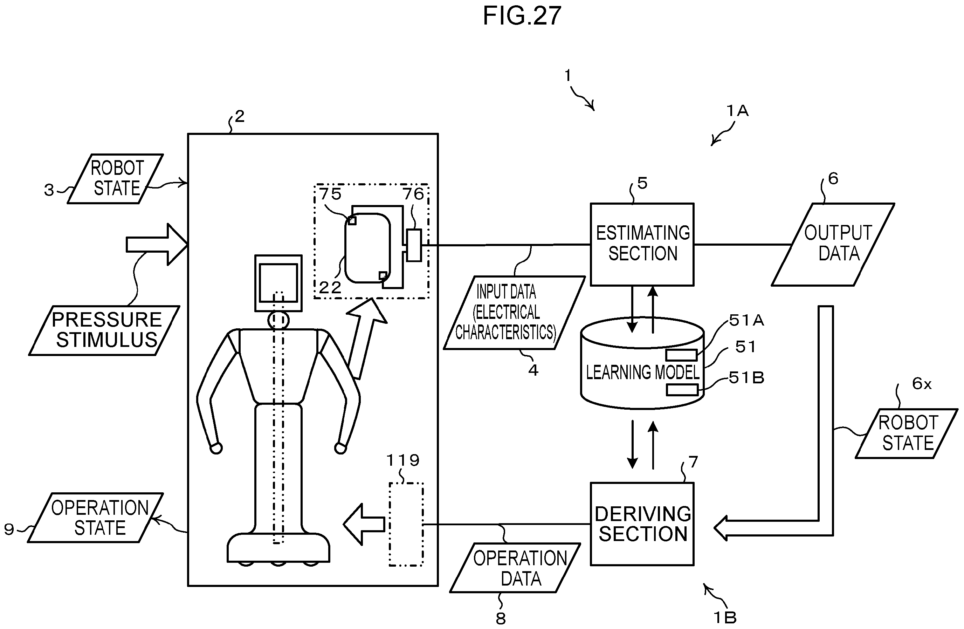

Fig. 27 illustrates an example of a robot control device serving as the estimating device of the present disclosure. Because the robot control device relating to the present embodiment is structured similarly to the above-described robot state estimating device 1, in the present embodiment, the above-described robot state estimating device 1 is called the robot control device 1. The robot control device 1 relating to the present embodiment includes a robot state estimating device 1A having an estimating function that estimates the robot state, and a robot driving device 1B that carries out robot driving.

The robot state estimating device 1A has the estimating section 5. Estimating processing that estimates the robot state is executed at the estimating section 5. By using the learning model 51 that has been trained, the estimating processing estimates the robot state at the robot 2 as an unknown robot state from the electrical characteristics (the input data 4) at the electrically-conductive urethane 22 disposed at the robot 2, and outputs the estimated robot state as the output data 6. Due thereto, the robot state can be estimated without using a special device or a large device and without directly measuring deformation of the contour of the robot 2. The learning model 51 is trained by using robot states (e.g., state values) as labels, and electrical characteristics of the electrically-conductive urethane in those robot states (i.e., the electrical resistance values of the electrically-conductive urethane disposed at the robot 2) as inputs. The estimating processing, and the training of the learning model 51 that is used in the estimating processing, are described later.

The robot driving device 1B has a deriving section 7. By using the robot state (the output data 6) estimated at the robot state estimating device 1A, the deriving section 7 executes control that transitions the robot 2 to an operation state of the robot 2 that corresponds to the estimated robot state. In this control, by using the learning model 51 that has been trained, operation data 8 (driving information) showing driving values of respective parts at the robot 2 is derived as data expressing the future robot state, e.g., the state that the robot 2 will transition to next, with respect to the current robot state of the robot 2, and the operation data 8 is outputted to the driving section 119. Due thereto, the robot 2 enters into an operation state 9 that corresponds to the estimated robot state, and control of the operation of the robot is possible by a simple structure and without using a special device. The learning model 51 is trained by using future robot states (e.g., operation state values including driving values) as labels, and robot states (i.e., states of the robot 2 estimated from electrical resistance values of the electrically-conductive urethane disposed at the robot 2) as inputs. The deriving processing, and the training of the learning model 51 that is used in the deriving processing, are described later.

Note that the present embodiment describes a case in which the learning model 51 is used in common at both the robot state estimating device 1A and the robot driving device 1B of the robot control device 1, but the present disclosure is not limited to this. For example, independent learning models may be used for the robot state estimating device 1A and the robot driving device 1B, respectively.

In the present embodiment, in order to simplify explanation, description is given of a case in which, as an example of the robot 2, a stand-alone robot system, which includes the above-described simple robot (Fig. 6), is used as the robot 2.

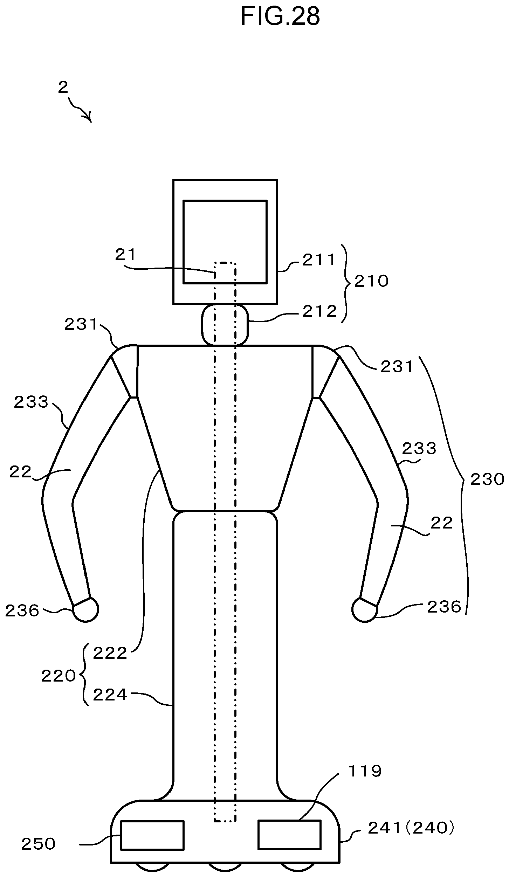

As illustrated in detail in Fig. 28, the robot 2 is made movable due to an unillustrated moving mechanism being provided at the base portion 241. The control device 250 that carries out control of the robot 2 is provided at the base portion 241. The control device 250 includes functional sections that operate as the robot state estimating device 1A and the robot driving device 1B, respectively.

Further, the robot 2 has the driving section 119 for moving the respective parts in cooperation with the skeleton 21, at a region other than the leg portion 240 that includes the base portion 241. Due to the driving of the driving section 119, the robot 2 can maintain various postures and execute various behaviors, by movement or deformation on a part-by-part basis, or by movements or deformation in which plural parts cooperate with one another. Namely, the robot 2 can control the operation state of the robot 2 by the driving of the driving section 119. Accordingly, the robot 2 operates as a stand-alone robot system. Note that, in order to display data on the display portion 211 included in the head portion 210, the driving section 119 functions also as a display driving section that outputs data for display to the display portion 211.

By the way, in order to estimate the robot state, the robot state estimating device 1A at the robot control device 1 detects electrical characteristics at the electrically-conductive urethane 22 that is disposed at the robot 2 (Fig. 8).

The electrical resistance values detected at the robot 2, which is structured so as to be provided with the electrically-conductive urethane 22 at the contour portion 27, vary in accordance with deformation of the electrically-conductive urethane 22 such as a pressure stimulus being applied to the contour portion 27 of the robot 2 or the like, and vary before and after this deformation. Accordingly, by detecting the time-series electrical resistance values, i.e., detecting changes in the electrical resistance values from a state in which a pressure stimulus is not applied to the robot 2 (e.g., detecting an electrical resistance value that exceeds a predetermined threshold value), urging of the robot 2 by a figure can be detected. Specifically, urged states, which express urging of the robot 2 by a figure, include contact states because even contact of the robot 2 by a figure involves a pressure stimulus. Accordingly, by placing the electrically-conductive urethane 22 at the robot 2, urging, which includes contact of the robot 2 by a figure, can be detected. Further, even if any one of the position, the distribution, and the magnitude of the pressure stimulus that is applied to the robot 2 varies, the electrical resistance values vary. Accordingly, it is possible to detect an urged state, which includes the contact position of a figure with respect to the robot 2, from the electrical resistance values that vary in time series.

Note that, as described above, as the contour portion 27 that includes the electrically-conductive urethane 22 formed at the robot 2, the contour portion 27 that includes the electrically-conductive urethane 22 may be formed as an integral structure at the outer side of the robot 2, or the contour portion 27 that includes independent electrically-conductive urethanes 22 may be formed part-by-part. Further, an even greater number of detection points may be used in order to improve the accuracy of detecting the electrical characteristics of the one electrically-conductive urethane 22 (refer to Fig. 9 through Fig. 11).

As illustrated in Fig. 27, the robot state estimating device 1A has the estimating section 5. The time-series input data 4 (electrical characteristics), which express the magnitudes (the electrical resistance values) of the electrical resistances at the electrically-conductive urethane 22, are inputted to the estimating section 5. Specifically, the electrical characteristics (i.e., the volume resistance values that are electrical resistance values), which are outputted from the electrical characteristic detecting section 76 that is connected to the detection points 75 of the electrically-conductive urethane 22, are inputted. The input data 4 correspond to the robot state 3 of the robot 2. Further, the estimating section 5 outputs the output data 6 that expresses a physical amount (a robot state value) expressing the unknown robot state that corresponds to the input data 4, as the results of estimation. Note that the estimating section 5 estimates the output data that expresses the unknown robot state, by using the learning model 51 that has been trained.

Further, as illustrated in Fig. 27, the robot driving device 1B has the deriving section 7. The robot state (the output data 6), which was estimated from the time-series input data (electrical characteristics) 4 at the robot state estimating device 1A, is inputted to the deriving section 7. The robot state (the output data 6), there are cases in which it is preferable to transition to the future, e.g., from the current robot state to the next operation state. Thus, the deriving section 7 derives the operation data 8 that expresses a physical amount for operating the robot 2 to an unknown operation state of the robot 2 that corresponds to the estimated robot state (the output data 6), and outputs the operation data 8 to the driving section 119. Accordingly, the robot 2 is driven so as to enter into the operation state 9. Note that the deriving section 7 derives the operation data 8, which expresses the operation state corresponding to the estimated robot state, by using the learning model 51 that has been trained.

The learning model 51 is a trained model that has been trained such that, when data is inputted thereto, the learning model 51 outputs data that expresses features of the inputted data or related information of the inputted data. Specifically, the learning model 51 includes, as the learning model used at the robot state estimating device 1A, a first learning model 51A that has been trained so as to derive the robot state (the output data 6) at the robot 2 from the electrical resistances of the electrically-conductive urethane 22 (the input data 4). Further, the learning model 51 includes, as the learning model used at the robot driving device 1B, a second learning model 51B that has been trained so as to derive, from the robot state estimated by the estimating section 5, the operation data 8 for controlling the robot to an operation state corresponding to that robot state. The learning model 51 is, for example, a model that prescribes a trained neural network, and is expressed as a collection of information of the weights (strengths) of the connections between the nodes (neurons) that structure the neural network.

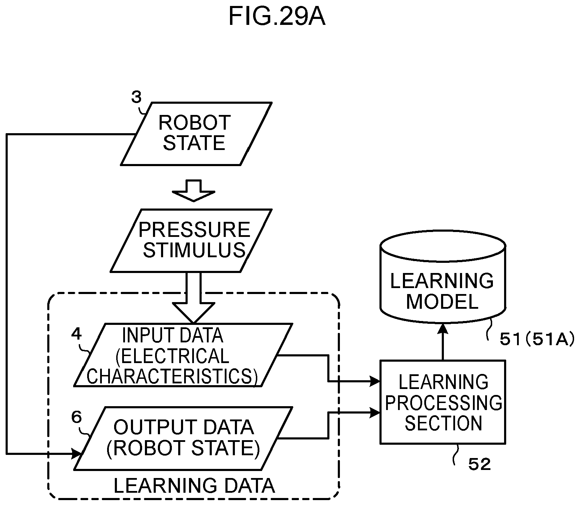

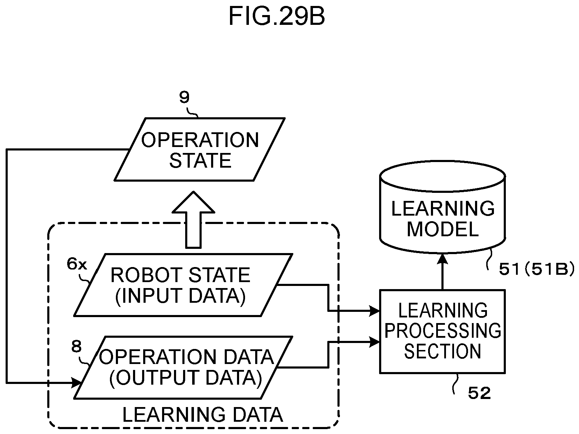

The learning model 51, which includes the first learning model 51A and the second learning model 51B, is generated by learning processing of the learning processing section 52 (Fig. 29A, Fig. 29B).

In order to generate the first learning model 51A, the learning processing section 52 carries out learning processing (Fig. 29A) by using electrical characteristics (the input data 4) at the electrically-conductive urethane 22 that vary due to the pressure stimulus generated by the robot state 3. Namely, a large amount of data, which is obtained by measuring in time series the electrical resistances at the electrically-conductive urethane 22 and whose labels are the robot states 3, is used as the learning data. Specifically, the learning data includes a large amount of sets of input data, which includes electrical resistance values (the input data 4), and information (the output data 6) expressing the robot states 3 that correspond to those input data. Here, the time-series information are set in correspondence by applying information that expresses the time of measurement to each of the electrical resistance values (the input data 4) of the electrically-conductive urethane 22. In this case, the time-series information may be set in correspondence by applying information, which expresses the time of measurement, to the sets of time-series electrical resistance values at the electrically-conductive urethane 22, in a time period that is set as the robot state 3.

Further, in order to generate the second learning model 51B, the learning processing section 52 carries out learning processing (Fig. 29B) by using the operation state 9 of the robot 2 that varies due to a robot state 6x that is estimated from the electrical characteristics of the electrically-conductive urethane 22. Namely, a large amount of data, which is obtained by measuring operation data for operating the robot 2 to the operation states corresponding to the robot states 6x that are estimated from the time-series electrical characteristics of the electrically-conductive urethane 22 and whose labels are the operation states 9 of the robot 2, is used as the learning data. Specifically, the learning data includes a large amount of sets of input data, which includes information (the output data 6) expressing the robot states 6x, and the operation data 8 corresponding to those input data, i.e., the operation data 8 (output data) that operate the robot 2 in correspondence with the robot states 6x. The operation data 8 are data for driving the parts of the robot 2 by the driving section 119.

Data corresponding to the robot states are an example of the learning data for generating the first learning model 51A. States such as a posture state which shows the static posture exhibited by one part or a combination of plural parts, and a behavior state showing a dynamic movement, and the like are used as the robot states. For example, it suffices to carry out driving control of the driving section 119 such that there is a behavior, such as a predetermined posture or movement or the like, by at least some of the parts of the robot 2, and to detect the electrical resistance values at this time, and to set these electrical resistance values in correspondence with the robot state (the robot state value), and use this data as the learning data. At the robot 2, due to energy such as pressure or the like being applied to at least some of the parts from a figure, the contour portion 27 deforms, and the electrical resistance values of the electrically-conductive urethane 22 vary. Therefore, the time-series electrical resistance values are detected and are set in correspondence with the robot state (the robot state value), and this data can be used as the learning data.

Further, data, which expresses the operation state that is the next state of operation of the robot 2 with respect to the estimated robot state, is an example of the learning data for generating the second learning model 51B. Data of a processing in which the robot issues a message corresponding to the estimated robot state, and the like are used as the operation state. Further, a state of responding to energy, such as pressure or the like applied to the robot 2 from a figure, also can be used as the operation state. For example, in a robot state in which the energy applied to the robot 2 is greater than a predetermined threshold value, and, thereafter, the robot 2 becomes unbalanced, it is preferable for the robot 2 to respond by transitioning to an operation state of maintaining balance. Specifically, it suffices to transition to an operation state with respect to a robot state at the time when a user hugs the torso portion 220 by an energy that is larger than a predetermined threshold value (a value that is determined such that the balance can be maintained). In this case, it suffices for the robot 2 to transition to, as an operation state that maintains balance, an operation state that maintains balance by the robot 2 moving, or by the part to which energy is applied or another part being moved and deformed, in order to suppress the energy that is applied.

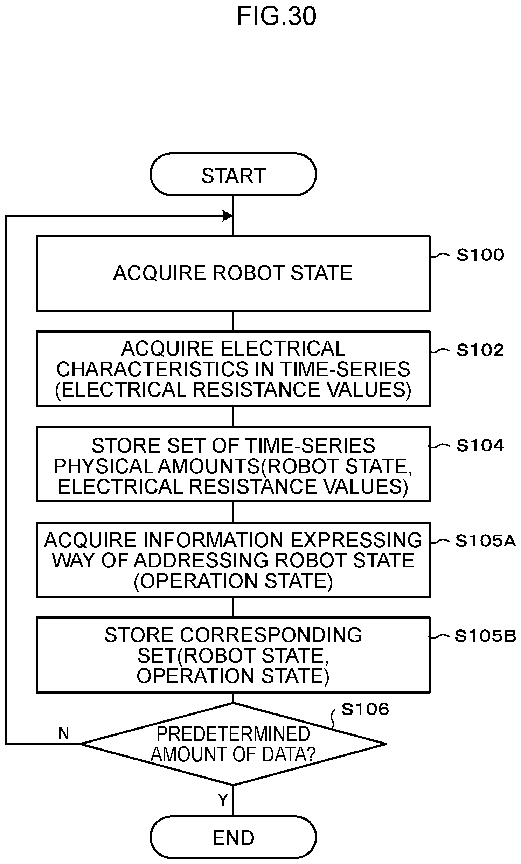

The learning processing section 52 can be structured to include a computer that includes an unillustrated CPU, and executes learning data collecting processing and learning processing. Fig. 30 illustrates an example of the learning data collecting processing executed by the unillustrated CPU. In step S 100, the learning processing section 52 acquires the robot state. In step S102, the learning processing section 52 acquires, in time-series, the electrical resistance values of the electrically-conductive urethane 22. In next step S104, the learning processing section 52 stores the set of physical amounts in which data (a robot state value), which expresses the robot state 3, is applied as a label to the acquired time-series electrical resistance values. In next step S105A, the learning processing section 52 acquires information (an operation state value) expressing the way of addressing the robot state. The operation data 8, which shows driving values for driving parts of the robot 2, is used as the operation state value. In next step S105B, the learning processing section 52 applies data (a robot state value), which expresses the robot state 3, as a label to the information (the operation state value) that expresses the way of addressing the acquired robot state, and stores this data as a corresponding set. Note that, in a case in which no information (operation state) expressing a way of addressing the robot state exists, the processings of step S 105A and step S105B may be omitted (skipped). The learning processing section 52 repeats the above-described processings until these sets of the robot state values and electrical resistance values of the electrically-conductive urethane 22 reach a predetermined number that has been set in advance or a predetermined time that has been set in advance (in step S106, the judgment is negative until the judgment becomes affirmative).

Due thereto, the learning processing section 52 can acquire, in time series, and can store the electrical resistance values at the electrically-conductive urethane 22 for each of the robot states 3, and these stored sets of time-series electrical resistance values of the electrically-conductive urethane 22 per robot state become the learning data. The stored sets of time-series electrical resistance values of the electrically-conductive urethane 22 per robot state are an example of the learning data of the first learning model 51A. Further, the learning processing section 52 can, per robot state 3, acquire and store information (an operation state value) expressing the way of addressing the robot state, and these stored corresponding sets of the operation state value per robot state also become the learning data. The corresponding sets of the operation state value per robot state that are stored are an example of the learning data of the second learning model 51B.

In a case in which, among the robot states, a figure urges the robot 2 together with a pressure stimulus such as contact or the like, as the urging force (pressing force) becomes larger from the urged state in which the figure contacts the contour portion 27, the electrical characteristics (electrical resistance values) vary greatly. Accordingly, by detecting that a time-series electrical characteristic has exceeded a threshold value that is set in advance for contact detection, at least an urged state in which a figure contacts the contour portion 27 can be detected. Accordingly, provided that learning processing is executed such that it is possible to estimate at least a robot state in which there is detected an urged state in which a figure contacts the contour portion 27, it suffices to use the time-series electrical characteristics, which correspond to the urging force (pressing force) that specifies the urged state of contact, as the learning data.

Accordingly, as described above, the pressure stimulus at the robot 2 varies in accordance with the robot state, and, by acquiring in time series the electrical characteristics corresponding to these changes in the pressure stimulus, the time-series electrical characteristics can be set in correspondence with the robot states and stored. Sets of these time-series electrical characteristics and robot state values that express the robot states can be made to be the learning data.

By the way, there are cases in which it is preferable for the robot 2 to transition to a predetermined operation state at the time when a pressure stimulus due to urging of a figure is applied to the robot 2, among the robot states. For example, as the urging force (pressing force) that a figure applies to the contour portion 27 becomes larger, the electrical characteristics (electrical resistance values) vary greatly. Accordingly, by detecting that a time-series electrical characteristic has exceeded a threshold value that is set in advance for transitioning to a predetermined operation state, it is possible to detect a state of urging of the contour portion 27 by a figure for transitioning to a predetermined operation state. Accordingly, provided that learning processing is executed such that it is possible to estimate a robot state in which there is detected an urged state for transitioning to a predetermined operation state, it suffices to use time-series electrical characteristics, which correspond to urging forces (pressing forces) that specify urged states, as the learning data.

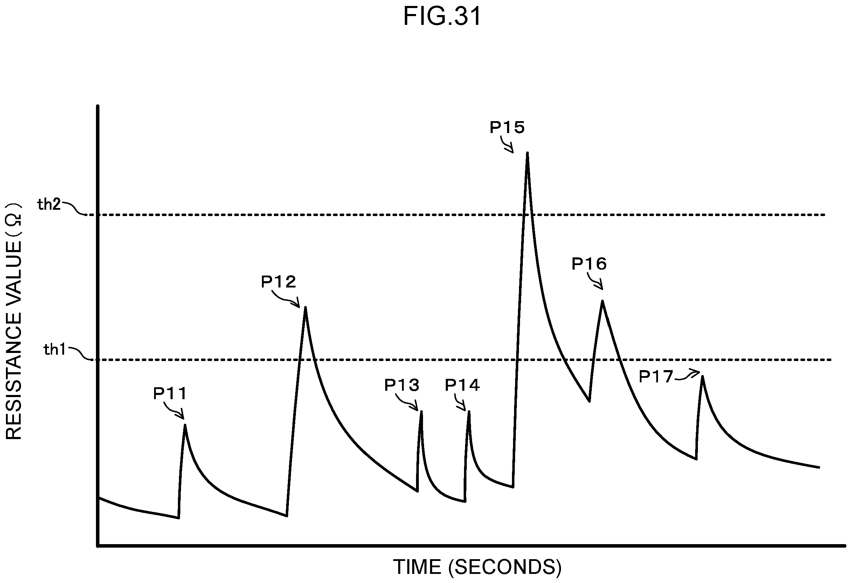

Fig. 31 illustrates, as an example, a schematic drawing of electrical characteristics at the torso portion 220 of the robot 2. Fig. 31 is a schematic drawing of electrical characteristics of the electrically-conductive urethane 22 that can be predicted technically for a user hugging the torso portion 220 of the robot 2 at different urging forces (pressing forces of peak values P1 ~ P17), based on predetermined electrical characteristics (e.g., the electrical characteristics illustrated in Fig. 19). In the drawing, peak values P11, P13, P14, P17 are the concept of electrical characteristics corresponding to robot states that do not constitute a user hugging the torso portion 220 of the robot 2. Further, peak values P12, P16 are the concept of electrical characteristics corresponding to robot states that are due to hugging of the torso portion 220. Moreover, peak value P15 is the concept of an electrical characteristic corresponding to a robot state that is due to a user hugging the torso portion 220 to the extent that the robot 2 loses its balance. Accordingly, the learning processing section 52 can carry out learning by using time-series electrical characteristics, which correspond to urging forces (pressing forces) that specify urged states of contact, as the learning data.

Each of the time-series electrical characteristics of the electrically-conductive urethane 22 (the before and after electrical characteristics including the respective peak values P11 ~ P17), which are illustrated as a schematic drawing in Fig. 31, can be considered to be a distinctive pattern in a robot state that corresponds to the urging force (pressing force) of the user with respect to the torso portion 220 of the robot 2. It can be thought that, in the time-series electrical characteristics, a pattern in which, when the torso portion 220 is pressed by the user, the electrical resistance value rises suddenly, and when the pressing is released (the user moves apart), the electrical resistance value gradually decreases, appears as a distinctive pattern. Further, the peak values P12, P16 are electrical resistance values that are large as compared with the peak values P11, P13, P14, P17. Therefore, by setting an electrical resistance value that exceeds the peak values P11, P13, P14, P17 as threshold value th1, it is possible to also detect an urged state (a state of hugging) in which a user contacts the contour portion 27 of the torso portion 220.

On the other hand, the peak value P15 is considered to transition to an even larger electrical resistance value as compared with the peak values P12, P16. Therefore, by setting an electrical resistance value that exceeds the peak values P12, P16 as threshold value th2, it is possible to also detect a state in which a user hugs the torso portion 220 to the extent that the robot 2 loses its balance. For example, when it is predicted that the robot 2 will enter into a robot state that is in accordance with an electrical resistance value exceeding the threshold value th2, processing may be executed in which the robot 2 moves and transitions to an operation state in which balance is maintained, in order to suppress the applied energy and as an operation state that maintains balance. Further, as an operation state that maintains balance, a processing that transitions the robot 2 to an operation state in which balance is maintained may be executed by moving or deforming the part to which energy is applied or another part.

Next, examples of the above-described learning data are shown in tables. Table 9 is an example of data in which time-series electrical resistance value data (r) and robot state values are set in correspondence with one another as learning data relating to robot states for generating the first learning model 51A. Table 10 through Table 12 are examples of data in which robot state values and operation state values are set in correspondence with one another as learning data relating to operation states for generating the second learning model 51B.

In the example shown in Table 9, the robot state values that express the robot states are examples shown as data that include three indices. The first index is data in which the object region of the inputted electrical characteristic is shown as a part. The second index is data in which the robot state, which corresponds to the inputted electrical characteristics, is shown as an estimated state. The third index is data in which a physical amount, such as the magnitude (strength) or a property or the like of a state in which the pressure, which is shown by the robot state corresponding to the inputted electrical characteristics, is applied, is shown as sensitivity. The examples shown in Table 1 are examples of learning data in which the respective indices that are the parts, the estimated states and the sensitivities are set in correspondence with the inputted electrical characteristics as the robot state values.

**[Table 9]**

| time-series electrical resistance value data | robot state (index) | | |
|---|---|---|---|
| | part | estimated state | sensitivity |
| r11, r12, r13, ..., r1n | arm | contact | weak/strong |
| r21, r22, r23, ..., r2n | hand | contact | contact/shape |
| r31, r32, r33, ..., r3n | torso | hugging | weak/strong |
| ... | ... | ... | ... |

The examples shown in Table 10 are examples of learning data in an aspect in which, as the operation states of the robot 2, the displaying of data on the display portion 211 or the like is made to be the way of addressing the robot state. In Table 10, the robot state is expressed by the above-described three indices, and is written as results of estimation by the processing (first processing) of estimating the robot state. Further, in the operation state columns, as the information of the operation state (operation state values), the processing at the robot 2 that is executed with respect to the robot state estimated from the electrical characteristics, is called the addressing processing, and the data that are used in the addressing processing are examples shown as the operation data.

**[Table 10]**

| robot state (indices): first processing (estimation) | | | operation state: second processing (driving) | |
|---|---|---|---|---|
| part | estimated state | sensitivity | addressing processing (operation) | operation data |
| arm | contact | weak/strong | display response | message (head portion) |
| hand | contact | contact/shape | | |
| torso | hugging | weak/strong | | |
| ... | ... | ... | ... | ... |

The examples shown in Table 11 are examples of learning data in an aspect in which, as the operation states of the robot 2, the execution of even more detailed estimation from the robot state estimated in the first processing is made to be the way of addressing the robot state. Table 11 shows that the robot 2 is operated such that more detailed estimation can be executed, by slightly moving or by sliding the hand of the robot 2 further by a driving value provided to the driving section 119, from a robot state that expresses that there is a state in which the object of contact that was estimated from the contact is smooth.

**[Table 11]**

| robot state (indices): first processing (estimation) | | | operation state: second processing (driving) | |
|---|---|---|---|---|
| part | estimated state | sensitivity | addressing processing (operation) | operation data |
| hand | contact | smooth | slight movement / sliding | driving values |
| ... | ... | ... | ... | ... |

The examples shown in Table 12 are examples of learning data in an aspect in which, as the operation states of the robot 2, operating the robot with respect to the robot state estimated in the first processing is made to be the way of addressing the robot state. Table 12 shows that the robot 2 is operated by using, as the operation data 8, driving values of the driving section 119 that operates the robot 2, as the processing for addressing the robot state.

**[Table 12]**

| robot state (indices): first processing (estimation) | | | operation state: second processing (driving) | |
|---|---|---|---|---|
| part | estimated state | sensitivity | addressing processing (operation) | operation data |
| torso | hugging | strong | maintain balance | driving values |
| arm | contact | tapping | avoid | driving values |
| | | | | |

The learning processing at the learning processing section 52 is described next. The above-described learning processing is carried out at the learning processing section 52 (Fig. 14). In the present embodiment, learning processing is executed by using the above-described robot states instead of applied stimulus states. Because the learning processing is similar to that described above, description thereof is omitted.

In the same way as described above, on the basis of errors computed at the computing unit 56, the learning processing section 52 carries out learning of the generating unit 54 that is the tuning of the weighting parameters of the connections between the nodes. Specifically, the learning processing section 52 feeds-back, to the generating unit 54, the weighting parameters of the connections between the nodes of the input layer 540 and the intermediate layer 542 at the generating unit 54, the weighting parameters of the connections between the nodes within the intermediate layer 542, and the weighting parameters of the connections between the nodes of the intermediate layer 542 and the output layer 544, respectively by using, for example, a method such as the gradient descent method or backpropagation or the like. Namely, the learning processing section 52 optimizes all of the connections between the nodes such that the errors between the generated output data 6A and the output data 6 that is the learning data are minimized, with the target thereof being the output data 6 that is the learning data.

The first learning model 51A is generated by the learning processing of the above-described learning processing section 52. The first learning model 51A is expressed as a collection of information of the weighting parameters (weights or strengths) of the connections between the nodes that are the results of learning by the learning processing section 52.

Note that, because the second learning model 51B is similar to the above-described first learning model 51A, detailed description thereof is omitted.

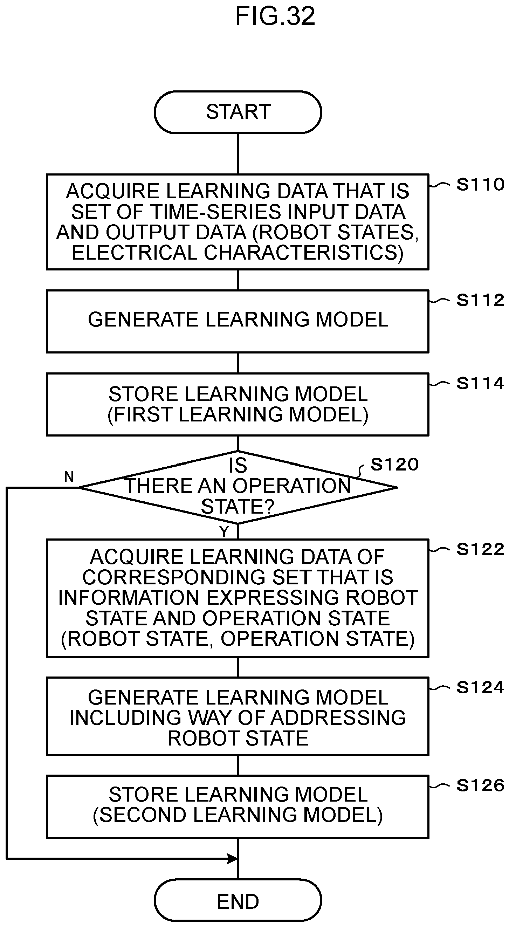

An example of the flow of the learning processing is illustrated in Fig. 32. In step S 110, the learning processing section 52 acquires the input data 4 (time-series electrical resistances) whose labels are information expressing robot states, i.e., learning data that are sets of robot state values and electrical resistance values. In step S112, the learning processing section 52 generates the learning model 51 by using the learning data. Namely, the learning processing section 52 obtains a collection of information of the weighting parameters (weights or strengths) of the connections between the nodes that are the results of learning that have been learned by using a large number of learning data as described above. Then, in step S114, the learning processing section 52 stores, as the first learning model 51A that is included in the learning model 51, data that is expressed as a collection of information of the weighting parameters (weights or strengths) of the connections between the nodes that are the results of learning.

Next, in step S120, the learning processing section 52 judges whether or not the operation data 8 (operation state values), which express operation states corresponding to the learning data that are the sets of robot state values and electrical resistance values, has been stored. If the judgment in step S120 is affirmative, the routine moves on to step S122. If the judgement is negative, the present processing routine ends.

In step S122, the learning processing section 52 acquires the operation data 8 (operation state values) expressing operation states whose labels are information (the robot state values) expressing robot states, i.e., acquires learning data of the corresponding sets of information expressing robot states and operation states. In step S124, the learning processing section 52 generates the learning model 51 by using learning data that are the corresponding sets. Namely, the learning processing section 52 acquires the collection of information of the weighting parameters (weights or strengths) of the connections between the nodes that are the results of learning, which were learned by using a large number of learning data as described above. Then, in step S126, the learning processing section 52 stores, as the second learning model 51B that is included in the learning model 51, the data expressed as the collection of information of the weighting parameters (weights or strengths) of the connections between the nodes that are the results of learning.

Note that the generating unit 54 may use a regression-type neural network having the function of generating the outputs while taking the before-after relationships of the time-series inputs into consideration, or may use another method.

Further, the robot control device 1 uses, as the learning model 51, the trained generating unit 54 that has been generated by the method exemplified above (i.e., data that is expressed as a collection of information of the weighting parameters of the connections between the nodes that are the results of learning). If the learning model 51 that has been sufficiently trained is used, it is possible to identify the robot state from time-series electrical resistance values at the robot 2, i.e., the electrically-conductive urethane 22 disposed at the contour portion 27, and to identify the operation state with respect to that robot state.

Note that the processing by the learning processing section 52 is an example of the processing that generates a learning model by using the deriving section of the present disclosure. Further, the robot control device 1 is an example of the deriving section and the control section of the present disclosure. The deriving section 7 is an example of the deriving section of the present disclosure. The driving section 119 is an example of the functional section that operates the robot at the time of controlling the robot at the control section of the present disclosure.

Further, as described above, the electrically-conductive urethane 22 can be treated as a reservoir that accumulates data relating to deformation of the electrically-conductive urethane 22. Namely, the robot control device 1 that includes the robot state estimating device 1A can use the electrically-conductive urethane 22 as a network model (PRCN) that is called a physical PRC (Fig. 16). Accordingly, it suffices to learn the estimation layer in the learning processing.

In the same way as in the above-described embodiments, the above-described robot control device 1 can be realized by causing a computer to execute a program expressing the above-described respective functions (Fig. 17).

Robot control processing at the robot control device 1, which is realized by a computer, is described next.

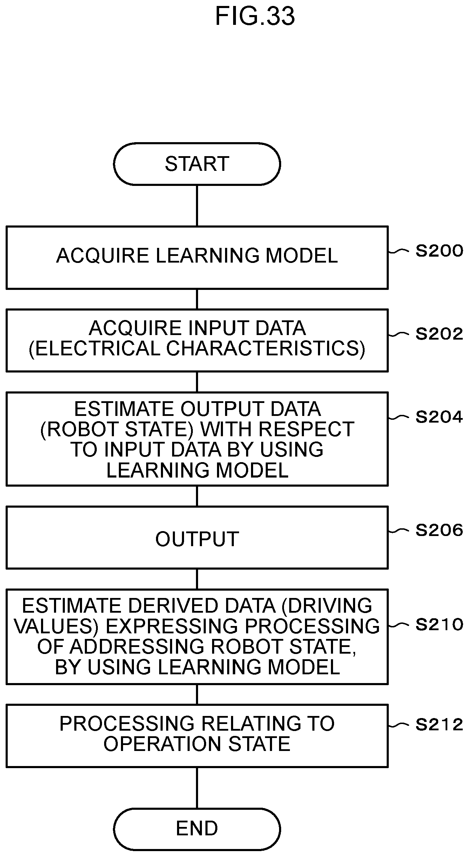

Fig. 33 illustrates an example of the flow of robot control processing in accordance with the control program 108P that is executed at the computer main body 100.
The robot control processing illustrated in Fig. 33 is executed by the CPU 102 when the power of the computer main body 100 is turned on. Namely, the CPU 102 reads-out the control program 108P from the auxiliary storage device 108, and expands the control program 108P in the RAM 104, and executes processings. In the present embodiment, the robot control processing includes estimating processing that estimates the robot state of the robot 2, and processing relating to robot control that corresponds to the estimated robot state.

First, the CPU 102 executes the estimating processing that estimates the robot state of the robot 2. Specifically, in step S200, the CPU 102 acquires the learning model 51 (i.e., the first learning model 51A) by reading-out the learning model 51 (i.e., the first learning model 51A) from the learning models 108M of the auxiliary storage device 108 and expanding the first learning model 51A in the RAM 104. Specifically, the CPU 102 expands, in the RAM 104, the network model (refer to Fig. 14 and Fig. 16) that is formed from the connections between the nodes in accordance with the weighting parameters, which are expressed as the first learning model 51A that is included in the learning model 51. Accordingly, the first learning model 51A, in which the connections between the nodes in accordance with weighting parameters are realized, is constructed.

Next, in step S202, the CPU 102 acquires, in time series and via the communication section 114, the unknown input data 4 (electrical resistances) that are subjects in estimating the robot state that is due to pressure stimulus applied to the electrically-conductive urethane 22.

Next, in step S204, by using the learning model 51 acquired in step S200 (i.e., the first learning model 51A), the CPU 102 estimates the output data (the unknown robot state) that correspond to the input data 4 (the electrical resistances) acquired in step S202.

Next, the CPU 102 executes processing relating to robot control that corresponds to the robot state estimated in step S204. Specifically, in step S206, the CPU 102 carries out output control that outputs the output data 6 (the robot state value expressing the robot state) that are the results of estimation. At least one processing among a processing that outputs the output data 6 to the exterior via the communication section 114, a processing that outputs a signal corresponding to the output data 6 to the speaker 118, a processing that outputs message data corresponding to the output data 6 to the display portion 211, or the like can be used as this output control. Note that the processing of step S206 may be included in the processing of step S212 that is described later.

Next, in step S210, by using the learning model 51 (i.e., the second learning model 51B), the CPU 102 derives the operation state value (the operation data 8) that expresses the operation state of the robot 2 that is information expressing how to address the estimated output data 6 (the unknown robot state). For example, data, which shows driving values for driving the parts of the robot 2, is derived as the operation state value (the operation data 8).

Next, in step S212, by using the information (the operation state value) expressing the way of addressing the derived robot state, the CPU 102 carries out control of the robot 2 by executing processing relating to the operation state such that the robot 2 transitions to the operation state, and ends the present processing routine. Specifically, the CPU 102 carries out control that outputs, to the driving section 119, driving values (the operation data 8) for driving parts of the robot 2. Due thereto, at the robot 2, the corresponding parts are driven at the robot 2 inputted to the driving section 119, and the robot 2 transitions to the operation state.

Note that the control processing illustrated in Fig. 33 is an example of the processing executed by the robot control method of the present disclosure. Further, the program for causing a computer to execute the control processing shown in Fig. 33 is an example of the robot control program of the present disclosure.

As described above, in accordance with the present disclosure, a robot state can be estimated from input data 4 (electrical resistances) that vary in accordance with a pressure stimulus in the robot states 3, with respect to the electrically-conductive urethane 22. Namely, an unknown robot state can be estimated without using a special device or a large device and without directly measuring deformation of a flexible member.

Further, the robot 2 can be operated to an operation state that shows the way of addressing the robot state. The operation state of the robot can be controlled by using the robot state that is estimated from the electrical characteristics of the electrically-conductive urethane 22, by a simple structure and without using a special device.

It was confirmed that, at the robot control device 1 relating to the present embodiment, by using the learning model 51 that is trained by the above-described learning processing, by inputting electrical characteristics of the electrically-conductive urethane 22, various robot states corresponding to the electrical characteristics can be estimated, and the robot 2 can be controlled as the way of addressing the robot state.

### [Fifth Embodiment]

A fifth embodiment of the present disclosure is described next. Because the fifth embodiment is structured similarly to at least one of the first embodiment through the fourth embodiment, the same portions are denoted by the same reference numerals, and there are cases in which detailed description is omitted.

By the way, for example, when detecting a slippage state of an object of grasping from a change in shape that arises at the time when a grasping member, such as a glove worn on a hand, or a hand of a robot, or the like, grasps the object of grasping, there is no alternative to providing an exclusive-use detector at the grasping member and detecting the slippage state from the change in shape of the grasping member. Further, because a complex and large-scale device is required in detecting a slippage state that arises at the time when an object of grasping is grasped, this is impractical.

The present disclosure provides an estimating device, an estimating method, an estimating program and a learning model generating device that can estimate a slippage state of the time when a grasping member grasps an object of grasping, by using electrical characteristics of the grasping member that has a flexible material that is electrically conductive and without using a special detecting device.

As described in the above embodiments, the state of an unknown applying side can be estimated from the electrical resistance values of the electrically-conductive urethane 22. Specifically, at the estimating device, it is possible to estimate the state of an applying side, such as a figure or the like, from the input data 4 (electrical characteristics) that vary in accordance with the stimulus applied to the electrically-conductive urethane 22 due to the state of the applying side. Namely, the state of the applying side, such as a figure or the like, can be estimated without using a special device or a large device, and without directly measuring deformation of the flexible member.

The estimating device relating to the present embodiment, which serves as the estimating device of the present disclosure, is structured similarly to the above-described robot state estimating device 1. Therefore, in the present embodiment, the above-described robot state estimating device 1 is called the estimating device 1, and detailed description of the structure of the estimating device 1 is omitted.

### <Estimation of Slippage State>

The present embodiment describes a case in which the above-described electrically-conductive urethane 22 is applied to a glove. In a case in which the electrically-conductive urethane 22 is applied to a glove, a pressure stimulus, which is partial compression of the glove, arises in accordance with the movement of grasping an object of grasping by the hand that is wearing the glove. Further, the slippage state, which expresses the ease of slippage of the object of grasping, differs in accordance with the grasping force by which the hand grasps the object of grasping, the way of grasping the object of grasping, the material of the glove, the weight of the object of grasping, the material of the object of grasping and the like. The slippage state can be estimated on the basis of time-series changes in the pressure applied to the electrically-conductive urethane 22. Therefore, the slippage state of the time when an object of grasping was grasped by a hand wearing a glove can be estimated by the estimating device 1 from time-series electrical resistance values of the electrically-conductive urethane 22. For convenience of explanation, hereinafter, the figure who is wearing glove G will simply be called the "figure".

Here, the slippage state includes, for example, states relating to the frictional force distribution between the object of grasping and the hand wearing the glove that is an example of the grasping member. Provided that the distribution of the frictional force between the object of grasping and the glove that includes the electrically-conductive urethane 22 is known, it is possible to estimate whether or not the object of grasping will slip out of the hand wearing the glove. Accordingly, the slippage state includes the extent of slipping-out of the object of grasping. Note that the slippage state is not limited to these, provided that it expresses the extent of slipping-out from between the grasping member and the object of grasping.

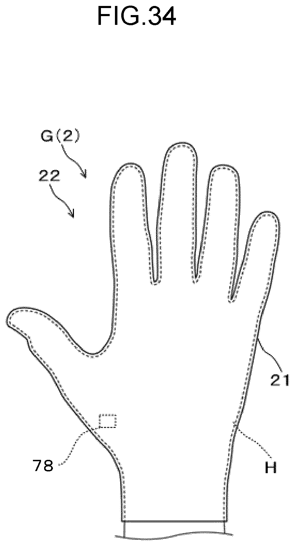

Fig. 34 is a drawing illustrating an example of applying the electrically-conductive urethane 22 to the glove G that serves as target object 2. Namely, the target object 2 to which pressure stimuli are applied is called the glove G. Here, the glove G is not limited to a structure that covers the entire hand, and, for example, may be a structure that does not cover the fingertip portions. Or, the glove G may not be a five-fingered glove G in which the respective fingers are separated, and may be a mitten-type glove G in which the respective fingers are not separated.

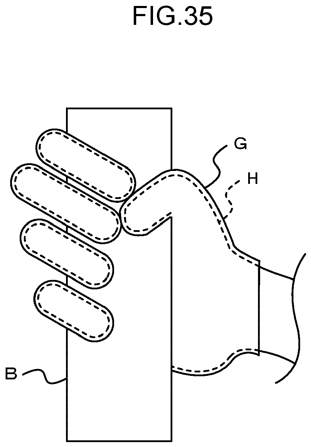

As illustrated in Fig. 35, a figure grasps object of grasping B by hand H that is wearing the glove G that includes the electrically-conductive urethane 22. Note that the electrically-conductive urethane 22 being included in the glove G means that the example of the arrangement of the electrically-conductive urethane 22 and members 21 that structure the glove G (in this case, cotton or chemical fibers) satisfies any of the arrangement examples of the electrically-conductive urethane 22 and the members 21 such as those illustrated in Fig. 4.

As illustrated in Fig. 34, the electrically-conductive urethane 22 is a shape that is substantially the same as the glove G, and, for example, is provided at the entire inner side of the glove G. Further, the glove G has a detecting unit 78.

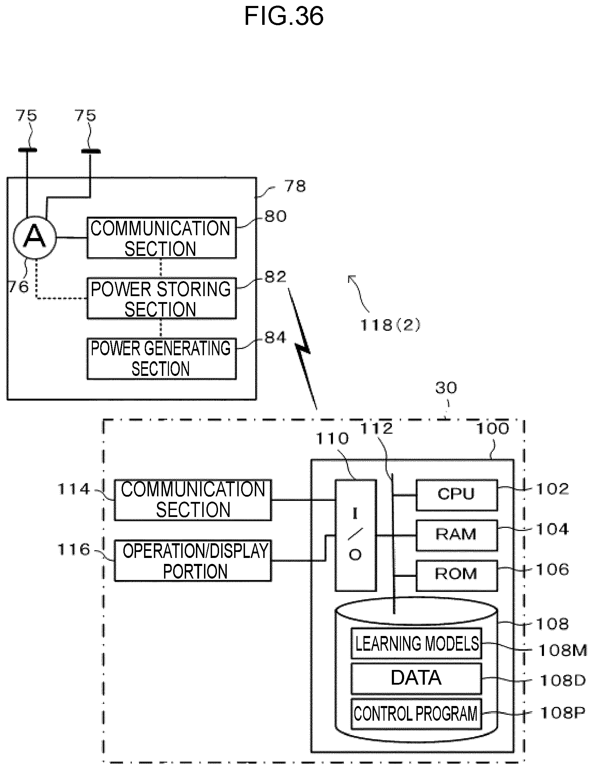

As illustrated in Fig. 36, the detecting unit 78 has the electrical characteristic detecting section 76 to which the plural detection points 75 provided at the electrically-conductive urethane 22 are connected, and a communication section 80, a power storing section 82, and a power generating section 84. Note that the positions and the numbers of the detection points 75 are set appropriately in accordance with the size and the shape of the glove G, such that changes in the electrical characteristics due to a pressure stimulus can be detected at the entire glove G.

The electrical characteristic detecting section 76 detects the electrical characteristics inputted from the detection points 75, and outputs the results of detection to the communication section 80.

The communication section 80 carries out communication with a portable terminal device 30 such as a smartphone or the like, and transmits, to the portable terminal device 30, the results of detection of the physical amounts, which express the electrical characteristics obtained from the detection points 75, of the electrical characteristic detecting section 76. The communication section 80 carries out communication with the portable terminal device 30 by short-range wireless communication such as, for example, Wi-Fi^{®} or Bluetooth^{®} or the like.

The power storing section 82 supplies electric power for the electrical characteristic detecting section 76 to detect the electrical characteristics, and power for the communication section 80 to communicate with the portable terminal device 30. For example, any of various types of rechargeable batteries, or a capacitor or the like is used as the power storing section 82, and the power storing section 82 is charged by electric power generated by the power generating section 84.

The power generating section 84 charges the power storing section 82 by generating power by any of various known methods and supplying the generated power to the power storing section 82. For example, the power generating section 84 may generate power by using a coil and a magnet, and by the magnet moving relatively within the coil in accordance with the swaying of the glove G. Or, the power generating section 84 may generate power by using a power generating element that converts energy such as light, heat, pressure, vibration or the like into electric power, or the like.

On the other hand, the portable terminal device 30 has the structures of the above-described computer main body 100 and communication section 114, and an operation/display portion 116.

The portable terminal device 30 functions as the estimating device 1. By using the learning model 51 that has been trained, the computer main body 100 estimates the slippage state of the time when the object of grasping B is grasped by the hand H wearing the glove G, from the electrical characteristics at the electrically-conductive urethane 22 provided at the glove G.

The communication section 114 carries out communication with the communication section 80 of the glove G, and acquires, from the glove G, the results of detection of physical amounts, which express electrical characteristics obtained from the detection points 75, of the electrical characteristic detecting section 76. The communication section 114 communicates with the portable terminal device 30 by short-range wireless communication such as, for example, Wi-Fi^{®} or Bluetooth^{®} or the like.

The operation/display portion 116 corresponds to an example of the outputting section, and displays the slippage state of the time when the object of grasping B is grasped by the hand H wearing the glove G, e.g., the frictional force distribution or the like, that is estimated by the computer main body 100. Due thereto, it can be understood whether or not it seems as if the object of grasping B will slip out.

In the estimating processing at the portable terminal device 30, by using the learning model 51 that has been trained, the frictional force distribution or the like for example is estimated and outputted as the unknown slippage state of the time when the object of grasping B is grasped by the hand H wearing the glove G. Due thereto, the slippage state of the time when the object of grasping B is grasped by the hand H wearing the glove G can be identified, without using a special device or a large device and without directly measuring the deformation of the electrically-conductive urethane 22 included in the glove G. Accordingly, in order to estimate, from the electrical characteristics at the electrically-conductive urethane 22, the slippage state of the time when the object of grasping B is grasped by the hand H wearing the glove G, at the portable terminal device 30, the learning model 51, which estimates the slippage state of the time when the object of grasping B is grasped by the hand H wearing the glove G from the electrical characteristics at the electrically-conductive urethane 22, is stored in the auxiliary storage device 108.

The learning processing that generates the learning model 51 for estimating slippage state information of the time when the object of grasping B is grasped by the hand H wearing the glove G, is described next.

In the same way as the learning processing section illustrated in Fig. 12, in the learning data collecting processing, the learning processing section 52 of the learning model generating device relating to the present embodiment collects, as the learning data, a large amount of the input data 4 that is obtained by measuring electrical resistance values at the electrically-conductive urethane 22 in time series and whose labels are the state data 3 expressing slippage states of times when the object of grasping B is grasped by the hand H wearing the glove G.

Specifically, in the learning data collecting processing, the electrical characteristics (e.g., electrical resistance values) of the electrically-conductive urethane 22, which is included in the glove G and to which a pressure stimulus is applied due to the object of grasping B being grasped by the hand H wearing the glove G, are acquired in time series from the electrical characteristic detecting section 76 mounted to the glove G. Next, the state data 3 is applied as a label expressing the slippage state to the input data 4 that are the acquired time-series electrical characteristics, and plural learning data, in which the state data 3 and the input data 4 are combined, are prepared.

Hereinafter, explanation is given by using electrical resistance values as examples of the electrical characteristics of the electrically-conductive urethane 22 included in the glove G. However, the fact that current values or voltage values may be used as the electrical characteristics of the electrically-conductive urethane 22 is the same as described above.

For example, the data sets shown in above-described Table 1 are used as the learning data that is used in estimating slippage state information of times when the object of grasping B is grasped by the hand H wearing the glove G. The data sets of Table 1 in a case of applying the electrically-conductive urethane 22 to the glove G are data sets in which time-series electrical resistance value data (r) obtained from the glove G, and state data (R) expressing states of slippage of times when the object of grasping B is grasped by the hand H wearing the glove G, are set in correspondence with one another.

In this case, the above-described states R1 ~ Rk are slippage states R1 ~ Rk with respect to the hand H that is wearing the glove G. Examples of slippage states are, as described above, the frictional force distribution, the extent of slipping-out of the object of grasping B, and the like.

The learning processing section 52 generates the learning model 51 by the above-described learning model generating processing by using learning data in which such time-series electrical resistance value data (r) and state data (R) expressing slippage states with respect to the hand H wearing the glove G are set in correspondence with one another.

The estimating device 1 estimates the slippage state of the time when the object of grasping B is grasped by the hand H wearing the glove G, from unknown time-series electrical resistance value data at the electrically-conductive urethane 22, by executing the estimating processing illustrated in Fig. 7 by using the learning model 51 that relates to the slippage state and that has been machine-trained as to the relation between distinctive patterns, which are expressed by time-series electrical resistance value data of the electrically-conductive urethane 22, and slippage states of times when the object of grasping B is grasped by the hand H wearing the glove G.

Specifically, processings that are similar to the processings shown in Fig. 18 are carried out. Namely, in the same way as in step S200, the CPU 102 of the estimating device 1 acquires the learning model 51 that relates to the slippage state of the time when the object of grasping B is grasped by the hand H wearing the glove G. In the same way as in step S202, the CPU 102 acquires, as the input data 4, the time-series electrical resistance value data that is transmitted from the electrical characteristic detecting section 76 provided at the glove G that is the object of estimation of the slippage state.

Note that the acquired input data 4 may be the input data 4 that is obtained in real time from the glove G during the time period of execution of the estimating processing, or may be the input data 4 that was obtained in advance before execution of the estimating processing.

Next, in the same way as in step S204, the CPU 102 inputs the acquired input data 4 to the acquired learning model 51, and acquires the output data 6 outputted from the learning model 51. The CPU 102 estimates, as the slippage state of the time when the object of grasping B is grasped by the hand H wearing the glove G, the slippage state that corresponds to the state data 3, which is the closest to the output data 6, among the state data 3.

Next, in the same way as in step S206, the CPU 102 outputs slippage state information expressing the estimated slippage state of the time when the object of grasping B is grasped by the hand H wearing the glove G. For example, the CPU 102 may display the frictional force distribution on the operation/display portion 116, or may display the extent of the object of grasping B slipping-out on the operation/display portion 116.

In this way, in accordance with the estimating device 1 relating to the present embodiment, the electrically-conductive urethane 22 is applied to the glove G, and the slippage state of the time when the object of grasping B is grasped by the hand H wearing the glove G is estimated from the output data 6 that is obtained due to unknown time-series electrical characteristics, which correspond to a slippage state of a time when the object of grasping B is grasped by the hand H wearing the glove G, being inputted to the learning model 51 that has machine-learned in advance the relation between time-series electrical characteristics of the electrically-conductive urethane 22 that vary in accordance with the pressure stimulus generated due to the object of grasping B being grasped by the hand H wearing the glove G, and slippage state information expressing states of slippage at times when the object of grasping B is grasped by the hand H wearing the glove G.

Accordingly, by the estimating device 1 relating to the present embodiment, for example, it is possible to estimate the slippage state of a time when the object of grasping B is grasped by the hand H wearing the glove G that was described above, and it is possible to display the estimated slippage state on the operation/display portion 116. Due thereto, it is possible to encourage the grasping of the object of grasping in an appropriate grasped state.

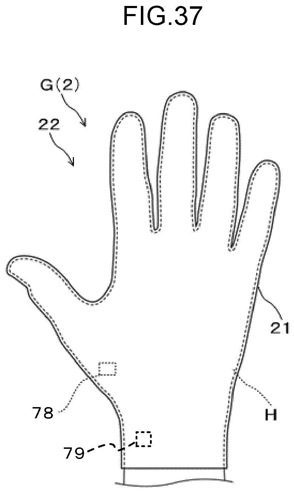

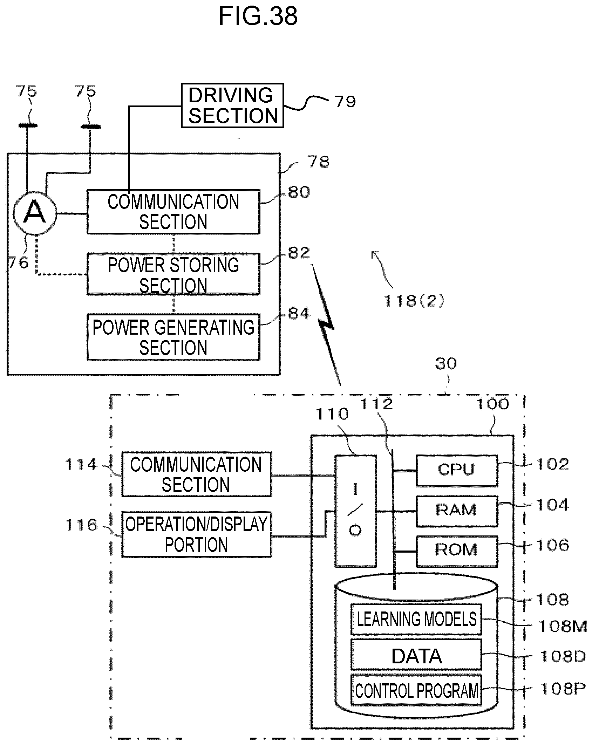

By the way, the glove G may be structured such that the grasping state can be adjusted automatically, and the grasping state may be controlled automatically on the basis of the estimated slippage state information. Here, the grasping state includes at least one of the grasping force and the way of grasping. The way of grasping expresses how the object of grasping is grasped, and, for example, includes the shape of the glove G at the time of grasping the object of grasping. In this case, as illustrated in Fig. 37, the glove G is made to be a structure provided with a driving section 79 for adjusting the grasping state of the glove G. As illustrated in Fig. 38, the driving section 79 can communicate with the portable terminal device 30 via the communication section 80.

The computer main body 100 of the portable terminal device 30 functions as a control section, and, on the basis of the estimated slippage state information, transmits a control signal for controlling the grasping state to the glove G via the communication section 114. Due thereto, at the glove G, the control signal from the portable terminal device 30 is received via the communication section 80, and the driving section 79 controls the grasping state of the glove G on the basis of the received control signal.

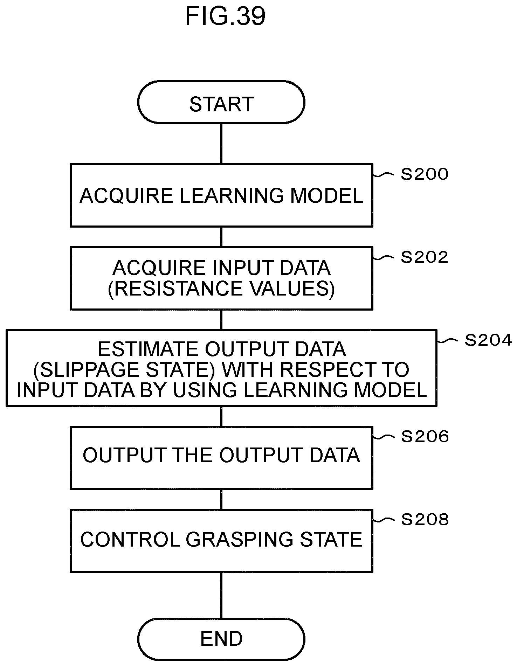

A flowchart of the control processing in a case of controlling the grasping state of the glove G is illustrated in Fig. 39. The control processing of Fig. 39 is processing in which step S208 is added to the estimating processing of Fig. 18, and, because the processings of steps S200 ~ S206 are the same as those of Fig. 18, description thereof is omitted.

In step S208, the grasping state of the glove G is controlled on the basis of the slippage state estimated in step S204. For example, in a case in which the estimated slippage state expresses a state in which the object of grasping B will slip out, a control signal instructing a change in the grasping state is transmitted so that the object of grasping does not slip out. Due thereto, the driving section 79 of the glove G changes the grasping state of the glove G such that the object of grasping does not slip out. Namely, for example, the grasping force is strengthened, or the way of grasping the object of grasping is changed. On the other hand, in a case in which the estimated slippage state expresses a state in which the object of grasping B will not slip out, a control signal that instructs maintaining of the grasping state is transmitted. Due thereto, the grasping state of the object of grasping B by the glove G can be controlled automatically. Therefore, for example, it is possible to support the operation of grasping the object of grasping B by a figure whose hand force has weakened.

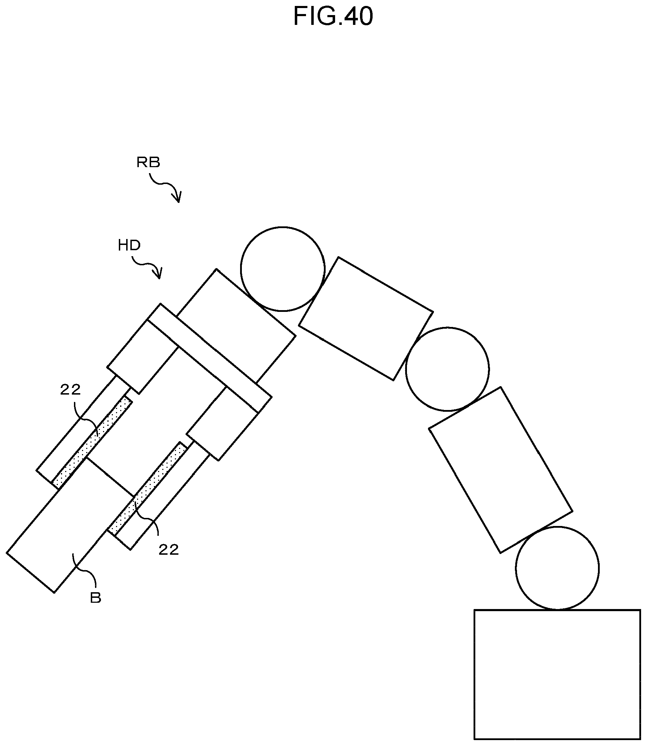

Note that the present embodiment describes a case in which the grasping member is the glove G, but the grasping member may be a hand of a robot. For example, as illustrated in Fig. 40, there is a structure in which the electrically-conductive urethane 22 is provided at a hand HD of a robot RB. In this case, in a case in which the slippage state of the time when the hand HD grasps the object of grasping B expresses a state in which the object of grasping B will slip out, the grasping state of the hand HD is changed such that the object of grasping B will not slip out. On the other hand, in a case in which the slippage state of the time when the hand HD grasps the object of grasping B expresses a state in which the object of grasping B will not slip out, the state of grasping the object of grasping is maintained. In this way, because the grasping state is controlled automatically such that the object of grasping B does not slip out, it is possible to prevent the object of grasping B slipping out.

### [Aspects relating to the Technique of the Present Disclosure]

As described above, the technique of the present disclosure can estimate various states by utilizing electrical characteristics of a flexible material that is electrically conductive, and without using a special detecting device. Further, the technique of the present disclosure includes various processings being realized by software structures or hardware structures using a computer, and therefore includes the following aspects.

A first aspect of the present disclosure is an estimating device including:
a detecting section detecting electrical characteristics between a plurality of predetermined detection points of a flexible material that is electrically conductive, the electrical characteristics of the flexible material varying in accordance with changes in applied pressure, and the flexible material being disposed so as to cover or can cover at least a portion of a projecting portion that is bendable from a base body of a movable body; and
an estimating section that inputs time-series electrical characteristics detected by the detecting section to a learning model that is trained by using, as learning data, time-series electrical characteristics at times at which pressure is applied to the flexible material, and applied stimulus state information expressing applied stimulus states in which pressure is applied to the flexible material, such that the time-series electrical characteristics are inputs of the learning model and the learning model outputs the applied stimulus state information, and the estimating section estimates applied stimulus state information expressing an applied stimulus state corresponding to the inputted time-series electrical characteristics.

In a second aspect, in the estimating device of the first aspect,
the electrical characteristics are volume resistances,
the robot state includes an urged state that includes contact of a figure with respect to the robot, and
the learning model is trained so as to output, as the robot state information, information that expresses an urged state of a figure corresponding to the detected electrical characteristics.

In a third aspect, in the estimating device of the first aspect or the second aspect,
the flexible material includes materials at which electrical conductivity is imparted to at least a portion of a urethane material of a structure that is at least one of fiber-like and mesh-like, or a structure in which a plurality of minute air bubbles are scattered at an interior thereof.

In a fourth aspect, in the estimating device of any one of the first aspect through the third aspect,
the flexible material is disposed at a periphery of a skeleton of the robot, and is formed of a material whose hardness becomes harder as the flexible material approaches the skeleton of the robot, or is formed by a plurality of materials of different hardnesses being layered such that the hardnesses become harder as the flexible material approaches the skeleton of the robot.

In a fifth aspect, in the estimating device of any one of the first aspect through the fourth aspect,
the flexible material is disposed at a plurality of different regions of the robot,
the detecting section detects electrical characteristics between a plurality of the detection points at each of the plurality of different regions, and
the learning model is trained so as to output, as the robot state information, parts state information expressing a parts state for each of the plurality of different regions.

In a sixth aspect, in the estimating device of any one of the first aspect through the fifth aspect,
the learning model includes a model generated by learning by using a network that uses the flexible material as a reservoir and is in accordance with reservoir computing using the reservoir.

A seventh aspect is a robot system comprising:
a robot having a flexible material, which is electrically conductive the electrical characteristics vary in accordance with changes in applied pressure, at at least a portion of a contour portion; and
the estimating device.

An eighth aspect is estimating method in which a computer:
acquires electrical characteristics from a detecting section that detects the electrical characteristics between a plurality of predetermined detection points of a flexible material that is electrically conductive, the electrical characteristics vary in accordance with changes in applied pressure, and that is at a robot at which the flexible material is provided at at least a portion of a contour portion; and
inputs time-series electrical characteristics detected by the detecting section to a learning model that is trained by using, as learning data, time-series electrical characteristics at times when pressure is applied to the flexible material, and robot state information expressing robot states in which pressure is applied to the flexible material, such that the time-series electrical characteristics are inputs of the learning model and the learning model outputs the robot state information, and the computer estimates robot state information expressing a robot state corresponding to the inputted time-series electrical characteristics.

A ninth aspect is an estimating program for causing a computer to execute processings of:
acquiring electrical characteristics from a detecting section that detects the electrical characteristics between a plurality of predetermined detection points of a flexible material that is electrically conductive, the electrical characteristics vary in accordance with changes in applied pressure, and that is at a robot at which the flexible material is provided at at least a portion of a contour portion; and
inputting time-series electrical characteristics detected by the detecting section to a learning model that is trained by using, as learning data, time-series electrical characteristics at times when pressure is applied to the flexible material, and robot state information expressing robot states in which pressure is applied to the flexible material, such that the time-series electrical characteristics are inputs of the learning model and the learning model outputs the robot state information, and the computer estimates robot state information expressing a robot state corresponding to the inputted time-series electrical characteristics.

A tenth aspect is a learning model generating device comprising:
a learning model generating section generating a learning model whose inputs are electrical characteristics from a detecting section that detects the electrical characteristics between a plurality of predetermined detection points of a flexible material that is electrically conductive, the electrical characteristics vary in accordance with changes in applied pressure, and that is at a robot at which the flexible material is provided at at least a portion of a contour portion, and the learning model outputs robot state information expressing a robot state in which pressure is applied to the flexible material.

In accordance with the present disclosure, there is the effect that robot state information expressing a robot state can be estimated by using the electrical characteristics of a flexible material that is electrically-conductive, and without using a special detecting device.

An eleventh aspect of the present disclosure is an estimating device comprising:
a detecting section detecting electrical characteristics between a plurality of predetermined detection points of a flexible material that is electrically conductive, the electrical characteristics of the flexible material varying in accordance with changes in applied pressure, and that is disposed so as to cover or can cover at least a portion of a projecting portion that is bendable from a base body of a movable body; and
an estimating section that inputs time-series electrical characteristics detected by the detecting section to a learning model that is trained by using, as learning data, time-series electrical characteristics at times at which pressure is applied to the flexible material, and applied stimulus state information expressing applied stimulus states in which pressure is applied to the flexible material, such that the time-series electrical characteristics are inputs of the learning model and the learning model outputs the applied stimulus state information, and the estimating section estimates applied stimulus state information expressing an applied stimulus state corresponding to the inputted time-series electrical characteristics.

In a twelfth aspect, in the estimating device of the eleventh aspect,
the electrical characteristics are volume resistances,
the movable body is a robot whose torso portion is the base body and at which at least one of a hand portion and a leg portion that is connected to the torso portion is the projecting portion, and
the flexible material is disposed at a periphery of a skeleton of the at least one of the hand portion and the leg portion of the robot.

In a thirteenth aspect, in the estimating device of the eleventh aspect or the twelfth aspect,
the flexible material is disposed at an external member that can be attached to and removed from an outer side of the projecting portion.

In a fourteenth aspect, in the estimating device of any one of the eleventh aspect through the thirteenth aspect,
the applied stimulus state includes at least one state among a state expressing a surface shape, a state expressing a surface property, a state expressing weight and a state expressing hardness, of at least one of a human body and an object.

In a fifteenth aspect, in the estimating device of
any one of the eleventh aspect through the fourteenth aspect,
   the flexible material includes materials at which electrical conductivity is imparted to at least a portion of a urethane material of a structure that is at least one of fiber-like and
mesh-like, or a structure in which a plurality of minute air bubbles are scattered at an interior thereof.

In a sixteenth aspect, in the estimating device of the fifteenth aspect,
the flexible material is formed of a material whose hardness becomes harder from a surface toward an interior of the projecting portion, or is formed by a plurality of materials of different hardnesses being layered such that the hardnesses become harder from the surface toward the interior of the projecting portion.

In a seventeenth aspect, in the estimating device of any one of the eleventh aspect through the sixteenth aspect,
the learning model includes a model generated by learning by using a network that uses the flexible material as a reservoir and is in accordance with reservoir computing using the reservoir.

An eighteenth aspect is estimating method in which a computer:
acquires electrical characteristics from a detecting section that detects the electrical characteristics between a plurality of predetermined detection points of a flexible material that is electrically conductive, the electrical characteristics of the flexible material varying in accordance with changes in applied pressure, and that is disposed so as to cover or can cover at least a portion of a projecting portion that is bendable from a base body of a movable body; and
inputs the acquired time-series electrical characteristics to a learning model that is trained by using, as learning data, time-series electrical characteristics at times at which pressure is applied to the flexible material, and applied stimulus state information expressing applied stimulus states in which pressure is applied to the flexible material, such that the time-series electrical characteristics are inputs of the learning model and the learning model outputs the applied stimulus state information, and the computer estimates applied stimulus state information expressing an applied stimulus state corresponding to the inputted time-series electrical characteristics.

A nineteenth aspect is an estimating program for causing a computer to execute processings of:
acquiring electrical characteristics from a detecting section that detects the electrical characteristics between a plurality of predetermined detection points of a flexible material that is electrically conductive, the electrical characteristics of the flexible material varying in accordance with changes in applied pressure, and that is disposed so as to cover or can cover at least a portion of a projecting portion that is bendable from a base body of a movable body; and
inputting the acquired time-series electrical characteristics to a learning model that is trained by using, as learning data, time-series electrical characteristics at times at which pressure is applied to the flexible material, and applied stimulus state information expressing applied stimulus states in which pressure is applied to the flexible material, such that the time-series electrical characteristics are inputs of the learning model and the learning model outputs the applied stimulus state information, and the computer estimates applied stimulus state information expressing an applied stimulus state corresponding to the inputted time-series electrical characteristics.

A twentieth aspect is a learning model generating device comprising:
a learning model generating section generating a learning model whose inputs are electrical characteristics detected by a detecting section that detects the electrical characteristics between a plurality of predetermined detection points of a flexible material that is electrically conductive, the electrical characteristics of the flexible material varying in accordance with changes in applied pressure, and that is disposed so as to cover or can cover at least a portion of a projecting portion that is bendable from a base body of a movable body, and the learning model outputs applied stimulus state information expressing an applied stimulus state in which pressure is applied to the flexible material.

In accordance with the present disclosure, there is the effect that an applied stimulus state, in which pressure is applied to a flexible material that is electrically-conductive, can be estimated by using the electrical characteristics of the flexible material and without using a special detecting device.

A twenty-first aspect of the present disclosure is an estimating device comprising:
a detecting section detecting electrical characteristics between a plurality of predetermined detection points of a flexible material that is electrically conductive, the electrical characteristics of the flexible material varying in accordance with changes in applied pressure, and that is at a robot at which the flexible material is provided at at least a portion of a torso portion; and
an estimating section that inputs time-series electrical characteristics detected by the detecting section to a learning model that is trained by using, as learning data, time-series electrical characteristics at times at which pressure is applied to the flexible material by an object, and contacting object information expressing objects that applied pressure to the flexible material, such that the time-series electrical characteristics are inputs of the learning model and the learning model outputs the contacting object information, and the estimating section estimates contacting object information expressing an object that applied pressure to the flexible material and that corresponds to the inputted time-series electrical characteristics.

In a twenty-second aspect, in the estimating device of the twenty-first aspect,
the electrical characteristics are volume resistances,
the contacting object information includes a type of an object that applied pressure to the flexible material or a state of the object, and
the learning model is trained so as to output, as the contacting object information, information expressing the type of the object that applied pressure to the flexible material or the state of the object, which corresponds to the detected electrical characteristics.

In a twenty-third aspect, in the estimating device of the twenty-first aspect or the twenty-second aspect, the flexible material includes materials at which electrical conductivity is imparted to at least a portion of a urethane material of a structure that is fiber-like or mesh-like or a structure in which a plurality of minute air bubbles are scattered at an interior thereof.

In a twenty-fourth aspect, in the estimating device of any one of the twenty-first aspect through the twenty-third aspect,
the flexible material is disposed at a periphery of a skeleton of a torso portion of the robot, and is formed of a material whose hardness becomes harder as the flexible material approaches the skeleton of the torso portion, or is formed by a plurality of materials of different hardnesses being layered such that the hardnesses become harder as the flexible material approaches the skeleton of the torso portion.

In a twenty-fifth aspect, in the estimating device of any one of the twenty-first aspect through the twenty-fourth aspect,
the flexible material is disposed at a plurality of different regions of a torso portion of the robot,
the detecting section detects electrical characteristics between a plurality of the detection points at each of the plurality of different regions, and
the learning model is trained so as to output, as the contacting object information, part-contacting object information, which expresses the type of the object that applied pressure to the flexible material or the state of the object, of a part with respect to each of the plurality of different regions.

In a twenty-sixth aspect, in the estimating device of any one of the twenty-first aspect through the twenty-fifth aspect,
the learning model includes a model generated by learning by using a network that uses the flexible material as a reservoir and is in accordance with reservoir computing using the reservoir.

A twenty-seventh aspect is a robot system comprising:
a robot having a flexible material, which is electrically conductive the electrical characteristics of the flexible material varying in accordance with changes in applied pressure, at at least a portion of a contour portion of a torso portion; and
the estimating device.

A twenty-eighth aspect is estimating method in which a computer:
acquires electrical characteristics from a detecting section that detects electrical characteristics between a plurality of predetermined detection points of a flexible material that is electrically conductive, the electrical characteristics of the flexible material varying in accordance with changes in applied pressure, and that is at a robot at which the flexible material is provided at at least a portion of a torso portion; and
inputs time-series electrical characteristics detected by the detecting section to a learning model that is trained by using, as learning data, time-series electrical characteristics at times at which pressure is applied to the flexible material by an object, and contacting object information expressing objects that applied pressure to the flexible material, such that the time-series electrical characteristics are inputs of the learning model and the learning model outputs the contacting object information, and the computer estimates contacting object information expressing an object that applied pressure to the flexible material and that corresponds to the inputted time-series electrical characteristics.

A twenty-ninth aspect is an estimating program for causing a computer to execute processings of:
acquiring electrical characteristics from a detecting section that detects electrical characteristics between a plurality of predetermined detection points of a flexible material that is electrically conductive, the electrical characteristics of the flexible material varying in accordance with changes in applied pressure, and that is at a robot at which the flexible material is provided at at least a portion of a torso portion; and
inputting time-series electrical characteristics detected by the detecting section to a learning model that is trained by using, as learning data, time-series electrical characteristics at times at which pressure is applied to the flexible material by an object, and contacting object information expressing objects that applied pressure to the flexible material, such that the time-series electrical characteristics are inputs of the learning model and the learning model outputs the contacting object information, and the computer estimates contacting object information expressing an object that applied pressure to the flexible material and that corresponds to the inputted time-series electrical characteristics.

A thirtieth aspect is a learning model generating device comprising:
a learning model generating section generating a learning model whose inputs are electrical characteristics from a detecting section that detects the electrical characteristics between a plurality of predetermined detection points of a flexible material that is electrically conductive, the electrical characteristics of the flexible material varying in accordance with changes in applied pressure, and that is at a robot at which the flexible material is provided at at least a portion of a torso portion, and the learning model outputs contacting object information expressing an object that applied pressure to the flexible material.

In accordance with the present disclosure, there is the effect that contacting object information that expresses a contacting object can be estimated by using the electrical characteristics of a flexible material that is electrically conductive, and without using a special detecting device.

A thirty-first aspect is a robot control device comprising:
a detecting section detecting electrical characteristics between a plurality of predetermined detection points of a flexible material that is electrically conductive, the electrical characteristics of the flexible material varying in accordance with changes in applied pressure, and that is at a robot at which operation states of at least some regions can be controlled and at which the flexible material is provided at at least a portion of a contour portion;
a deriving section that has a first learning model trained so as to output robot state information at a time at which time-series electrical characteristics are inputted, by using, as first learning data, time-series electrical characteristics between the plurality of detection points at times at which pressure is applied to the flexible material, and robot state information expressing robot states in which the pressure is applied to the flexible material, and a second learning model connected such that output of the first learning model is inputted thereto, and trained so as to output operation state information at a time at which the robot state information is inputted, by using, as second learning data, robot state information expressing robot states in which pressure is applied to the flexible material, and operation state information expressing operation states of at least some regions of the robot that vary in accordance with the robot state, and the deriving section derives, as an operation state corresponding to the electrical characteristics detected by the detecting section, information outputted at a time at which the time-series electrical characteristics detected by the detecting section are inputted to the first learning model; and
a control section controlling the robot on the basis of the operation state derived by the deriving section.

In a thirty-second aspect, in the robot control device of the thirty-first aspect,
the electrical characteristics are volume resistances,
the robot is structured from a plurality of parts,
the operation state includes a posture state of the robot that is formed by a combination of the plurality of parts, and
the operation state information includes driving information that drives at least one part among the plurality of parts such that the robot exhibits the posture state.

In a thirty-third aspect, in the robot control device of the thirty-first aspect or the thirty-second aspect,
the flexible material includes materials at which electrical conductivity is imparted to at least a portion of a urethane material of a structure that is at least one of fiber-like and mesh-like, or a structure in which a plurality of minute air bubbles are scattered at an interior thereof.

In a thirty-fourth aspect, in the robot control device of any one of the thirty-first aspect through the thirty-third aspect,
the flexible material is disposed at a periphery of a skeleton of the robot, and is formed of a material whose hardness becomes harder as the flexible material approaches the skeleton of the robot, or is formed by a plurality of materials of different hardnesses being layered such that the hardnesses become harder as the flexible material approaches the skeleton of the robot.

In a thirty-fifth aspect, in the robot control device of any one of the thirty-first aspect through the thirty-fourth aspect, the first learning model includes a model generated by learning by using a network that uses the flexible material as a reservoir and that is in accordance with reservoir computing using the reservoir.

A thirty-sixth aspect is a robot system comprising:
a robot at which operation states of at least some regions can be controlled and at which a flexible material, which is electrically conductive the electrical characteristics of the flexible material varying in accordance with changes in applied pressure, is provided at at least a portion of a contour portion; and
the robot control device.

A thirty-seventh aspect is a robot control method in which a computer:
acquires electrical characteristics from a detecting section that detects electrical characteristics between a plurality of predetermined detection points of a flexible material that is electrically conductive, the electrical characteristics of the flexible material varying in accordance with changes in applied pressure, and that is at a robot at which operation states of at least some regions can be controlled and at which the flexible material is provided at at least a portion of a contour portion;
by using a first learning model trained so as to output robot state information at a time at which time-series electrical characteristics are inputted, by using, as first learning data, time-series electrical characteristics between the plurality of detection points at times at which pressure is applied to the flexible material, and robot state information expressing robot states in which the pressure is applied to the flexible material, and a second learning model connected such that output of the first learning model is inputted thereto, and trained so as to output operation state information at a time at which the robot state information is inputted, by using, as second learning data, robot state information expressing robot states in which pressure is applied to the flexible material, and operation state information expressing operation states of at least some regions of the robot that vary in accordance with the robot state, derives, as an operation state corresponding to the electrical characteristics detected by the detecting section, information outputted at a time at which the time-series electrical characteristics detected by the detecting section are inputted to the first learning model; and
controls the robot on the basis of the derived operation state.

A thirty-eighth aspect is a robot control program for causing a computer to execute processings of:
acquiring electrical characteristics from a detecting section that detects electrical characteristics between a plurality of predetermined detection points of a flexible material that is electrically conductive, the electrical characteristics of the flexible material varying in accordance with changes in applied pressure, and that is at a robot at which operation states of at least some regions can be controlled and at which the flexible material is provided at at least a portion of a contour portion;
by using a first learning model trained so as to output robot state information at a time at which time-series electrical characteristics are inputted, by using, as first learning data, time-series electrical characteristics between the plurality of detection points at times at which pressure is applied to the flexible material, and robot state information expressing robot states in which the pressure is applied to the flexible material, and a second learning model connected such that output of the first learning model is inputted thereto, and trained so as to output operation state information at a time at which the robot state information is inputted, by using, as second learning data, robot state information expressing robot states in which pressure is applied to the flexible material, and operation state information expressing operation states of at least some regions of the robot that vary in accordance with the robot state, deriving, as an operation state corresponding to the electrical characteristics detected by the detecting section, information outputted at a time at which the time-series electrical characteristics detected by the detecting section are inputted to the first learning model; and
controlling the robot on the basis of the derived operation state.

In accordance with the present disclosure, there is the effect that the operation state of a robot can be controlled by using a robot state estimated from electrical characteristics of a flexible material that is electrically conductive, by a simple structure and without using a special device.

A thirty-ninth aspect of the present disclosure is an estimating device comprising:
a detecting section detecting electrical characteristics between a plurality of predetermined detection points of a flexible material, which is electrically conductive the electrical characteristics of the flexible material varying in accordance with changes in an applied stimulus, of a grasping member that has the flexible material; an estimating section that inputs time-series electrical characteristics detected by the detecting section to a learning model that is trained by using, as learning data, time-series electrical characteristics at times at which stimuli were applied to the flexible material, and slippage state information expressing slippage states of times at which an object of grasping was grasped by the grasping member that applies a stimulus to the flexible material, such that the time-series electrical characteristics are inputs of the learning model and the learning model outputs the slippage state information, and the estimating section estimates slippage state information that expresses a slippage state of a time at which the object of grasping was grasped by the grasping member, which slippage state corresponds to the inputted time-series electrical characteristics; and an outputting section outputting the slippage state information.

In a fortieth aspect, in the estimating device of the thirty-ninth aspect, the slippage state includes a state relating to a frictional force distribution of the grasping member and the object of grasping.

In a forty-first aspect, in the estimating device of the thirty-ninth aspect or the fortieth aspect, the grasping member is either of a glove worn on a hand, or a hand of a robot.

In a forty-second aspect, in the estimating device of any of the thirty-ninth through forty-first aspects,
the grasping member can adjust a grasping state of a time of grasping the object of grasping, and
the estimating device further comprises a control section controlling the grasping state on the basis of the slippage state information.

In a forty-third aspect, in the estimating device of any of the thirty-ninth through forty-second aspects, the grasping member includes materials at which electrical conductivity is imparted to at least a portion of rubber or a urethane material of a structure having a skeleton that is at least one of fiber-like and mesh-like or a structure in which a plurality of minute air bubbles are scattered at an interior thereof.

In a forty-fourth aspect, in the estimating device of any of the thirty-ninth through forty-third aspects, the learning model includes a model generated by learning by using a network that uses the flexible material as a reservoir and that is in accordance with reservoir computing using the reservoir.

A forty-fifth aspect is an estimating method in which a computer: detects electrical characteristics between a plurality of predetermined detection points of a flexible material, which is electrically conductive the electrical characteristics of the flexible material varying in accordance with changes in an applied stimulus, of a grasping member that has the flexible material; inputs detected time-series electrical characteristics to a learning model that is trained by using, as learning data, time-series electrical characteristics at times at which stimuli were applied to the flexible material, and slippage state information expressing slippage states of times at which an object of grasping was grasped by the grasping member that applies a stimulus to the flexible material, such that the time-series electrical characteristics are inputs of the learning model and the learning model outputs the slippage state information, and the computer estimates slippage state information that expresses a slippage state of a time at which the object of grasping was grasped by the grasping member, which slippage state corresponds to the inputted time-series electrical characteristics; and outputs the slippage state information.

A forty-sixth aspect is an estimating program for causing a computer to execute processings of: detecting electrical characteristics between a plurality of predetermined detection points of a flexible material, which is electrically conductive the electrical characteristics of the flexible material varying in accordance with changes in an applied stimulus, of a grasping member that has the flexible material; inputting detected time-series electrical characteristics to a learning model that is trained by using, as learning data, time-series electrical characteristics at times at which stimuli were applied to the flexible material, and slippage state information expressing slippage states of times at which an object of grasping was grasped by the grasping member that applies a stimulus to the flexible material, such that the time-series electrical characteristics are inputs of the learning model and the learning model outputs the slippage state information, and the computer estimates slippage state information that expresses a slippage state of a time at which the object of grasping was grasped by the grasping member, which slippage state corresponds to the inputted time-series electrical characteristics; and outputting the slippage state information.

A forty-seventh aspect is a learning model generating device comprising: an acquiring section acquiring electrical characteristics from a detecting section that detects the electrical characteristics between a plurality of predetermined detection points of a flexible material, which is electrically conductive the electrical characteristics of the flexible material varying in accordance with changes in an applied stimulus, of a grasping member that has the flexible material, and slippage state information expressing a slippage state of a time at which an object of grasping was grasped by the grasping member that applies a stimulus to the flexible material; and a learning model generating section that, on the basis of acquisition results of the acquiring section, generates a learning model whose inputs are time-series electrical characteristics at times at which pressure is applied to the flexible material, and that outputs slippage state information expressing a slippage state of a time at which the object of grasping was grasped by the grasping member that applies a stimulus to the flexible material.

In accordance with the present disclosure, there is the effect that the slippage state of a time at which a grasping member grasps an object of grasping can be estimated by using electrical characteristics of the grasping member that has the flexible material that is electrically conductive, without using a special detecting device.

### [Other Embodiments]

The present disclosure describes a case in which an electrically-conductive urethane is used as an example of the flexible member. However, it suffices for the flexible member to be flexible, and the flexible member is, of course, not limited to the above-described electrically-conductive urethane.

The technical scope of the present disclosure is not limited to the scopes described in the above embodiments. Various changes and improvements can be made to the above-described embodiments within a scope that does not depart from the gist, and forms to which such changes and improvements are made also are included in the technical scope of the technique of the disclosure.

Further, the above embodiments describe cases in which the estimating processing and learning processing are realized by software structures in accordance with processings using flowcharts. However, the present disclosure is not limited to this, and may be a form in which the respective processings are realized by hardware structures for example. Further, the flows of the processings of the programs described in the above embodiments also are examples, and unnecessary steps may be deleted therefrom, new steps may be added thereto, or the order of processings may be changed, within a scope that does not depart from the gist.

Further, portions of the estimating device, e.g., the neural network of the learning model or the like, may be structured by hardware circuits.

Moreover, in order to cause the processings in the above embodiments to be executed by a computer, programs, in which the above-described processings are written in code that can be processed by a computer, may be stored on a storage medium or the like such as an optical disc or the like, and distributed.

The above embodiments describe using a CPU as an example of a generic processor. However, in the above embodiments, processor means a processor the broad sense and includes generic processors (e.g., CPUs and the like), and dedicated-use processors (e.g., GPUs: Graphics Processing Units, ASICs: Application Specific Integrated Circuits, FPGAs: Field-Programmable Gate Arrays, programmable logic devices, and the like).

Further, the operations of the processor in the above-described embodiments may be carried out not only by a single processor, but by plural processors cooperating with one another, and may be carried out by plural processors, which exist at locations that are apart from one another physically, cooperating with one another.

All publications, patent applications, and technical standards mentioned in the present specification are incorporated by reference into the present specification to the same extent as if such individual publication, patent application, or technical standard was specifically and individually indicated to be incorporated by reference.

## Claims

1. An estimating device, comprising:
a detecting section detecting electrical characteristics between a plurality of predetermined detection points of a flexible material that is electrically conductive, the electrical characteristics of the flexible material varying in accordance with changes in applied pressure, and the flexible material being disposed at a robot or a grasping member that has the flexible material at at least a portion of a contour portion thereof, or at a projecting portion that is bendable from a base body of a movable body at which the flexible material is disposed so as to cover, or is disposed so as to be able to cover, at least a portion thereof; and
an estimating section that inputs time-series electrical characteristics detected by the detecting section to a learning model that is trained by using, as learning data, time-series electrical characteristics at times at which pressure is applied to the flexible material, and robot state information expressing robot states in which pressure is applied to the flexible material, or contacting object information expressing objects that apply pressure to the flexible material, or slippage state information expressing slippage states at times at which a grasping target was grasped by a grasping member that applies a stimulus to the flexible material, or applied stimulus state information expressing applied stimulus states in which pressure is applied to the flexible material, such that the time-series electrical characteristics are inputs of the learning model and the learning model outputs the robot state information or the contacting object information or the slippage state information or the applied stimulus state information, and the estimating section estimates robot state information expressing a robot state corresponding to input time-series electrical characteristics, or contacting object information expressing an object that has applied pressure to the flexible material, or slippage state information that expresses a slippage state at a time at which the grasping target was grasped by the grasping member and corresponding to the input time-series electrical characteristics, or applied stimulus state information expressing an applied stimulus state corresponding to the input time-series electrical characteristics.

2. The estimating device of Claim 1, wherein:
the electrical characteristics are volume resistances,
the robot state includes an urged state that includes contact by a person with respect to the robot, and
the learning model is trained so as to output, as the robot state information, information that expresses an urged state of a person corresponding to the detected electrical characteristics.

3. The estimating device of Claim 1 or Claim 2, wherein the flexible material includes materials at which electrical conductivity is imparted to at least a portion of a urethane material of a structure that is at least one of fiber-like or mesh-like, or a structure in which a plurality of minute air bubbles are scattered at an interior thereof.

4. The estimating device of any one of Claim 1 through Claim 3, wherein the flexible material is disposed at a periphery of a skeleton of the robot, and is formed of a material whose hardness increases as the flexible material approaches the skeleton of the robot, or is formed by a plurality of materials of different hardnesses being layered such that the respective hardnesses increase as the flexible material approaches the skeleton of the robot.

5. The estimating device of any one of Claim 1 through Claim 4, wherein:
the flexible material is disposed at a plurality of different regions of the robot,
the detecting section detects electrical characteristics between a plurality of the detection points at each of the plurality of different regions, and
the learning model is trained so as to output, as the robot state information, parts state information expressing a parts state for each of the plurality of different regions.

6. The estimating device of any one of Claim 1 through Claim 5, wherein the learning model includes a model generated by learning by using a network that uses the flexible material as a reservoir and that is configured by reservoir computing using the reservoir.

7. The estimating device of Claim 1, wherein:
the electrical characteristics are volume resistances,
the movable body is a robot whose torso portion is the base body and at which at least one of a hand portion or a leg portion that is connected to the torso portion is the projecting portion, and
the flexible material is disposed at a periphery of a skeleton of the at least one of the hand portion or the leg portion of the robot.

8. The estimating device of Claim 7, wherein the flexible material is disposed at an external member that can be attached to and removed from an outer side of the projecting portion.

9. The estimating device of Claim 7 or Claim 8, wherein the applied stimulus state includes at least one of a state expressing a surface shape, a state expressing a surface property, a state expressing weight or a state expressing hardness, of at least one of a human body or an object.

10. The estimating device of any one of Claim 7 through Claim 9, wherein the flexible material is formed of a material whose hardness increases from a surface toward an interior of the projecting portion, or is formed by a plurality of materials of different hardnesses being layered such that the respective hardnesses increase from the surface toward the interior of the projecting portion.

11. The estimating device of Claim 1, wherein:
the electrical characteristics are volume resistances,
the contacting object information includes a type of an object that has applied pressure to the flexible material or a state of the object, and
the learning model is trained so as to output, as the contacting object information, information expressing the type of the object that applied pressure to the flexible material or the state of the object, corresponding to the detected electrical characteristics.

12. The estimating device of Claim 11, wherein the flexible material is disposed at a periphery of a skeleton of a torso portion of the robot, and is formed of a material whose hardness increases as the flexible material approaches the skeleton of the torso portion, or is formed by a plurality of materials of different hardnesses being layered such that the respective hardnesses increase as the flexible material approaches the skeleton of the torso portion.

13. The estimating device of Claim 11 or Claim 12, wherein:
the flexible material is disposed at a plurality of different regions of a torso portion of the robot,
the detecting section detects electrical characteristics between a plurality of the detection points at each of the plurality of different regions, and
the learning model is trained so as to output, as the contacting object information, part-contacting object information, which expresses the type of the object that applied pressure to the flexible material or the state of the object, of a part with respect to each of the plurality of different regions.

14. The estimating device of Claim 1, wherein:
the estimating section includes a deriving section that has, as the learning model, a first learning model trained so as to output robot state information at a time at which time-series electrical characteristics are input, by using, as first learning data, time-series electrical characteristics between the plurality of detection points at times at which pressure is applied to the flexible material, and robot state information expressing robot states in which the pressure is applied to the flexible material, and a second learning model connected such that output of the first learning model is input thereto, and trained so as to output operation state information at a time at which robot state information is input, by using, as second learning data, robot state information expressing robot states in which pressure is applied to the flexible material, and operation state information expressing operation states of at least some regions of the robot that vary in accordance with the robot state, and the deriving section derives, as an operation state corresponding to the electrical characteristics detected by the detecting section, information output at the time at which the time-series electrical characteristics detected by the detecting section were input to the first learning model, and
the estimating device further comprises a control section that controls the robot on the basis of the operation state derived by the deriving section.

15. The estimating device of Claim 14, wherein:
the electrical characteristics are volume resistances,
the robot is structured from a plurality of parts,
the operation state includes a posture state of the robot that is formed by a combination of the plurality of parts, and
the operation state information includes driving information that drives at least one part among the plurality of parts such that the robot assumes the posture state.

16. The estimating device of Claim 1, wherein the slippage state includes a state relating to a frictional force distribution of the grasping member and the grasping target.

17. The estimating device of Claim 16, wherein the grasping member is either of a glove worn on a hand, or a hand of the robot.

18. The estimating device of Claim 16 or Claim 17, wherein:
the grasping member can adjust a grasping state of a time of grasping the grasping target, and
the estimating device further comprises a control section that controls the grasping state on the basis of the slippage state information.

19. An estimating method, according to which a computer:
acquires electrical characteristics from a detecting section that detects electrical characteristics between a plurality of predetermined detection points of a flexible material that is electrically conductive, the electrical characteristics of the flexible material varying in accordance with changes in applied pressure, and the flexible material being disposed at a robot or a grasping member that has the flexible material at at least a portion of a contour portion thereof, or is at a projecting portion that is bendable from a base body of a movable body at which the flexible material is disposed so as to cover, or is disposed so as to be able to cover, at least a portion thereof; and
inputs time-series electrical characteristics detected by the detecting section to a learning model that is trained by using, as learning data, time-series electrical characteristics at times at which pressure is applied to the flexible material, and robot state information expressing robot states in which pressure is applied to the flexible material, or contacting object information expressing objects that apply pressure to the flexible material, or slippage state information expressing slippage states at times at which a grasping target was grasped by a grasping member that applies a stimulus to the flexible material, or applied stimulus state information expressing applied stimulus states in which pressure is applied to the flexible material, such that the time-series electrical characteristics are inputs of the learning model and the learning model outputs the robot state information or the contacting object information or the slippage state information or the applied stimulus state information, and estimates robot state information expressing a robot state corresponding to input time-series electrical characteristics, or contacting object information expressing an object that has applied pressure to the flexible material, or slippage state information that expresses a slippage state at a time at which the grasping target was grasped by the grasping member and corresponding to the input time-series electrical characteristics, or applied stimulus state information expressing an applied stimulus state corresponding to the input time-series electrical characteristics.

20. An estimating program for causing a computer to execute processings of:
acquiring electrical characteristics from a detecting section that detects electrical characteristics between a plurality of predetermined detection points of a flexible material that is electrically conductive, the electrical characteristics of the flexible material varying in accordance with changes in applied pressure, and the flexible material being disposed at a robot or a grasping member that has the flexible material at at least a portion of a contour portion thereof, or is at a projecting portion that is bendable from a base body of a movable body at which the flexible material is disposed so as to cover, or is disposed so as to be able to cover, at least a portion thereof; and
inputting time-series electrical characteristics detected by the detecting section to a learning model that is trained by using, as learning data, time-series electrical characteristics at times at which pressure is applied to the flexible material, and robot state information expressing robot states in which pressure is applied to the flexible material, or contacting object information expressing objects that apply pressure to the flexible material, or slippage state information expressing slippage states at times at which a grasping target was grasped by a grasping member that applies a stimulus to the flexible material, or applied stimulus state information expressing applied stimulus states in which pressure is applied to the flexible material, such that the time-series electrical characteristics are inputs of the learning model and the learning model outputs the robot state information or the contacting object information or the slippage state information or the applied stimulus state information, and the computer estimates robot state information expressing a robot state corresponding to input time-series electrical characteristics, or contacting object information expressing an object that has applied pressure to the flexible material, or slippage state information that expresses a slippage state at a time at which the grasping target was grasped by the grasping member and corresponding to the input time-series electrical characteristics, or applied stimulus state information expressing an applied stimulus state corresponding to the input time-series electrical characteristics.
